(19) Europäisches Patentamt
European Patent Office
Office européen des brevets

(11) EP 1 989 400 B2

(12) # NEW EUROPEAN PATENT SPECIFICATION
After opposition procedure

(45) Date of publication and mention of the opposition decision:
**28.06.2023 Bulletin 2023/26**

(45) Mention of the grant of the patent:
**05.04.2017 Bulletin 2017/14**

(21) Application number: **07712790.0**

(22) Date of filing: **27.02.2007**

(51) International Patent Classification (IPC):
***F01D 15/00*** *(2006.01)* ***F01D 15/04*** *(2006.01)*
***F02C 1/05*** *(2006.01)* ***F02C 6/14*** *(2006.01)*

(52) Cooperative Patent Classification (CPC):
**F01D 15/005; F01D 15/04; F01K 3/00; F01K 13/00; F01K 15/04; F02C 1/05; F02C 6/14; F03D 9/17; F25J 1/0012; F25J 1/004; F25J 1/0045; F25J 1/0221; F25J 1/0228; F25J 1/0234; F25J 1/0242;** (Cont.)

(86) International application number:
**PCT/GB2007/000667**

(87) International publication number:
**WO 2007/096656 (30.08.2007 Gazette 2007/35)**

(54) **A METHOD OF STORING ENERGY AND A CRYOGENIC ENERGY STORAGE SYSTEM**

VERFAHREN ZUM SPEICHERN VON ENERGIE UND SYSTEM ZUM SPEICHERN VON KRYOGENER ENERGIE

PROCÉDÉ DE STOCKAGE D'ÉNERGIE ET SYSTÈME DE STOCKAGE D'ÉNERGIE CRYOGÉNIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.02.2006 GB 0603895**
**05.05.2006 GB 0608959**
**03.11.2006 GB 0621972**

(43) Date of publication of application:
**12.11.2008 Bulletin 2008/46**

(73) Proprietor: **Highview Enterprises Limited**
**London, WC2H 0HF (GB)**

(72) Inventors:
- **CHEN, Haisheng**
  **Beijing 100080 (CN)**
- **DING, Yulong**
  **Harrogate HG2 9BE (GB)**
- **PETERS, Toby**
  **East Sussex TN33 9NZ (GB)**
- **BERGER, Ferdinand**
  **East Sussex TN33 9BH (GB)**

(74) Representative: **Carpmaels & Ransford LLP**
**One Southampton Row**
**London WC1B 5HA (GB)**

(56) References cited:
**FR-A- 2 489 411**
**JP-A- 2003 254 086**
**US-A- 3 830 326**
**US-A- 4 455 834**
**US-A- 5 272 879**
**US-A1- 2005 126 176**

- **DATABASE WPI Week 199252 Derwent Publications Ltd., London, GB; AN 1992-431396 XP002436877 & SU 1 710 824 A1 (UNIV DNEPR) 7 February 1992 (1992-02-07)**

EP 1 989 400 B2

(52) Cooperative Patent Classification (CPC): (Cont.)
**F25J 1/0251; F25J 1/0281; F25J 3/04018; F25J 3/04078; F25J 3/04115; F25J 3/04169; F25J 3/04224; F25J 3/04496; F25J 3/04533; F25J 3/04593; F25J 3/04612; F25J 3/04618; F25J 3/04836;** F05B 2210/12; F05D 2210/12; F25J 2205/62; F25J 2210/40; F25J 2210/42; F25J 2210/62; F25J 2215/40; F25J 2230/06; F25J 2230/20; F25J 2230/30; F25J 2235/02; F25J 2240/10; F25J 2240/90; F25J 2245/40; F25J 2260/20; Y02E 10/72; Y02E 60/16; Y02E 70/30; Y02T 50/60

## Description

### FIELD OF THE INVENTION

The present invention concerns systems for storing energy and using the stored energy to generate electrical energy or.drive a propeller.

### BACKGROUND TO THE INVENTION

Electrical energy storage systems store base-load energy during off-peak periods and use the stored energy to provide electrical power during peak periods. Such systems are essential to the power generation industries. In conventional power generation systems, an energy storage system can provide substantial benefits including load following, peaking power and standby reserve. By providing spinning reserve and a dispatched load, electrical energy storage systems can increase the net efficiency of thermal power sources while reducing harmful emissions.

Electrical energy storage systems are critically important to intermittent renewable energy supply systems such as solar photovoltaic and wind turbine supply systems. This is due to the intermittent nature of the sources of renewable energy; the source is not always available over an extended period of time. Such a disadvantage has become an obstacle to the green electricity industry. Therefore, there is a need for a suitable energy storage system. Moreover, there is a need for the electricity storage system to be green.

Furthermore, electrical energy storage systems are regarded as a key technology in energy distribution networks with distributed generators, in order to compensate for any power fluctuation and to provide uninterruptible power supply during periods of voltage drop due to, for example, line faults.

Several electrical energy storage systems have been developed in the past. These include pumped hydro storage systems, Compressed Air Energy Storage systems (CAES), secondary batteries, Superconducting Magnetic Energy Storage systems (SMES), flywheels and capacitors.

Pumped hydro is the most widely used form of energy storage system. It stores hydraulic potential energy by pumping water from a lower reservoir to a higher reservoir. The amount of stored energy is proportional to the height difference between the two reservoirs and the volume of water stored. During periods of high demand for electricity, water falls from the higher reservoir to the lower reservoir through a turbine generator in a manner similar to traditional hydroelectric facilities. Pumped hydro storage is a mature technology with high efficiency, large volume, long storage period and relatively low capital cost per unit energy. However, a scarcity of available sites for two large reservoirs and one or more dams is the major drawback of pumped hydro. A long lead time for construction (typically ~10 years) and environmental issues (e.g. removing trees and vegetation from the land prior to the reservoir being flooded) are two other major drawbacks of the pumped hydro system.

Compressed Air Energy Storage (CAES) is based on conventional gas turbine technology. It uses the elastic potential energy of compressed air. Energy is stored by compressing air in an air tight space such as underground storage cavern. To extract the stored energy, compressed air is drawn from the storage vessel, heated and then expanded through a high pressure turbine, which captures some of the energy in the compressed air. The air is then mixed with fuel and combusted, with the exhaust expanded through a low pressure turbine. Both the high and low pressure turbines are connected to a generator to produce electricity. CAES has a relatively high energy density, long storage period, low capital costs and high efficiency. In comparison with pumped hydro and other currently available energy storage systems, CAES is not an independent system. It requires combustion in the gas turbine. It cannot be used in other types of power plants such as coal-fired, nuclear, wind turbine or solar photovoltaic plants. In addition, the combustion of fossil fuels leads to emission of contaminates such as nitrogen oxides and carbon oxides which render the CAES less attractive. Also, similar to pumped hydro systems, CAES suffers from a reliance on favourable geography such as caverns. CAES can only be economically feasible for power plants that have nearby rock mines, salt caverns, aquifers or depleted gas fields. In addition, a major barrier for the CAES is the relatively low pressures that can be achieved, typically 40-60 bar.

United States Patent 4, 455,834 describes a system wherein air compressed by a windmill-driven compressor is stored as liquid in an underground cryogenic insulated tank.

Pressurized air released from the tank is vaporized by a refrigeration circuit, heated and used to operate an air motor which drives an electrical generator.

United States Patent 3,830,326 discloses a self-propelled machine including a turbine engine driving fluid pumps. Power to the turbine comes from phase change and expansion of liquefied gas which serves as the energy transfer agent.

FR 2 489 411 discloses an off-peak energy storing system comprising air liquefying and vaporising units to enable energy to be stored as liquid air in low volume. A power generator drives an air compressor when its energy is not required for direct power production. The compressed air passes through a liquefier which includes heat exchangers and an expansion engine. The liquid air is stored in a reservoir with controlled inlet and outlet valves. When power is to be drawn from the reservoir the liquid air is admitted to a pump which raises its pressure and delivers it to a heat exchanger in which it is vaporized. The resulting high pressure air drives a series of turbines with reheaters between them. The turbines are coupled to a generator or other load.

Secondary battery systems are in some ways ideally suited for electrical energy storage systems. They not only provide fuel flexibility and environmental benefits, but also offer a number of important operating benefits to the electricity supply industry. They can respond very rapidly to load changes, and they can accept co-generated and/or third-party power, thus enhancing system stability. The construction of a secondary battery system is facilitated by short lead times, the lack of geographical limitations on location, and the technology's modularity. However, until recently, utility battery storage has been rare because of the low energy densities, high maintenance costs, short lifetimes, limited discharge capabilities and toxic remains associated with such systems. There are several new battery technologies now regarded as potentially competitive with pumped hydro and CAES systems including lead acid batteries, sodium sulphur batteries, zinc bromine batteries and redox flow batteries.

Superconducting Magnetic Energy Storage (SMES) is the only known method for the bulk storage of energy directly as electricity. SMES stores electrical energy as electric current passing through an inductor. The inductor, made from a superconducting material, is circular so that current can circulate indefinitely with almost no losses. SMES exhibits very high energy storage efficiency (typically ~90%) and rapid respond (<1 second) relative to other energy storage systems. The major problems confronting the implementation of SMES units are the high cost and environmental issues associated with the strong magnetic fields employed.

Flywheel systems are a form of energy storage system that have been used for thousands of years. The disadvantages of these systems are their short duration, relatively high frictional losses (windage) and low energy densities. Traditional flywheel systems with conventional metal rotors lack the necessary energy density to be considered seriously for large-scale energy storage applications. Recent advances in material science have started to change this picture. In particular, the development of low-density, high-strength, fibre-composite materials has allowed the design and construction of flywheel energy storage systems with a comparable energy density to other systems. Also, new bearing technologies are being developed, such as levitation bearings using high temperature superconductors which have the potential of reducing the windage losses that account for a large portion of the total energy loss.

Capacitors are a form of energy storage system that have been used for many years in the electronics industry. Double layer capacitors have been developed for a daily peak load in the summer of less than 1 hour with small capacities. Recent progress in the field of redox super capacitors could lead to the development of larger capacity systems. The major disadvantages of capacitors as energy storage systems are, similar to flywheels, their short duration and high energy dissipation due to self-discharge loss.

Accordingly, there is a need for an electrical energy storage system which has high energy density and potential output power, high energy efficiency, a long duration, a long lifetime, low capital costs, and offers a good commercial potential. The system should preferably be capable of being used with current power plants without requiring major modifications to the power plants except to the inputs and outputs for electricity. The system should also preferably be capable of working completely separately from the power plant. Start-up and suspension of the system should preferably be simple and reliable and the system should preferably be capable of being used with most types of existing medium to large scale power plants including coal-fired, gas turbine, nuclear, wind turbine and solar photovoltaic plants, irrespective of the geographical location of the plants. The system should also preferably not be detrimental to the environment, particularly by using the process in conjunction with non-polluting power plants (a Zero Emission System), and may even have the potential to reverse environmental impacts associated with the burning of fossil fuels.

The inventors of the present invention have attempted to provide an electrical energy storage system that addresses these requirements.

In addition, there is also a need for an improved environmentally friendly maritime power system for providing propulsion for boats. Environmental concerns arise constantly in the maritime sector with regard to both water and air pollution.

A typical power system for boats consists of main propulsion engines, propellers, donkey engines/generators, boilers, transition and control systems etc. The main propulsion engine is the most important component. Several types of main propulsion engines have been developed in the marine sector including steam turbine, diesel engines, gas turbine and nuclear engines. Among these types, diesel engines are the most widely used and occupy -90% of the total current power capacity. However, all these engines have environmental problems. Diesel engines, steam turbines and gas turbines need to combust fossil fuels. Contaminates (e.g. $CO2$, $NOx$ and particulates) are inevitably produced in combustion processes. Nuclear power systems not only produce nuclear waste pollution and provide a radiation risk but also are at least an order of magnitude more expensive than other power systems.

Consequently, a combustion free power system with a non-polluting exhaust would be greatly welcomed by the marine industry and the general public. It would also be desirable if such a marine power system could be used to generate electricity for use within the boat and to heat and/or cool the boat as necessary.

SUMMARY OF THE INVENTION

The present invention concerns the use of a cryogenic working fluid for energy storage, energy generation and propulsion.

In particular, the present invention provides a method of storing energy according to claim 1.

Also provided is a cryogenic energy storage system according to claim 11.

Preferred features of the invention are specified in the sub claims.

A cryogenic energy storage (CES) system according to an embodiment of the present invention stores a cryogen produced using electricity during off-peak hours, thus storing energy, and uses the stored cryogen to generate electricity during peak hours, thus releasing the stored energy. The cryogen is pumped, heated and then expanded in a turbine.

The turbine may be used to drive a generator and thus generate electricity.

Alternatively, or in addition, the turbine may be used to drive a propeller for example for use in a marine engine. Consequently, the CES may be used as a Cryogenic Propulsion System (CPS).

The turbine may comprise a multi-stage quasi-isothermal turbine. The turbine may include reheaters or interheaters.

The cryogen comprises liquid air.

The energy storage system may maximise the use of, and minimise the modification of, current available and mature technologies for cryogen formation, such as air liquefaction plants.

The liquid air may be produced by an air liquefaction plant and supplied to the CES at off-peak hours. In the meantime, other products such as O2, N2, Ar and CO2 in both gas and liquid states could be produced as commercial products if needed. The efficiency of the production of the cryogen may be improved by using waste cold from other sources such as from the regasification of LNG (liquid natural gas).

Modern large capacity cryogenic oxygen production plants have low running costs of -0.4 kWh/kg (1.44MJ/kg). This cost is expected to decrease further to ~0.3kWh/kg (1.08MJ/kg) by 2010-2020 ("Air separation and liquefaction: recent developments and prospects for the beginning of the new millennium", Castle W.F., International Journal of Refrigeration, 25, 158-172, 2002; "Energy analysis of cryogenic air separation", Cornelissen R.L. and Hirs G.G., "Energy Conservation and Management, 39, 1821-1826, 1998.). The CES may use a feedstock of liquid air from a cryogenic plant but will work completely separately from the cryogenic plant; this feedstock may be small depending on the 'cold energy' recycle and operation strategy. The production of liquid air may consume about 80% of the energy required to produce liquid oxygen given present production methods.

The cryogen may be expanded by heating. For example, the cryogen may be heated by thermal sources including ambient, geothermal, waste heat from power plants and/or other waste heat resources to heat the cryogenic working fluid and generate electricity during peak hours. The thermal sources may not previously have been utilised for electricity generation because the temperature difference between the working fluid and heat source would have been considered insufficient. The working fluid may be superheated by the waste heat. The waste heat may have originated from power plants or from the compression process of the input gas or even from the waste gas stream after being heated to ambient temperature by ambient air. To increase the energy density of the Working fluid, the gaseous input may be at a high pressure before expansion because the ideal work per unit mass of gaseous input for an isothermal expansion for an ideal gas, $W_T$, is given by $W_T = RT\,ln(\frac{P_{in}}{P_{out}})$ where $R$, $T$, $P_{in}$ and $P_{out}$ are the universal constant, gas temperature, and injection and exhaust pressures, respectively. Moreover, the cryogen may be pumped as a liquid to a high working pressure because little work is consumed in the pressurization of liquid. On the other hand, the gas temperature may be as high as possible before expansion. Use could be made of the waste heat contained in the flue gas from power plants for heating the cryogen. Most effectively, the ambient air could be used to heat the cryogen to approximately the environmental temperature and - the waste heat could then be used to heat the working fluid further to improve the energy efficiency of the entire system. Because the temperature difference between the cryogen and ambient temperature is high, waste heat which previously would have been considered a poor source of energy can be used as a source of energy to heat the cryogen.

By using the waste heat, the CES can be used as a net energy generator. Therefore, the CES can operate as a stand-alone energy storage plant using electricity as an energy input along with ambient temperature heat from the atmosphere. The CES can be placed either at the point of generation or the point of demand.

The 'cold' energy contained in the cryogen as the working fluid is very high-grade cryogenic energy and at least a portion is recycled. In a preferred embodiment the 'cold' energy contained in the working fluid is extracted to cool down the gaseous input (before and/or after a compressor, a fan or a blower) through heat exchangers. The cold energy may be extracted from the exhaust gas from the system. Assuming that the cryogen is heated to the ambient temperature in an isobaric process before expansion, the heat absorbed from the atmosphere by the cryogen is given by $Q = h_0 - h_1$ where $h_0$ and $h_1$ are enthalpy at ambient temperature and at liquid temperature, respectively. Considering a Carnot cycle operated between a low temperature reservoir at $T_1$ =78.9K and a high temperature reservoir at an ambient temperature of $T_0$ =300K, the amount of work is given *by* $W = Q(\frac{T_0}{T_l} - 1)$. Therefore the amount of work is proportional to the temperature difference. The above equation also implies that the work required to achieve the cold energy *Q* is equivalent to several multiples of the cold energy, which should therefore be used effectively.

The input air is compressed before passing through the heat exchangers. Therefore, the compressor is positioned before the heat exchanger. If the cold air is to be used for air-conditioning or cooling of food and other products, then it is preferable for compression to be realised by a blower (low pressure) located before the heat exchangers. Such a compressor could be a stand-alone compressor attached to the CES if the liquifaction plant is remote to the CES. Alternatively, if the CES is adjacent to the liquefaction plant, then the compressor of the liquefaction plant could be used.

The cold cryogen is used to cool the gaseous input. The cooled gaseous input can then be liquefied to cryogen inside the CES.

In addition, or alternatively, the cold energy may be used to provide cooled air for refrigeration or air conditioning purposes. For example, in a maritime power system, the energy storage system can be used to drive a turbine to drive a propeller as well as to provide cooled air for air conditioning and/or refrigeration purposes.

In addition, waste heat from the system could be used to provide heat to the immediate environment, e.g. to provide heating and/or hot water in a boat.

The present invention may make simultaneous use of 'cold' energy and 'waste' heat. By recovering the 'cold' energy from the expansion of the stored cryogen and using it to enhance the production of more cryogen whilst the system is operating in electricity generation mode, the efficiency of the system as a whole is increased. Cold energy is as useful in this system as hot energy. In addition the CES uses energy in the ambient air (heat) or water to heat the cryogen to close to the ambient temperature, followed by further heating with waste heat from, for example, flue gas and steam venting to the environment from a power generation plant. Also, heat released from the compression of gaseous input can also be recovered and used to heat the cryogen. The heat applied to the cryogen causes it to expand and this drives the cryogen.

As heat losses and hydraulic pressure drops always occur, the pressure of the gaseous input may be increased either before or after the one or more heat exchanger, for example at the inlet, using, for example, a blower or a compressor. The compression process could be adiabatic or isothermal. Assuming the ideal behaviour of air, the work $W_T = RT\ln(\frac{P_1}{P_0})$ required for the isothermal process is given by whereas that for the adiabatic process, $W_Q$ is given by

$$W_Q = h_1 - h_0 = \frac{k}{k-1}RT_0[(\frac{P_1}{P_0})^{\frac{(k-1)}{k}} - 1)]$$

where $k, P_1, P_0$ are the specific heat ratio (=1.4 for air), and the outlet and inlet pressures of the compressor or blower, respectively. Therefore, the required work increases with increasing outlet pressure $P_1$. Therefore, $P_1$ should be kept as low as possible to save compression work.

Waste heat from the compressor could be used to provide heat to the immediate environment, for example, to provide heating and/or hot water in, for example, a boat.

In a preferred embodiment the cryogen production plant may be integrated with the energy storage system. Alternatively, the cryogen production plant may be remote from the energy storage system and the cryogen could be transported between the two plants.

A small amount of cryogen may be needed to top up the system after each cycle.

When a non-polluting source of energy is used to power the system, the system is environmentally benign with a potential to reverse environmental contamination by separating environmentally detrimental gases, such as $CO_2$ and other contaminants, associated with the burning of fossil fuels from the gaseous input.

The system of the present invention does not involve any combustion process so it will not cause any emissions. The only working fluid is the cryogen. The effect on the environment is also minimised because less $CO_2$ and other environmentally detrimental gas components such as $NO_x$ are produced or used.

The CES system can be used for storing energy produced from most existing power generation plants.

When the CES is configured as a CPS, the system can be used as a propulsion device instead of in a static energy storage or generation system. The CPS could therefore be used in a boat engine. The CES could be configured to drive both a propeller and a generator so that the power system could be used to both provide propulsion and electricity for a boat.

In addition, the CPS could be further configured to provide heat for heating a boat and/or its contents. The CPS could also be further configured to provide cold for refrigeration purposes on board the boat, or for air conditioning of the boat.

BRIEF DESCRIPTION OF THE DRAWING

The present invention will now be described in more detail with reference to the following figures in which:

Figure 1 shows a schematic diagram of an energy storage system according to the present invention;
Figure 2 shows a schematic diagram of a cryogenic air separation and liquefaction plant;
Figure 3 shows a schematic diagram of a CES according to the present invention;
Figure 4 shows a schematic diagram of a CPS according to the present invention;
Figure 5 shows an ideal T-S diagram of a CES according to the present invention for an ambient pressure case;
Figure 6 shows a practical T-S diagram of a CES according to the present invention for an ambient pressure case;
Figure 7 shows a practical T-S diagram of a CES with superheating according to the present invention for an ambient pressure case;
Figure 8 shows a T-S diagram of a CES according to the present invention for a low pressure ratio case;
Figure 9 shows a T-S diagram of a CES according to the present invention for a high pressure ratio case;
Figure 10a shows a thermodynamic cycle for a CPS according to the present invention; .
Figure 10b shows a thermodynamic cycle for a CPS according to the present invention when the pressure of the input air 1 exceeds ~38 bar.
Figure 11 shows four efficiencies of the thermodynamics cycles associated with a CES according to the present invention when the input air pressure, $P_1$, is 0.1 MPa;
Figure 12 shows four efficiencies of the thermodynamics cycles associated with a CES according to the present invention when the input air pressure, $P_1$, is 0.2MPa;
Figure 13 shows four efficiencies of the thermodynamics cycles associated with a CES according to the present invention when the input air pressure, $P_1$, is 0.4MPa;
Figure 14 shows four efficiencies of the thermodynamics cycles associated with a CES according to the present invention when the input air pressure, $P_1$, is 1.0MPa;
Figure 15 shows four efficiencies of the thermodynamics cycles associated with a CES according to the present invention when the input air pressure, $P_1$, is 2.0MPa;
Figure 16 shows four efficiencies of the thermodynamics cycles associated with a CES according to the present invention when the input air pressure, $P_1$, is 4.0MPa;
Figure 17 shows four efficiencies of the thermodynamics cycles associated with a CES according to the present invention when the input air pressure, $P_1$, is 10MPa;
Figure 18 shows four efficiencies of the thermodynamics cycles associated with a CES according to the present invention when the input air pressure, $P_1$, is 20MPa;
Figure 19 shows the actual efficiencies of a CES according to the present invention without superheating when the pressure of the working fluid is 20MPa;
Figure 20 shows the actual efficiencies of a CES according to the present invention with superheating when the pressure of the working fluid is 20MPa;
Figure 21 shows efficiencies of a CES according to the present invention at different turbine efficiencies when no waste heat is used;
Figure 22 shows efficiencies of a CES according to the present invention at different turbine efficiencies when waste heat is used;
Figure 23 shows efficiencies of a CES according to the present invention at different compressor efficiencies when no waste heat is used;
Figure 24 shows efficiencies of a CES according to the present invention at different compressor efficiencies when waste heat is used;
Figure 25 shows efficiencies of a CES according to the present invention at different pump efficiencies when no waste heat is used;
Figure 26 shows efficiencies of a CES according to the present invention at different pump efficiencies when waste heat is used;
Figure 27 shows efficiencies of a CES according to the present invention at different energy consumptions of cryogen when no waste heat is used;
Figure 28 shows efficiencies of a CES according to the present invention at different energy consumptions of cryogen when waste heat is used;
Figure 29 shows efficiencies of a CPS according to the present invention as a function of the pressure of input air 1;
Figure 30 shows efficiencies of a CPS according to the present invention as a function of the ambient temperature;
Figure 31 shows efficiencies of a CPS according to the present invention as a function of the efficiency of the turbine;

Figure 32 shows efficiencies of a CPS according to the present invention as a function of the efficiency of the compressor;

Figure 33 shows efficiencies of a CPS according to the present invention as a function of the efficiency of the pump;

Figure 34 shows efficiencies of a CPS according to the present invention as a function of the polytropic coefficients of the compressor;

Figure 35 shows efficiencies of a CPS according to the present invention as a function of the isothermicity of expansion;

Figure 36 shows efficiencies of a CES according to the present invention as a function of temperature differences between hot and cold fluids in the heat exchanger when no waste heat is used;

Figure 37 shows efficiencies of a CES according to the present invention as a function of temperature differences between hot and cold fluids in the heat exchanger when waste heat is used;

Figure 38 shows efficiencies of a CES according to the present invention as a function of the temperature of the waste heat used;

Figure 39 shows efficiencies of a CES according to the present invention as a function of the ambient temperature;

Figure 40 shows efficiencies of a CPS according to the present invention as a function of the temperature difference between hot and cold fluids in a heat exchanger;

Figure 41 shows efficiencies of a CPS according to the present invention as a function of time;

Figure 42 shows an exemplary small lab scale CES system according to the present invention;

Figure 43 shows a T-S diagram of the CES experimental system of figure 42;

Figure 44 shows the work output of a turbine for use in the CES of figure 42 as a function of the number of stages;

Figure 45 shows the expansion ratio of each stage of a turbine for use in the CES of figure 42 as a function of the number of stages;

Figure 46 shows a suitable cryogenic tank for use with the CES of figure 42;

Figure 47 shows a suitable pump for use with the CES of figure 42;

Figure 48 shows a suitable turbine for use with the CES of figure 42;

Figure 49 shows the characteristics of the output power and the output duration of a number of energy storage systems;

Figure 50 shows the relationship between the efficiency and the cyclic period for a number of energy storage systems;

Figure 51 shows the energy storage densities of a number of different energy storage systems; and

Figure 52 shows the relationship between the output power per capital cost and the storage energy capacity per unit capital cost for a number of different energy storage systems.

## DETAILED DESCRIPTION OF THE INTENTION

A conceptual design of the energy storage system of the present invention is shown in figure 1. The whole system is shown within dotted box 100. System 100 consists of two major parts: an air liquefaction part 200, and a Cryogenic Energy Storage unit (CES) 300. In off-peak hours, surplus electricity is fed to the air liquefaction plant 200 to produce liquid air, which is then used in peak hours by the CES 300 to generate electricity. The power plant 400 and the whole energy storage system 100 only have to exchange electricity, so no modification of the power plant 400 is needed thus ensuring maximum flexibility. At the same time, any available waste heat 410 from the flue gas of the power plant 400 can be used by the CES 300 to heat the working fluid.

Within the energy storage system 100, there are two major air streams. One stream 110 feeds air to the air liquefaction plant 200 to be liquefied and stored as liquid air in a cryogen tank. During peak time the liquid air is pumped, heated and then expanded in the CES 300 to generate electricity. Another air steam 120 is input air from the atmosphere. Input air 120 is fed to the CES 300 to supply heat for expansion of the working liquid air and to extract the 'cold' energy from the working liquid air. The cooled input air 130 can be directed to the air liquefaction plant 200 as a feedstock or be throttled to produce liquid air within the CES 300 to reduce the amount of cryogen required from the air liquefaction plant 200. At the same time, the air liquefaction plant 200 can produce other products 210 such as $N_2$, $O_2$, $CO_2$, Ar etc if needed.

The cryogenic air liquefaction system 200 is a mature technology and many types of cryogenic air liquefaction systems are readily available "off-the-shelf'. Figure 2 shows a schematic diagram of a typical air liquefaction plant. A liquefaction plant consists of 5 major units: an air compression unit 220, an air pre-treatment unit 230, an air cooling unit (not shown), a cooling unit (not shown), and a rectification unit (not shown) (the rectification unit is only needed if air is to be separated into different products). The air pre-treatment unit 230 is downstream of the air compression 220 and cooling units and is for removing contaminants such as water, carbon dioxide, and hydrocarbons. The purified air is then further cooled down to the cryogenic temperature using heat exchange 240 and distilled. If needed, it is passed through the rectification unit to produce, for example, oxygen, nitrogen, or argon as gas or liquid products. If necessary (i.e. for air products production), the products can be warmed up with the feed air to conserve the refrigeration, with any deficit made up by expanding a small portion of pressurised air.

A CES 300 according to the present invention is shown in figure 3. The CES 300 comprises eight main components: compressor 310, turbine 320, generator 330, first heat exchanger 340, second heat exchanger 350, throttling valve 360, cryogen tank 370 and pump 380.

Liquid air 250 from a cryogenic plant is introduced into the cryogen tank 370 (in state 5 in figure 3) to be pumped by pump 380 to a certain pressure (state 7). The pressurised liquid air is heated in the second heat exchanger 350 (state 8) and then superheated in the first heat exchanger 340 (state 9). The liquid air, as a working fluid, then expands to drive the turbine 320 and generator 330. The turbine 320 may be a multi-stage gas turbine with a continuous heat supply in order to achieve a nearly isothermal expansion. After expansion and powering of the generator 330, there are three options for the working fluid (state 10):

1) to be vented directly to the atmosphere and/or used for cooling or refrigeration,
2) to be fed back into the air liquefaction plant 200 as feedstock
3) to be introduced into the power plant 400.

There are three possible benefits in adopting option 3: recovery of lower grade heat, if usable, from the exhaust of the turbine; injection into the combustion chamber of the turbine to reduce $NO_x$; and increasing the power output of the gas turbine as the injected air can act as a diluent that permits greater fuel consumption without exceeding the turbine inlet temperature limits. These benefits may be marginal but could bring the overall efficiency up if effectively used.

In the input air stream 120, air from the environment (state 0) is compressed (state 1) using compressor 310 and introduced to the first heat exchange 340 (state 2) for use in heating up the working fluid. The compressor may be a multi-step compressor to approach an adiabatic compression. Some unwanted components in the input air such as water (which is bad for the turbine due to cavitation), carbon dioxide, $NO_x$ and hydrocarbons can also be removed during this process.

The cleaned input air then goes through the second heat exchanger 350 (state 3) to extract more 'cold energy' from the working fluid.

The cooled input air is then fed to the throttling valve 360 to be transformed into liquid air (state 4) for top-up of the cryogen tank 370. A small proportion of air after the throttling is in the gas state but is still at low temperature (state 6). This part of cold energy is recovered by introducing the gas back into the second heat exchanger 350. This part of the air may be rich in oxygen so it can further be used, for example, as an oxidant in a gas turbine or a coal-gasification turbine.

The first heat exchanger 340 may be an integrated heat exchanger so that two parallel heat exchanging processes occur, namely between the input air and the working fluid; and between the working fluid and the (relatively) high temperature flue gas from the power plant. The first heat exchanger 340 may alternatively be designed as two separate heat exchangers, one for each of these two processes.

Figure 4 shows a cryogenic propulsion system (CPS) 500 according to the present invention. The CPS is based on the powered propeller type and could offer simultaneously cold, heat, propulsion and electricity. A CPS according to the present invention consists of eleven major components: a propeller 505, a turbine 510, a generator 515, a compressor 520, four heat exchangers 525, 530, 535, 540, a throttling valve 545, a cryogen tank 550 and a pump 555.

The working processes of the CPS system 500 comprise:

1) The liquid air from a cryogen plant or storage depot is fed into the cryogen tank 550.
2) After being pumped, heated and superheated, the working fluid expands to drive propeller 505 and/or generator 515 to provide propulsion and/or electricity.
3) At the same time, an air stream from the atmosphere (input air 1), is compressed and introduced to the heat exchangers 525, 530, 535, 540. The compression heat contained in input air 1 can be extracted via heat exchanger 525 to provide hot water/hot air for the boat. The input air 1 then extracts the cold from the working fluid while flowing through heat exchangers 530, 535, 540. Finally, the input air 1 is throttled to produce liquid air and stored in the cryogen tank 550.
4) Input air 2 and water at the ambient temperature are introduced into heat exchanger 525 to extract the compression heat contained in the input air 1 to produce hot air/ water as mentioned above.

Input air 3/4 under ambient conditions is introduced to extract cold energy via heat exchangers 530 and 535 to provide cool air for air conditioning (12~18 °C; from heat exchanger 530) and refrigeration (-24~-18 °C, from heat exchanger 535).

## THERMODYNAMICS CYCLE ANALYSIS - CES

Four typical cycles for the CES system of figure 3 are considered in terms of the input air pressure, two at ambient conditions, one at low pressure and one at high pressure. In the analyses, liquid air is treated as a single phase fluid and the gaseous air as an ideal gas. The energy losses in the compressor 310, turbine 320, pump 380 and throttle valve 360 are accounted for by using efficiencies $\eta$. For these thermodynamic analyses, the frictional and regional losses due to flow in pipes, valves and bends are ignored and dissipation of cryogen during storage are not considered. The ambient temperature and pressure are expressed by $T_0$ and $P_0$, respectively; the critical and boiling temperatures of liquid air are denoted as $T_{cr}$ and $T_S$, respectively.

### Ambient input air pressure case - Ideal thermodynamics cycle analysis

The ideal thermodynamics cycle is shown in figure 5. The processes and the work, heat and/or exergy of these processes are:

**1) Process 5-7, Pumping process of working fluid:** The working fluid (liquid air) from the cryogen tank is pumped from ambient pressure $P_0$ to $P_2$ adiabatically. The specific work (work per unit mass of liquid air) can be expressed by: $W_{5-7} = V_l(P_2 - P_0) = \frac{(P_2 - P_0)}{\rho_l}$ from the viewpoint of fluid mechanics. The work can also be expressed by the enthalpy difference between states 7 and 5 from the first law of thermodynamics: $W_{5-7} = h_7 - h_5$.

2) **Process 7-8, Isobaric heating of working fluid:** The working fluid is heated by the input air from $T_s$ to the ambient temperature $T_0$. The specific work done in this process is zero: $W_{7-8} = 0$. The specific heat absorbed by the working fluid from input air is: $Q_{7-8} = h_8 - h_7$. The exergy loss of the process is therefore: $Ex_{7-8} = T_0(S_8 - S_7) - (h_8 - h_7)$.

**3) Process 8-0, Isothermal expansion of the working fluid:** The working fluid at the high pressure expands in the turbine, which drives the generator to generate electricity at the ambient temperature $T_0$. The specific ideal work done by the turbine in this process is given by: $W_{8-0} = T_0(S_0 - S_8) - (h_0 - h_8)$. The specific heat absorbed during the expansion by the working fluid from the atmosphere is: $Q_{8-0} = T_0(S_0 - S_8)$.

**4) Process 0-6, Extraction of cold energy from the work fluid by the input air:** The input air is used to extract the cold energy from the work fluid isobarically. No work is needed in theory in this process: $W_{0-6} = 0$. The specific cold absorbed by the input air from the working fluid is: $Q_{0-6} = h_6 - h_0$. The exergy obtained by the input air over the process is given by: $Ex_{0-6} = T_0(S_0 - S_6) - (h_0 - h_6)$.

**5) Process 6-5, Condensation of input air:** The input air is condensed by the cold exergy released by the work fluid, which requires zero work to be done: $W_{6-5} = 0$. The specific cold energy absorbed by the input air from the work fluid is: $Q_{6-5} = h_5 - h_6 = \lambda$ where $\lambda$ is the latent heat of vaporisation. The corresponding exergy obtained by the input air is: $Ex_{6-5} = T_0(S_6 - S_5)-(h_6 - h_5)$. Assuming the mass flow of work fluid is 1, the mass flow of the input air is x, then a heat balance gives: $Q_{7-8} \geq x(Q_{0-6} + Q_{6-5})$ where $Q_{7-8} = h_8 - h_7$, $Q_{0-6} = h_6 - h_0$ and $Q_{6-5} = h_5 - h_6$. Inserting these expressions into the above equation gives: $h_8 - h_7 \geq x(h_0 - h_5)$. If $P_2$ is given, then $h_8, h_7, h_0, h_5$ can be determined and x can be expressed by: $x \leq \frac{(h_8 - h_7)}{(h_0 - h_5)}$. According to the second law of thermodynamics, exergy of a system can only decrease without input energy, that is: $Ex_{7-8} \leq x(Ex_{0-6} + Ex_{6-5})$, $x \leq \frac{Ex_{7-8}}{(Ex_{0-6} + Ex_{6-5})}$. Therefore, the consumption of liquid air for a single cycle is (1-x) and the specific net work output of the cycle should be: $W_{net} = W_{8-0} - W_{5-7}$, $= T(S_0 - S_8) - (h_0 - h_8) - (h_7 - h_5)$ and the energy density of CES can be expressed by: $E_D = \frac{W_{net}}{1-x} = \frac{T(S_0 - S_8) - (h_0 - h_8) - (h_7 - h_5)}{(1-x)}$. Assuming that the energy consummation of the liquid air produced in the air liquefaction plant is $E_C$, the energy efficiency of the whole energy storage system (Air liquefaction + CES), $E_E$, can be calculated by: $E_E = \frac{E_D}{E_C}$. Considering the efficiency of pump $\eta_P$ and the efficiency of turbine $\eta_T$, the net work $W_{net}$ should become: $W'_{net} = \eta_T W_{8-0} - \frac{1}{\eta_P} W_{5-7} = \eta_T [T(S_0 - S_8) - (h_0 - h_8)] - \frac{(h_7 - h_5)}{\eta_P}$. The energy density of CES $E_D$ be-comes: $E'_D = \frac{W'_{net}}{1-x} = \frac{\eta_T [T(S_0 - S_8) - (h_0 - h_8)] - \frac{(h_7 - h_5)}{\eta_P}}{(1-x)}$. $E_E$ becomes: $E_E = \frac{E'_D}{E_C}$. However, the temperature difference between the working liquid and the input air cannot be avoided. This will decrease the temperature $T_8$ and increase the temperature $T_6$. Therefore, the ideal thermodynamics cycles overpredict the overall efficiency of the system. This is accounted for in the following, with reference to figure 6.

## Ambient input air pressure case - Practical thermodynamics cycle analysis

In figure 6, the working liquid can only be heated to $T_{8'}$, owing to the existence of a temperature difference from the ambient temperature, and input air can only be cooled down to $T_{6'}$. Because $T_{6'}$ is higher than $T_6$ (the boiling temperature) the input air needs to be liquefied in the air liquefaction plant, and then fed back to the CES system at state 5. The work, heat and/or exergy related to the processes shown in figure 6 are given in the following:

**1) Process 5-7, Pumping process of working fluid:** This process in figure 6 is the same as that shown in figure 5. Liquid air from the cryogen tank is pressurised by the pump from ambient pressure $P_0$ to $P_2$. The specific work done on the liquid air is: $W_{5-7} = V_l(P_2 - P_0) = \frac{(P_2 - P_0)}{\rho_l}$ which is equal to the enthalpy difference between state 7 and state 5: $W_{5-7} = h_7 - h_5$.

**2) Process 7-8', Isobaric heating of working fluid:** The working fluid is heated by the input air from $T_s$ to $T_{8'}$ instead of ambient temperature $T_8$ $(=T_0)$. The specific work done in this process is zero: $W_{7-8} = 0$. The specific heat absorbed by the working fluid from input air is: $Q_{7-8'} = h_{8'} - h_7$. The exergy loss in the process is therefore: $Ex_{7-8}' = T_0(S_{8'} - S_7) - (h_{8'} - h_7)$.

3) **Process 8'-0', Isothermal expansion of the working fluid:** The working fluid at a high pressure expands in the turbine, which drives the generator isothermally to produce electricity. The specific ideal work done by the turbine in this process is: $W_{8'-0'} = T_{0'}(S_{0'}-S_{8'})-(h_{0'} -h_{8'})$. The specific heat absorbed during the expansion by the working fluid from the atmosphere is: $Q_{8'-0'} = T_{0'}(S_{0'} - S_{8'})$.

**4) Process 0-6', Extraction of cold energy from the work fluid by the input air:** The input air is used to extract the cold from the work fluid isobarically. The specific work done in this process is zero, i.e: $W_{0-6'} = 0$. The specific cold extracted from the work fluid by the input air is: $Q_{0-6'} = h_{6'} - h_0$. The energy obtained by the input air in the process is therefore given by: $Ex_{0-6'} = T_0(S_0 - S_{6'}) - (h_0 - h_{6'})$.

**5) Process 6'-6-5, Cooling and Condensation of input air:** The input air is cooled and condensed in the air liquefaction plant. Assuming the mass flowrate of working fluid is 1, the mass flowrate of input air is *x*, heat balance of the cycle gives: $Q_{7-8'} \geq xQ_{0-6'}$, where $Q_{7-8'} = h_{8'} - h_7$, $Q_{0-6'} = h_{6'} - h_0$, the above equation becomes: $h_{8'} - h_7 \geq x(h_0 - h_{6'})$. If $P_2$ and temperature differences between $T_8$ and $T_{8'}$ and $T_6$ and $T_{6'}$ are given, $h_{8'}$, $h_7$, $h_0$, $h_{6'}$ can be determined and *x* can then be expressed by: $x \leq \frac{(h_{8'} - h_7)}{(h_0 - h_{6'})}$. According to the second law of thermodynamics, the relationship for the energy is: $Ex_{7-8'} \le xEx_{0-6'}$, $x \le \frac{Ex_{7-8'}}{Ex_{0-6'}}$. If $x = \frac{(h_{8'} - h_7)}{(h_0 - h_{6'})}$, the above relation $x \le \frac{Ex_{7-8'}}{Ex_{0-6'}}$ always holds.

That implies that vaporization of 1 unit of working fluid can pre-cool $x = \frac{(h_{8'} - h_7)}{(h_0 - h_{6'})}$ unit of input air. If the efficiency of heat exchanger is high enough, then x could be greater than 1. The specific cold recycled in this practical recycle is: $Q_{7-8'} = xQ_{0-6'} = x(h_0 - h_{6'})$. As mentioned above, the cold energy in liquid air is very high-grade energy, assuming the air is an ideal gas, the above cold energy is equivalent to the ideal work given by: $W_{7-8'} = x[T_0(S_0 - S_{6'}) - (h_0 - h_{6'})]$. The specific net work output of the cycle is therefore given by: $W_{net} = W_{8'-0'} - W_{5-7} + W_{7-8'} = T_{0'}(S_{0'} - S_{8'}) - (h_{0'} - h_{8'}) - (h_7 - h_5) + x[T_0(S_0 - S_{6'}) - (h_0 - h_{6'})]$ and the energy density of CES, is:

$$E_D = \frac{W_{net}}{1} = T_{0'}(S_{0'} - S_{8'}) - (h_{0'} - h_{8'}) - (h_7 - h_5) + x[T_0(S_0 - S_{6'}) - (h_0 - h_{6'})]$$

. The energy efficiency of the whole energy storage system (air liquefaction + CES) $E_E$ can be calculated by: $E_E = \frac{E_D}{E_C}$. Considering the efficiency of pump $\eta_P$, the efficiency of turbine $\eta_T$ and the efficiency of air liquefaction $\eta_A$, the net work $W_{net}$ should be:

$$W'_{net} = \eta_T W_{8-0} - \frac{1}{\eta_P} W_{5-7} + W_{0-6'}$$

$$= \eta_T [T_{0'}(S_{0'} - S_{8'}) - (h_{0'} - h_{8'})] - \frac{(h_7 - h_5)}{\eta_P} + x[T_0(S_0 - S_{6'}) - (h_0 - h_{6'})]$$

. The energy density of CES $E_D$ becomes:

$$E'_D = \frac{W'_{net}}{1} = \eta_T [T_{0'}(S_{0'} - S_{8'}) - (h_{0'} - h_{8'})] - \frac{(h_7 - h_5)}{\eta_P} + x[T_0(S_0 - S_{6'}) - (h_0 - h_{6'})]$$

and the energy efficiency of the whole energy storage system becomes: $E_{E'} = \frac{E'_D}{E_C}$. Considering further the use of waste heat, if *To* is superheated to $T_9$ using the waste heat from the power plant, as shown in figure 7, the specific net work output of the cycle will be: $W_{net2} = W_{9-10} - W_{5-7} + W_{7-8'} = T_9(S_{10}-S_9)-(h_{10}-h_9)-(h_7-h_5)+x[T_0(S_0-S_{6'})-(h_0-h_{6'})]$ and the energy density of CES is:

$$E_{D2} = \frac{W_{net2}}{1} = T_9(S_{10} - S_9) - (h_{10} - h_9) - (h_7 - h_5) + x[T_0(S_0 - S_{6'}) - (h_0 - h_{6'})]$$

. This leads to the following energy efficiency of the entire energy storage system (air liquefaction system + CES) $E_{E2}$: $E_{E2} = \frac{E_{D2}}{E_C}$.

If $T_0 = 300K$ and neglecting the energy losses due to the turbine, pump and heat exchangers, the ideal work output for a unit mass of liquid air can be estimated on the basis of the above analysis by: $W_{net} = W_{8'-0'} - W_{5-7} + W_{7-8'} = T_{0'}(S_{0'} - S_{8'}) - (h_{0'} - h_{8'}) - (h_7 - h_5) + x[T_0(S_0 - S_{6'}) - (h_0 - h_{6'})]$ and the ideal energy = $743 kJ/kg$ density of CES is:

$$E_D = \frac{W_{net}}{1}$$
$$= T_{0'}(S_{0'} - S_{8'}) - (h_{0'} - h_{8'}) - (h_7 - h_5) + x[T_0(S_0 - S_{6'}) - (h_0 - h_{6'})]$$
$$= 180.8 kWh/m^3$$

. If $E_C$=1440 kJ/kg (0.4 kWh/kg), the ideal energy efficiency of CES is: $E_E = \frac{E_D}{E_C} = 51.6\%$. If $E_C$=1080 kJ/kg (0.3 kWh/kg), the ideal energy efficiency of CES becomes: $E_E = \frac{E_D}{E_C} = 68.8\%$. If $T_9$ is superheated to *400K* using the waste heat from the power plant, the specific ideal work is: $W_{net2} = W_{9\text{-}10} - W_{5\text{-}7} + W_{7\text{-}8'} = T_9(S_{10}-S_9)-(h_{10}-h_9)-(h_7-h_5)+x[T_0(S_0-S_{6'})-(h_0-h_{6'})]$. The ideal energy = 881*kJ/kg* density of CES is:

$$E_{D2} = \frac{W_{net2}}{1}$$
$$= T_9(S_{10}-S_9)-(h_{10}-h_9)-(h_7-h_5)+x[T_0(S_0-S_{6'})-(h_0-h_{6'})]]$$
$$= 214.3kWh/m^3$$

. If $E_C$=1440 kJ/kg (0.4kWh/kg), the ideal energy efficiency of CES is: $E_E = \frac{E_D}{E_C} = 61.2\%$. If $E_C$=1080 kJ/kg (0.3 kWh/kg), the ideal energy efficiency of CES becomes: $E_E = \frac{E_D}{E_C} = 81.6\%$. Note that the energy consumption (0.3 and 0.4 kWh/kg) used above is for separation of oxygen from air. The actual energy requirement of liquid air production is approximately 80% of this figure so the estimation of the ideal energy efficiency is conservative. On the other hand, the probable actual efficiency is approximately 80% of that achieved in the ideal work cycle so the efficiency as estimated above should be close to the actual efficiency.

From the above analyses, it can be concluded that the work output of CES increases significantly for a given amount of cryogenic fuel consumption owing to the recovery of the cold energy. The extra work from cold recycle is equivalent to $x[T_0(S_0 - S_{6'}) - (h_0 - h_{6'})]$ where x is determined by the temperature difference and energy losses of components. The specific work output and energy density of CES depends on the efficiency of the turbine $\eta_T$ and the energy consumption per unit mass of liquid air in the air liquefaction plant $E_C$. The efficiency of the pump is also a factor but not as important as $\eta_T$ and $E_C$ because the work consumed by a pump is relatively small. An increase in the temperature differences of heat exchangers will increase the liquid air consumption or decrease the efficiency of the cycle. It can be seen that the energy efficiency and energy density of the energy storage system $E_E$ is competitive to other currently available energy systems. The system of the present invention also offers the advantages of producing other products from the air liquefaction plant and using the waste heat from the power plant.

**Low input air pressure case Thermodynamics Cycle of CES analysis**

The thermodynamics cycle of a CES for a low input air pressure case is shown in figure 8. Here, the term 'low pressure' denotes pressures lower than ~3.8MPa below which air vaporisation is approximately isothermal. The cycle consists of the following processes similar to those described above:

**1) Process 0-2, Isothermal pressurization of input air:** The input air is compressed isothermally from the ambient pressure $P_0$ to $P_1$. The work done on the air by the compressor is: $W_{0\text{-}2} = T_0(S_0 - S_2) - (h_0 - h_2)$. The heat $Q_{0\text{-}2}$ of this isothermal process is: $Q_{0\text{-}2} = T_0(S_0 - S_2)$. Unfortunately, it is difficult to realize an absolute isothermal pressurization process, the actual process will be a polytropic process like *0-1.*

**2) Process 2-3'-3, Extraction of cold energy from the working fluid by input air:** The compressed input air is used to extract the cold energy from the working fluid isobarically. The work done in this process is zero: $W_{2\text{-}3} = 0$. The heat released from the input air in the process 2-3 is: $Q_{2\text{-}3'} = h_{3'} - h_2$. The heat released from input air in the process 3-3' is: $Q_{3'\text{-}3} = h_{3'} - h_3 = T_3(S_{3'} - S_3) = \lambda$. The exergy obtained from the process is therefore given by: $Ex_{2\text{-}3} = T_0(S_3 - S_2) - (h_3 - h_2)$.

**3) Process 3-4-5(-6), Throttling of compressed input air:** The compressed input air is throttled to the ambient pressure for condensation. The work done in this process is zero: $W_{3\text{-}4} = 0$. The heat released from the input air is zero: $Q_{3\text{-}4} = 0$. Considering one unit of the working fluid, the total amount of input air is x units of which a fraction y is liquefied, the amount of liquefied air at state 5 will be *xy,* and the amount of gaseous air at state 6 will be *x(1-y).* A heat balance over the process 3-4-5(-6) will be: $h_3 = yh_5 + (1 - y)h_6$.

**4) Process 5-7, Pumping process of working air:** Process 5-7 in figure 8 is the same as that in figure 5 in which liquid air from the cryogen tank is pumped from the ambient pressure $P_0$ to $P_2$. The specific work done on the liquid air is: $W_{5-7} = V_l(P_2 - P_0) = \frac{(P_2 - P_0)}{\rho_l}$. The above work can also be expressed by the enthalpy difference between state 7 and state 5: $W_{5-7} = h_7 - h_5$.

**5) Process 7-7', Isobaric heating of the working fluid to condense input air:** The working fluid is heated to condense the input air at $T_3$. The specific work done in this process is zero: $W_{7-7'} = 0$. The specific heat absorbed from the input air is: $Q_{7-7'} = h_{7'} - h_7$.

**6) Process 7'-8, Isobaric heating of the working fluid to cool the input air:** The working fluid is heated by the input air from $T_{7'}$ to $T_8$. The specific work done in this process is zero: $W_{7'-8} = 0$. The specific heat absorbed from the input air is: $Q_{7'-8} = h_8 - h_{7'}$. The exergy released in the process 7-8 is: $W_{7-8} = T_0(S_8 - S_7) - (h_8 - h_7)$.

**7) Process 8-9, Isobaric superheating of the working fluid:** The working fluid is superheated by from $T_8$ to $T_9$ in which no work is done, i.e.: $W_{8-9} = 0$ while the specific heat absorbed from the input air over this process is: $Q_{8-9} = h_9 - h_8$.

**8) Process 9-10, Isothermal expansion of the working fluid:** The working fluid with a high pressure expands in the turbine isothermally which delivers work to generate electricity. The specific ideal work done in this process is: $W_{9-10} = T_9(S_{10} - S_9) - (h_{10} - h_9)$. The specific heat absorbed by the working fluid from the ambient in the process is: $Q_{9-10} = T_9(S_{10} - S_9)$. It should be noted that the $T_9$ is higher than the ambient temperature, which requires energy from the waste heat from the power plant to ensure an isothermal expansion. If the expansion of air is an adiabatic process, the specific ideal work $W_{ad}$ will be: $W_{ad} = \frac{k}{k-1} RT_9[(\frac{P_0}{P_2})^{\frac{(k-1)}{k}} - 1]$ which means no heat absorption namely: $Q_{ad} = 0$. The actual work, however, is expected to be in the range between $W_{9-10}$ and $W_{ad}$. A factor called isothermicity $\gamma$ is often used as an index, which is defined as the ratio of the actual work to the isothermal work: $\gamma = \frac{W_{ac}}{W_{9-10}}$. Thus, the actual work $W_{ac}$ can expressed as: $W_{ac} = \gamma W_{9-10} = \gamma RT_9 \ln(\frac{P_2}{P_0})$.

**9) Process 6-6', Extraction of cold from exhaust air to condense the input air:** The exhaust air (part of input air after the throttling) is used to condense the input air isobarically. The specific work done in this process is zero: $W_{6-6'} = 0$. The specific heat absorbed from input air is: $Q_{6-6'} = h_{6'} - h_6$. The heat balance of 3'-3, 7-7' and 6-6' is therefore given by: $xQ_{3-3'} = Q_{7-7'} + x(1 - y)Q_{6-6'}$, $x(h_3 - h_{3'}) = (h_{7'} - h_7) + x(1 - y)(h_{6'} - h_6)$.

**10) Process 6'-0, Extraction of cold from exhaust air to cool the input air:** The exhaust air is used to cool down the input air isobarically. The specific work done in this process is zero: $W_{6'-0} = 0$. The specific cold absorbed from the exhaust air by the input air is: $Q_{6'-0} = h_0 - h_{6'}$. The heat balance of 2-3', 7'-8 and 6'-0 is expressed as: $xQ_{2-3'} \le Q_{7'-8} + x(1-y)Q_{6'-0}$, $x(h_2 - h_{3'}) \le (h_8 - h_{7'}) + x(1 - y)(h_0 - h_{6'})$. The exergy obtained in process 6-0 is: $Ex_{0-6} = T_0(S_0 - S_6) - (h_0 - h_6)$. From the heat and exergy balances of the cycle, $x$ and $y$ can be calculated by the following equations based on the. T-S diagram in figure 8):

$$\begin{cases} h_3 = yh_5 + (1-y)h_6 \\ x(h_3 - h_{3'}) = (h_{7'} - h_7) + x(1-y)(h_{6'} - h_6) \\ x(h_2 - h_{3'}) \le (h_8 - h_{7'}) + x(1-y)(h_0 - h_{6'}) \\ xEx_{2-3} \le Ex_{7-8} + x(1-y)Ex_{0-6} \end{cases}$$

. From the above equations, the ratio of liquefaction of the input air $y$ is: $y = \frac{(h_6 - h_4)}{(h_6 - h_5)}$. Because $(h_6 - h_5) > (h_6 - h_4) > 0$ always holds, therefore $1 > y > 0$. Similarly, $x$. can be expressed as: $x = \frac{(h_{7'} - h_7)}{(h_3 - h_{3'}) - (1-y)(h_{6'} - h_6)}$. As $(h_{7'} - h_7) > 0$, $[(h_3 - h_{3'}) - (1-y)(h_{6'} - h_6)] > 0$ always holds, $x > 0$. This means that vaporisation of one unit of the working fluid can produce $xy$ units of liquid air, and the consumption of the cycle will be $(1-xy)$. As a consequence, the specific net work output of the cycle is: $$W_{net} = W_{9-10} - W_{5-7} - xW_{0-2} = [T_9(S_{10} - S_9) - (h_{10} - h_9)] - (h_7 - h_5) - x(T_0(S_0 - S_2))$$ and the energy density of CES can be expressed by: $$E_D = \frac{W_{net}}{1-xy} = \frac{[T_9(S_{10} - S_9) - (h_{10} - h_9)] - (h_7 - h_5) - x(T_0(S_0 - S_2))}{1-xy}$$. The energy efficiency of the entire energy storage system (Air liquefaction system + CES) $E_E$ can therefore be calculated by: $E_E = \frac{E_D}{E_C}$. Considering the efficiencies of the pump $\eta_p$, the turbine $\eta_T$ and the compressor $\eta_{COM}$, the net work $W_{net}$ should be: $$W'_{net} = \eta_T W_{9-10} - \frac{W_{5-7}}{\eta_P} - \frac{W_{0-2}}{\eta_{COM}} = \eta_T[T_9(S_{10} - S_9) - (h_{10} - h_9)] - \frac{(h_7 - h_5)}{\eta_P} - \frac{x(T_0(S_0 - S_2))}{\eta_{COM}}$$, the energy density of CES $E_D$ becomes: $$E'_D = \frac{W'_{net}}{1-xy} = \frac{\eta_T[T_9(S_{10} - S_9) - (h_{10} - h_9)] - \frac{(h_7 - h_5)}{\eta_P} - \frac{x(T_0(S_0 - S_2))}{\eta_{COM}}}{1-xy}$$ and $E_E$ becomes: $$E_E = \frac{E'_D}{E_C}$$. Based on the above analysis, it can be concluded that, in comparison with cryogenic (liquid nitrogen) powered engines, the consumption of cryogenic fuel is reduced by *xy* for 1 unit of working fluid but with a penalty of work required for compression $W_{0-2} = T_0(S_0 - S_2)$. The specific work output will be improved as the penalty is less than the benefit due to the reduction in the working fluid consumption. As the work of compression is much less than the work output of the turbine, the specific work output and the energy density of CES mainly depend on the efficiency of the turbine $\eta_T$ and energy consumption for air liquefaction. This is similar to the case of using the ambient pressure. The efficiencies of pump and compressor are not key factors for improving the work output and energy density of CES. The efficiency of this cycle is expected to be lower than that of figure 6 because the process of isothermal condensation has low energy efficiency.

**High input air pressure case - Thermodynamics cycle of CES analysis**

The thermodynamic cycle of the CES for a high input air pressure case is shown in figure 9. Here, the term 'high input air pressure' means the pressure is higher than 3.8MPa above which air has no isothermal vaporisation process. The processes of this case are as follows:

**1) Process 0-2, Isothermal pressurization of input air:** The input air is compressed from ambient pressure $P_0$ to $P_1$ isothermally. The work done on the air by the compressor is: $W_{0-2} = T_0(S_0 - S_2) - (h_0 - h_2)$. The heat $Q_{0-2}$ of this isothermal process is: $Q_{0-2} = T_0(S_0 - S_2)$. Unfortunately, it is difficult to realize an absolute isothermal pressurisation process, the actual process will be *0-1*.

**2) Process 2-3, Extraction of cold energy from the working air by input air:** The compressed input air is used to extract the cold energy from the work fluid isobarically. The work done in this process is zero: $W_{2-3} = 0$. The heat released from the input air for process 2-3 is: $Q_{2-3} = h_3 - h_2$. The exergy obtained from the process is: $Ex_{2-3} = T_0(S_3 - S_2) - (h_3 - h_2)$.

**3) Process 3-4-5(-6), Throttling of compressed input air:** The compressed input air is throttled to the ambient pressure for condensation. The work done in this process is zero: $W_{3-4} = 0$. The heat released from the input air is zero: $Q_{3-4} = 0$. Similar to the low input air pressure case, considering one unit of working fluid and assuming a total of x units of input air of which a fraction y is liquefied, the amount of liquid air produced by liquefaction at state 5 is *xy,* and the amount of gaseous air at state 6 is *x(1-y).* The heat balance of 3-4-5(6) is therefore expressed as: $h_3 = yh_5 + (1-y)h_6$.

**4) Process 5-7, Pumping of working fluid:** This process is the same as that in figure 6. Liquid air from the cryogen tank is pumped from ambient pressure $P_0$ to $P_2$. The work done on a unit mass of liquid air is: $W_{5-7} = V_l(P_2 - P_0) = \frac{(P_2 - P_0)}{\rho_l}$. The work can also be expressed by enthalpy difference between the states 7 and 5: $W_{5-7} = h_7 - h_5$.

**5) Process 7-8, Isobaric heating of the working fluid to cool input air:** The working fluid is heated to condense the input air at $T_3$, and there is work involved in this process: $W_{7-8} = 0$. The specific heat absorbed from the input air is: $Q_{7-8} = h_8 - h_7$. The exergy released in the process 7-8 is therefore: $W_{7-8} = T_0(S_8 - S_7) - (h_8 - h_7)$.

**6) Process 8-9, Isobaric superheating of the working fluid:** The working fluid is superheated by the input air from $T_8$ to $T_9$ in which zero work is done, i.e. $W_{8-9} = 0$. The specific heat absorbed from input air is: $Q_{8-9} = h_9 - h_8$

**7) Process 9-10: Isothermal expansion of the working fluid:** The working fluid with a high pressure expands in the turbine and delivers work isothermally. The specific ideal work done in this process is: $W_{9-10} = T_9(S_{10} - S_9) - (h_{10} - h_9)$ while the specific heat absorbed in the process is: $Q_{9-10} = T_9(S_{10} - S_9)$. Similar to the low pressure case, $T_9$ is higher than the ambient temperature; the waste heat from the power plant is needed to keep this process isothermal. If the expansion of the working fluid is adiabatic, the specific ideal work $W_{ad}$ will be: $W_{ad} = \frac{k}{k-1} RT_9 [(\frac{P_0}{P_2})^{\frac{(k-1)}{k}} - 1]$. The specific heat absorbed in the process is: $Q_{ad} = 0$. As a result of the above analysis, the actual work should be in the range between $W_{9-10}$ and $W_{ad}$. As mentioned before, the isothermicity $\gamma$ is used to describe the non-ideality: $\gamma = \frac{W_{ac}}{W_{9-10}}$. Thus, the actual work $W_{ac}$ should be expressed as: $W_{ac} = \gamma W_{9-10} = \gamma[T_9(S_{10} - S_9) - (h_{10} - h_9)]$.

**8) Process 6-0, Extraction of cold energy from the exhaust air to cool the input air:** The exhaust air after the throttling is used to cool the input air isobarically. The specific work done in this process is zero: $W_{6-0} = 0$. The specific cold absorbed by the input air is: $Q_{6-0} = h_0 - h_6$. The heat balance over processes 2-3, 7-8 and 6-0 is expressed as: $xQ_{2-3} = Q_{7-8} + x(1 - y)Q_{6-0}$, $x(h_2 - h_3) = (h_8 - h_7) + x(1 - y)(h_0 - h_6)$. The exergy obtained in the process 6-0 is: $Ex_{0-6} = T_0(S_0 - S_6) - (h_0 - h_6)$. Based on the heat and exergy balances of processes 2-3, 3-4-5-6, 7-8, 6-0, x and y can be calculated by the following equations on the basis of a T-S diagram for the air:

$$\begin{cases} h_3 = yh_5 + (1-y)h_6 \\ x(h_2 - h_3) = (h_8 - h_7) + x(1-y)(h_0 - h_6) \\ xEx_{2-3} \le Ex_{7-8} + x(1-y)Ex_{0-6} \end{cases}$$

. From the above equations, the ratio of liquefaction of the input air y can be expressed by: $y = \frac{(h_6 - h_4)}{(h_6 - h_5)}$. Similar to the method in the low pressure case, $1 > y > 0$ always holds, and $x$ can be expressed as: $x = \frac{(h_8 - h_7)}{(h_2 - h_3) - (1-y)(h_0 - h_6)}$. As $(h_8-h_7)>0$,$[(h_2-h_3)-(1-y)(h_0-h_6)]>0$ always holds, one has $x > 0$. This means vaporisation of one unit of working fluid could produce $xy$ units of liquid air, while the consumption of this cycle is $1 - xy$, and the specific net work output of the cycle will be:

$$\begin{aligned} W_{net} &= W_{9-10} - W_{5-7} - xW_{0-2} \\ &= [T_9(S_{10} - S_9) - (h_{10} - h_9)] - (h_7 - h_5) - x(T_0(S_0 - S_2)) \end{aligned}$$

and the energy density of CES is:

$$E_D = \frac{W_{net}}{1-xy} = \frac{[T_9(S_{10}-S_9)-(h_{10}-h_9)]-(h_7-h_5)-x(T_0(S_0-S_2)}{1-xy}$$

. The energy efficiency of the entire energy storage system (Air liquefaction + CES) $E_E$ can therefore be calculated by: $E_E = \frac{E_D}{E_C}$. Considering the efficiencies of the pump $\eta_P$, the turbine $\eta_T$. and the compressor $\eta_{COM}$, one has the following net work $W_{net}$:

$$W'_{net} = \eta_T W_{9-10} - \frac{W_{5-7}}{\eta_P} - \frac{W_{0-2}}{\eta_{COM}}$$

$$= \eta_T[T_9(S_{10}-S_9)-(h_{10}-h_9)] - \frac{(h_7-h_5)}{\eta_P} - \frac{x(T_0(S_0-S_2)}{\eta_{COM}}$$

. As a result of the above, the energy density of CES $E_D$ becomes:

$$E'_D = \frac{W'_{net}}{1-xy} = \frac{\eta_T[T_9(S_{10}-S_9)-(h_{10}-h_9)] - \frac{(h_7-h_5)}{\eta_P} - \frac{x(T_0(S_0-S_2)}{\eta_{COM}}}{1-xy}$$

and $E_E$ becomes: $E_E = \frac{E'_D}{E_C}$. From the above analysis, it can be seen that, compared with the design of liquid nitrogen powered engines, the consumption of cryogenic fuel for this cycle is decreased by $xy$ but with a penalty of work by $W_{0-2} = T_0(S_0 - S_2) - (h_0 - h_2)$. However, the specific work output is improved due to the decrease of liquid fuel consumption. The work required by the compressor should be comparable with that produced by the turbine. As a consequence, the efficiency of the compressor $\eta_{COM}$ becomes a key parameter determining the overall efficiency of the CES. This cycle is more suitable for producing liquid air through the CES part of the energy storage system.

The above thermodynamics analyses on the four typical cycles show that:

1) The energy efficiency and energy density of CES are improved in comparison with liquid nitrogen powered engines owing to the cold energy recycle.
2) The overall performance of the energy storage system is determined by the efficiency of the turbine, and the specific work output and the specific energy consumption of the air liquefaction plant.
3) The temperature differences across the heat exchangers will increase the liquid air consumption thus decreasing the efficiency of the cycle.
4) The energy efficiency and density of the CES will be improved if the waste heat from the power plant is utilised.

The results also show that the efficiency of the CES is competitive to other energy storage systems. Additionally, the system can make use of the waste heat and produce air products if needed.

**THERMODYNAMICS CYCLE ANALYSIS - CPS**

Figure 10a shows thermodynamic cycles for a CPS according to the present invention. There are four air steams which are denoted by the following lines: working fluid - line 580; input air 1 - line 585; input air 2 - line 590; and input air 3 - line 595. In the analyses, liquid air is treated as a single phase fluid and the gaseous air as an ideal gas. The energy losses in the compressor 520, turbine 510, and pump 555 are accounted for by using their efficiencies $\eta$. For these thermodynamic analyses, the frictional and regional losses due to flow in pipes, valves and bends are ignored and dissipation of cryogen during storage are not considered. The ambient temperature and pressure are expressed by $T_0$ and $P_0$, respectively; the boiling temperature of liquid air is denoted as $T_S$.

**1) 1-2: Pumping process of working fluid:** The working fluid (liquid air) from the cryogen tank is pumped from the ambient pressure $P_0$ to $P_2$. The specific work done on the liquid air is: $W_{1-2} = V_l(P_2 - P_0) = \frac{(P_2 - P_0)}{\rho_l}$. The above work can also be expressed by the enthalpy difference between state 2 and state 1: $W_{1-2} = h_2 - h_1$.

**2) 2-2': Isobaric heating of working fluid to condense input air 1:** The working fluid is heated to condense the input air at $T_7$. The specific work done in this process is zero: $W_{2-2'} = 0$. The specific heat absorbed from the input air 1 is: $Q_{2-2'} = h_{2'} - h_2$.

**3) 2'-3: Isobaric heating of working fluid:** The working fluid is heated by the input air from $T_{2'}$ to $T_3$. The specific work done in this process is zero: $W_{2'-3} = 0$. The specific heat absorbed from the input air is: $Q_{2'-3} = h_3 - h_{2'}$. The exergy released in the process 2-3 is: $Ex_{2-3} = T_0(S_3-S_2)-(h_3-h_2)$.

**4) 3-0: Isothermal expansion of working fluid:** The working fluid with a high pressure expands in the turbine isothermally which delivers work to generate propulsion and electricity. The specific ideal work done in this process is: $W_{3-0} = T_0(S_0 - S_3) - (h_0 - h_3)$. The specific heat absorbed from the ambient in the process is: $Q_{3-0} = T_0(S_0 - S_3)$. If the expansion of the working fluid is adiabatic, the specific ideal work $W_{ad}$ will be: $W_{ad} = \frac{k}{k-1} RT_0[(\frac{P_0}{P_2})^{\frac{(k-1)}{k}} - 1]$ which means no heat absorption, namely: $Q_{nd} = 0$. The actual work, however, is expected to be in the range between $W_{3-0}$ and $W_{ad}$. A factor called isothermicity, $\gamma$, is often used as an index, which is defined as the ratio of the actual work to the isothermal work: $\gamma = \frac{W_{ac}}{W_{3-0}}$. Thus, the actual work $W_{ac}$ can be expressed as: $W_{ac} = \gamma W_{3-0} = \gamma[T_0(S_0 - S_3) - (h_0 - h_3)$.

**5) 0-4: Polytropic pressurisation of input air 1**: The input air 1 is compressed polytropically from the ambient pressure $P_0$ to $P_1$. The work done on the air by the compressor is: $W_{0-4} = \frac{n}{n-1} RT_0[(\frac{P_1}{P_0})^{\frac{(n-1)}{n}} - 1]$ where $n$ is the polytropic coefficient. The heat, $Q_{0-4}$, of this polytropic process is: $Q_{0-4} = c_n(T_4 - T_0)$ where $C_n$ is the polytropic heat ratio: $c_n = \frac{n-k}{n-1} C_V$. $T_4$ can be calculated by: $\frac{T_4}{T_0} = \left(\frac{P_1}{P_0}\right)^{\frac{n-1}{n}}$

**6) 4-5: Release of heat from input air 1 isobarically to input air 2:** The heat of the input air 1 is released to the input air 2 or water to produce hot air/water. The work done in this process is zero: $W_{4-5} = 0$. The heat released from the input air 1 in the process 4-5 is: $Q_{4-5} = h_4 - h_5$.

**7) 5-6-7: Cooling of input air 1 by working fluid:** The compressed input air 1 is cooled by working fluid isobarically and the cold energy inside the working fluid is extracted at the same time. The work done in this process is zero: $W_{5-7} = 0$. The heat released from the input air 1 in the process 5-6 is: $Q_{5-6} = h_5 - h_6$. The heat released from input air in the process 6-7 is: $Q_{6-7} = h_6 - h_7 = T_6(S_6 - S_7) = \lambda$. The exergy obtained from the process is therefore given by: $Ex_{5-6-7} = T_0(S_5 - S_7) - (h_5 - h_7)$.

**8) 7-8-9(-1): Throttling of compressed input air 1:** The compressed input air 1 is throttled to the ambient pressure for condensation. The work done in this process is zero: $W_{7-8} = 0$. The heat released from the input air is zero: $Q_{7-8} = 0$.

**9) 9-9': Extraction of cold from exhaust air to condense the input air:** The exhaust air (part of input air 1 after the throttling) is used to condense the input air isobarically. The specific work done in this process is zero: $W_{9-9'} = 0$. The specific heat absorbed from input air is: $Q_{9-9'} = h_{9'} - h_9$.

**10) 9'-0: Extraction of cold from exhaust air to cool the input air:** The exhaust air (part of the input air 1) is used to cool down the input air 1 isobarically. The specific work done in this process is zero: $W_{9'-0} = 0$. The specific cold absorbed from the exhaust air by the input air 1 is: $Q_{9'-0} = h_0 - h_{9'}$. The exergy obtained in process 9-0 is: $Ex_{9-0} = T_0(S_0 - S_9)-(h_0 - h_9)$.

**11)** 0-10: **Extraction of cold energy of the working fluid by input air 3 isobarically for air conditioning:** The cold of the working fluid is extracted by input air 3 for cool air production to be used for air conditioning. The work done in this process is zero: $W_{0-10} = 0$. The cold energy from the working fluid in the process 0-10 is: $Q_{0-10} = h_0 - h_{10}$.

**12) 0-10-11: Extraction of cold energy of the working fluid by input air 4 isobarically for refrigeration:** The cold of the working fluid is extracted by input air 4 for refrigeration. The work done in this process is zero: $W_{0-11} = 0$ . The cold energy from the working fluid in the process 0-11 is: $Q_{0-11} = h_0 - h_{11}$.

**13) 0-12: Extraction of heat energy of the input air 1 by input air 2/water isobarically:** The heat of the input air 1 is extracted by input air 2/water for hot air/water production. The work done in this process is zero: $W_{0-12} = 0$. The heat released from the input air 1 in the process 0-12 is: $Q_{0-12} = h_{12} - h_0$.

## Analysis of energy balance

Assuming that, for one unit of the working fluid, the total amount of input air 1 is $x1$, the total amount of input air 2 is $x_2$, the total amount of input air 3/4 is $x_3+x_4$ with $x_3$ units for air condition and $x_4$ units for refrigeration. In the one-unit of the working fluid, $a_1$ units are used for the input air 1, $a_2+ a_3$ units for cooling input air 3/4 in which $a_2$ is for $x_3$ and $a_3$ is for $x_4$. According to the first and second laws of thermodynamics, the following balances of heat and exergy can be obtained:

**1) Heat balance in process 7-8-9(-1):** Assuming that, for $a_j$ units of the working fluid, y fraction of the input air,1 is liquefied, the amount of liquefied air at State 1 will be $x_1y$, and the amount of gaseous air at State 9 will be $x_1(1-y)$. A heat balance over the process 7-8-9(-1) will be: $= yh_1 + (1 - y)h_9$. From the above equations, ratio of liquefaction of the input air $y$ is: $y = \frac{(h_9 - h_7)}{(h_9 - h_1)}$ . Because $(h_9 - h_1) > (h_9 - h_7) > 0$ always holds, therefore $1 > y > 0$.

**2) Heat balance in processes 6-7, 2-2' and 9-9': The** heat balance of 6-7, 2-2' and 9-9' can be given by: $x_1Q_{6-7} = a_1Q_{2-2'} + x_1(1 - y)Q_{9-9'}$, $x_1(h_6 - h_7) = a_1(h_{2'} - h_2) + x_1(1 - y)(h_{9'} - h_9)$. $x_1$ can be expressed as:

$$x_1 = \frac{a_1(h_{2'} - h_2)}{(h_6 - h_7) - (1 - y)(h_{9'} - h_9)}.$$

**3) Heat balance in processes 5-6,2'-3 and 9'-0:** The heat balance of 5-6, 2'-3 and 9'-0 can is expressed as: $x_1Q_{5-6} \le a_1Q_{2-3} + x_1(1 - y)Q_{9'-0}$, $x_1(h_5 - h_6) \le a_1(h_3 - h_2) + x_1(1 - y)(h_0 - h_{9'})$.

**4) Heat balance in processes 4-5 and 0-12:** The heat balance in processes 4-5 and 0-12 can be expressed by: $x_2(h_{12} - h_0) = x_1(h_5 - h_4)$. $x_2$ can be expressed as: $x_2 = \frac{x_1(h_5 - h_4)}{(h_{12} - h_0)}$ .

**5) Heat balance in processes 0-10 and 2-3:** The heat balance in processes 0-10 and 2-3 can be expressed by: $x_3(h_0 - h_{10}) = a_2(h_3 - h_2)$. $x_3$ can be expressed as: $x_3 = \frac{a_2(h_3 - h_2)}{(h_0 - h_{10})}$ .

**6) Heat balance in processes 0-11 and 2-3:** The heat balance in processes 0-11 and 2-3 can be expressed by: $x_4(h_0 - h_{11}) = a_3(h_3 - h_2)$. $x_4$ can be expressed as: $x_4 = \frac{a_3(h_3 - h_2)}{(h_0 - h_{11})}$ .

**7) Exergy balance of processes 5-7, 2-3 and 9-0:** The exergy balance of processes 5-7, 2-3 and 9-0 can be given by: $x_1Ex_{5-7} \le a_1Ex_{2-3} + (1 - y)Ex_{0-9}$, $x_1[T_0(S_5 - S_7)-(h_5 - h_7)] \le a_1[T_0(S_3 - S_2) - (h_3 - h_2)] + x_1[T_0(S_0 - S_9) - (h_0 - h_9)$.

**8) Mass conservation of process 2-3:**

$$a_1 + a_2 + a_3 = 1$$

## Analysis of the efficiency and energy density

The following analyses use the efficiency of work (electricity) defined as: $\eta_w = \frac{W_{output}}{W_{input}}$ where $W_{output}$ and $W_{input}$ are the total works converted by the input and output energies, respectively. To calculate the equivalent work of heat and cold energy, two coefficients of performance (COP), refrigeration COP (ε), and heat pump COP (ζ), are used in the conversion of heat to work. As a consequence, the specific net work output of the cycle is:

$$W_{output} = W_{3-0} - W_{1-2} - x_1 W_{0-4} + \frac{1}{\zeta} x_2 Q_{0-12} + \frac{1}{\varepsilon_1} x_3 Q_{0-10} + \frac{1}{\varepsilon_2} x_4 Q_{0-11}$$

$$= [T_0(S_0 - S_3) - (h_0 - h_3)] - (h_2 - h_1) - x_1 \frac{n}{n-1} RT_0 [(\frac{P_0}{P_1})^{\frac{(n-1)}{n}} - 1]$$

$$+ \frac{1}{\zeta} x_2 (h_{12} - h_0) + \frac{1}{\varepsilon_1} x_3 (h_0 - h_{10}) + \frac{1}{\varepsilon_2} x_4 (h_0 - h_{11})$$

. On the other hand, the productivity of liquid air by input air 1 is $x_1 y$. Therefore the consumption of the working fluid is $(1-x_1 y)$: The energy density of CPS can be expressed by: $E_D = \frac{W_{output}}{1 - x_1 y}$. It is known that the maximum specific work of liquid air, $W_R$, is: $W_R = T_0(S_0 - S_1) - (h_0 - h_1)$. The energy efficiency of the CPS, $E_E$, can therefore be calculated by: $E_E = \frac{W_{output}}{(1 - x_1 y) W_R}$. Considering the efficiencies of the pump $\eta_P$, the turbine $\eta_T$ and the compressor $\eta_{COM}$, the net work $W_{output}$ should be:

$$W'_{output} = \eta_T W_{3-0} - \frac{W_{1-2}}{\eta_P} - \frac{x_1 W_{0-4}}{\eta_{COM}} + \frac{1}{\zeta} x_2 Q_{0-12} + \frac{1}{\varepsilon_1} x_3 Q_{0-10} + \frac{1}{\varepsilon_2} x_4 Q_{0-11}$$

$$= \frac{1}{\eta_T}[T_0(S_0 - S_3) - (h_0 - h_3)] - \frac{1}{\eta_P}(h_2 - h_1) - \frac{x_1}{\eta_{COM}} \frac{n}{n-1} RT_0 [(\frac{P_0}{P_1})^{\frac{(n-1)}{n}} - 1]$$

$$+ \frac{1}{\zeta} x_2 (h_{12} - h_0) + \frac{1}{\varepsilon_1} x_3 (h_0 - h_{10}) + \frac{1}{\varepsilon_2} x_4 (h_0 - h_{11})$$

, the energy density of CPS, $E_D$, becomes: $E'_D = \frac{W'_{net}}{1 - x_1 y}$ and $E_E$ becomes: $E'_E = \frac{W'_{ouput}}{(1 - x_1 y) W_R}$.

Based on the above analysis, it can be concluded that:

1) The maximum specific work $W_R$ gives the upper limit of the energy density of CPS. If ambient temperature $T_0$=300K is used, the value is ~743kJ/kg.
2) If there is no cold energy recycling, the ideal specific work output will be $W_{output} = W_{3-0} - W_{1-2}$. The practical value $W'_{output} = \eta_T W_{3-0} - \frac{W_{1-2}}{\eta_P}$ gives the lower limit of the CPS. If ambient temperature $T_0$=300K is used and the working pressure of liquid air is 200bar, assuming the efficiencies turbine and pump are both 0.78, the specific work output would be ~326 kJ/kg.

If the pressure of the input air 1 exceeds ~38 bar, there will be no isothermal condensing process in figure 10a. The T-S diagram of this case is shown in figure 10b. The thermodynamic analysis is similar to the case in figure 10a.

## PARAMETRIC ANALYSIS - CES

A computational code has been written in the Fortran 90 environment to simulate the influences of various parameters on the performance of the CES system. The code is written for thermodynamics cycles operated between pressures above the ambient pressure and 3.8MPa (see figure 8), which is the most complicated case. The code can be used easily for high pressure cases (see figure 9) and the ambient condition (see figures 5 to 7). Six parameters have been considered including:

- Pressure of the working fluid ($P_2$),
- Pressure of the input air ($P_1$),
- Efficiency of the turbine ($\eta_T$),
- Efficiency of the compressor ($\eta_{COM}$),
- Efficiency of the pump ($\eta_P$),
- Efficiency of the air liquefaction plant ($\eta_A$).

The effects of these six parameters on four efficiencies related to the performance of the CES have been analysed. The four efficiencies that have been considered are:

- the efficiency of the ideal cycle without superheating ($E_E$),
- efficiency of the ideal cycle with superheating ($E_{Sup}$),
- efficiency of the practical cycle without superheating ($E'_E$)
- efficiency of the practical cycle with superheating ($E'_{Sup}$).

### Pressure of the working fluid ($P_2$)

The four efficiencies of the thermodynamics cycles associated with the CES are shown in figures 11 to 18 under nine different pressures of the working fluid ($P_2$ = 0.2MPa, 0.4MPa, 1.0 MPa, 2.0MPa, 4.0 MPa, 10MPa, 20MPa, 30MPa, 40MPa and 50MPa) at different input air pressures ($P_1$). The ambient temperature is assumed to be $T_0$=300K, the superheat temperature is taken as $T_9$=400K, and the efficiencies of the turbine, compressor and pump are assumed as 0.88 ($\eta_T=\eta_{COM}=\eta_P$=0.88). The temperature differences of the heat exchangers are not considered at this stage. This will be discussed below.

At $P_1$=0.1MPa (figure 11), which represents a thermodynamic cycle at the ambient pressure (figures 5 to 7), all four of the efficiencies increase with increasing pressure of the working fluid ($P_2$). However, the increase is only significant at pressures of $P_2$<~10 MPa above which the curves level off. At pressures of $P_2$> 20 MPa the efficiencies are almost constant. The maximum efficiencies are found to be $E_E$=0.507, $E_{Sup}$=0.640, $E'_E$=0.459 and $E'_{Sup}$= 0.569, respectively.

At pressures of $P_1$=0.2-2.0 MPa (figures 12 to 15), which represent thermodynamics cycles at low pressure (figure 8), the results are similar to the case at the ambient pressure (see figure 11). That is, all four of the efficiencies increase sharply with increasing $P_2$ until $P_2$ reaches 10 MPa when further increase in the efficiencies is very small. A comparison between figure 11 and figures 12 to 15 reveals that the efficiencies at $P_1$=0.2-2.0 MPa are lower than those at $P_1$=0.1MPa.

At $P_1$=4.0-20 MPa (figures 16-18), which represent thermodynamics cycles at high pressures (figure 9), the efficiencies of the practical cycle without superheating ($E'_E$) are significantly lower than those for $P_1$<*2.0*MPa owing to the consumption of compression of the input air. The efficiencies of the practical cycle with superheating ($E'_{Sup}$) are high because the heat from the superheating is treated as a waste and a large proportion of the liquid air can be produced by the CES.

From the above analysis, it can be concluded that $P_2$ should be higher than 10 MPa. However, the selection of $P_2$ may be limited by the mechanical feasibility. At present, pressurisation of air to 20 MPa is very common practice in the air separation and liquefaction plants without any engineering difficulties. According to the analysis, $P_2$=20 MPa is recommended for the CES as pressures higher than 20 MPa lead to a very marginal increase in efficiency. As a consequence, the following analyses are all based on $P_2$=20 MPa.

### Pressure of the input air ($P_1$)

The actual efficiencies of CES without and with superheating are plotted in figures 19 and 20 respectively as a function of pressure of the input air ($P_1$) for the given pressure of the working fluid ($P_2$=20 MPa). Three efficiencies of the turbine, compressor and pump ($\eta_T=\eta_P=\eta_{COM}$=0.80, 0.84, 0.88) are considered. From inspection of these figures it can be seen that the actual efficiencies increase with increasing efficiencies of the three components (turbine, compressor and pump) with and without superheating. Without superheating, the maximum efficiency occurs at the ambient pressure ($P_1$=0.1MPa) and the efficiency ($E'_E$) decreases sharply with increasing input air pressure. With superheating, the efficiency decreases sharply first with increasing input air pressure ($P_1$) between 0.1 and 0.4MPa. A further increase of $P_1$ between 0.4 and ~2 MPa leads to little change in the efficiency. However, a further increase in $P_1$ to ~4 MPa results in a large increase in the efficiency due to production of a large proportion of liquid air. A further increase in $P_1$ beyond 4 MPa leads to a decrease in the efficiency due to increasing compression work. There are two peaks in the efficiency plots with the peak values depending on the efficiency of three components (turbine, compressor and pump). For an efficiency of the components of 0.88, the best efficiency of CES occurs at $P_1$=4 MPa. For an efficiency of the components of 0.80 and 0.84, the best CES efficiency occurs at $P_1$=0.1MPa.

Therefore, if no waste heat is used by the CES system, $P_1$=0.1 MPa should be selected as the working pressure of the input air, as the efficiency is highest and there is no need for a compressor, hence reducing the capital investment and maintenance costs. As a result of this analysis, the following analyses are conducted under the two pressure conditions of $P_1$=0.1 MPa and $P_1$=4.0 MPa.

## Efficiency of turbine ($\eta_T$)

As mentioned above, two sets of conditions are considered, namely, ($P_1$=0.1MPa, $P_2$=20MPa), and ($P_1$=4.0MPa, $P_2$=20MPa). The efficiencies of the compressor and pump are taken as 0.88 ($\eta_{COM}$=$\eta_P$=0.88). The ambient temperature is assumed as $T_0$=300K, the superheat temperature is $T_9$=400K. The temperature differences across the heat exchangers are not considered. Simulations are performed with seven turbine efficiencies of 0.68, 0.72, 0.76, 0.80, 0.88, 0.92, 0.96 and 1.00 and the results are illustrated in figures 21 and 22, without and with heat recycle respectively. The efficiencies of CES for both cases increase monotonically with increasing efficiency of the turbine. However, the dependence of the efficiency of the CES is a function of $P_1$, the turbine efficiency and the use of waste heat. An increase in the efficiency of the turbine by one percent leads to an increase in the CES efficiency by 0.318% for $P_1$=0.1MPa without heat recycle, an increase of 0.690% for $P_1$=0.1MPa with heat recycle, an increase of 0.428% for $P_1$=4.0MPa without the heat recycle, and an increase of by 2.742% for $P_1$=4.0MPa with heat recycle.

The figures also show that the rate of increase in the CES efficiency at $P_1$=0.1 MPa is lower than that at $P_1$=4.0MPa, indicating that the cycle efficiency at $P_1$=4.0 MPa relies more on the efficiency of the turbine than does the cycle efficiency at $P_1$=0.1 MPa.

If there is no waste heat, the CES efficiency at $P_1$=0.1MPa is higher than that at $P_1$=4.0MPa for a turbine efficiency of from 0.68 to 1.0. This indicates that $P_1$=0.1MPa should be used for the CES operation in the absence of the waste heat recycle.

If waste heat is used, the CES efficiency at $P_1$=0.1MPa is lower than that at $P_1$=4.0MPa for a turbine efficiency over 0.80, but the reverse is seen when the turbine efficiency is lower than ~0.8. As a consequence, there is a need for optimisation.

## Efficiency of compressor ($\eta_{COM}$)

The effect of the compressor efficiency on the CES efficiency is illustrated in figures 23 and 24, without and with heat recycle respectively. Simulations are carried out for seven compressor efficiencies of 0.68, 0.72, 0.76, 0.80, 0.88, 0.92, 0.96 and 1.00 with the following conditions: $P_1$=0.1 or 4.0 MPa, $P_2$=20MPa, $T_0$=300K, $T9$=400K, and $\eta_T$=$\eta_P$=0.88. The temperature differences across the heat exchangers are not considered.

The efficiency of the CES cycle for $P_1$=0.1MPa and $P_2$=20MPa is constant as no compression of the input air is needed for $P_1$=0.1MPa. The efficiency of the CES at $P_1$=4.0MPa and $P_2$=20MPa increase monotonically with increasing efficiency of the compressor. An increase in the compressor efficiency by one percent leads to an increase in the CES efficiency by 0.717% for $P_1$=4.0MPa without heat recycle, and an increase in the CES efficiency by 1.056% for $P_1$=4.0MPa with heat recycle. This indicates that for $P_1$=4.0MPa, the efficiency of the compressor contributes significantly to the CES efficiency.

From figure 23, one can see that the efficiency of the CES at $P_1$=0.1MPa is much higher than that at $P_1$=4.0MPa when there is no waste heat recycle. If the waste heat is available, then figure 24 shows that the efficiency of the CES cycle at $P_1$=0.1MPa is lower than that at $P_1$=4.0MPa if the efficiency of the compressor is higher than 0.78, and the reverse is seen for compressor efficiencies lower than 0.78.

## Efficiency of pump ($\eta_P$)

Simulations are performed on seven pump efficiencies of 0.68, 0.72, 0.76, 0.80, 0.88, 0.92, 0.96 and 1.00 for $P_1$=0.1 or 4.0MPa, $P_2$=20MPa, $T_0$=300K, $T_9$=400K and $\eta_T$=$\eta_{COM}$=0.88. The temperature differences across the heat exchangers are not considered. The results are illustrated in figures 25 and 26, without and with heat recycle respectively, from which one can see that the efficiencies of both CES cycles increase monotonically with increasing pump efficiency. However, the increase is very small; an increase in the pump efficiency by one percent only leads to an increase in the efficiency of the CES cycle by 0.025% for $P_1$=0.1MPa without heat recycle, by 0.068% for $P_1$=0.1MPa with heat recycle, by 0.022% for $P_1$=4.0MPa without heat recycle, and by 0.072% for $P_1$=4.0MPa with heat recycle.

This indicates that the efficiency of the CES depends little on the efficiency of the pump because the work consumed by the pump is about an order of magnitude smaller than that of turbine and the compressor.

**Efficiency of air separation plant ($\eta_A$)**

Figures 27 and 28 show the efficiencies of the CES as a function of energy consumption per kilogram of liquid air produced. Six levels of energy consumption of 0.400, 0.375, 0.350, 0.325, 0.300 and 0.275 kWh/kg are considered, which correspond respectively to an efficiency of the air separation plant of $\eta_A$=0.516, 0.559, 0.602, 0.645, 0.688 and 0.731. The rationale for these levels of energy consumption is that the current energy consumption of liquid air production is ~0.4 kWh/kg, and it is expected to decrease to ~0.28-0.3 kWh/kg by 2010~2020. Other conditions are $P_1$=0.1 or 4.0MPa, $P_2$=20MPa, $T_0$=300K, $T_9$=400K and $\eta_T=\eta_P=\eta_{COM}$=0.88.

The results show that the efficiency of the CES increases monotonically with a decrease in the energy consumption of cryogen production. An increase in the efficiency of the air separation plant by one percent results in an increase in the efficiency of the CES cycle by ~0.972% for $P_1$=0.1MPa without heat recycle, an increase in the efficiency of the CES cycle by ~1.181% for $P_1$=0.1MPa with heat recycle, an increase in the efficiency of the CES cycle by 0.590% for $P_1$=4.0MPa without heat recycle, and an increase in the efficiency of the CES cycle by 1.381 % for $P_1$=4.0MPa with heat recycle.

Compared with efficiencies of the turbine, compressor and pump, the efficiency of the air liquefaction plant is a more important factor contributing significantly to the overall efficiency of the CES.

If the energy consumption of the liquid air production were reduced to ~0.28 kWh/kg, then the efficiency of the CES without waste heat recycle would be increased to ~0.670 and that with waste heat recycle to ~0.951.

Accordingly, the results of the above parametric analysis show that $P_1$=0.1 MPa and $P_2$=20.0MPa give the best performance for cases without waste heat recycle. The results also show that $P_1$=4.0 MPa and $P_2$=20.0MPa could give a better performance for cases with waste heat recycle than $P_1$=0.1 MPa and $P_2$=20.0MPa could do, depending on the efficiencies of the components of the CES. The efficiencies of the turbine ($\eta_T$), the compressor ($\eta_{COM}$), and the air separation plant ($\eta_A$) are shown to be the most important parameters in determining the overall CES efficiency, whereas the pump efficiency ($\eta_P$) has very little influence on the performance of CES.

Two parts of energy have been incorporated into the total possible energy from liquid air: a) isothermal expansion of compressed gas to ambient pressure and b) cold exergy utilisation by pre-cooling the air input for the separation and liquefaction system. For a simple idealised case ($P_1$=0.1 MPa, $P_2$=20 MPa, T=300 K), the ideal work from liquid air could be ~740 kJ/kg that includes the contribution of a) 450 kJ/kg and b) 290 kJ/kg.

For the gas expansion work (450 kJ/kg) non-isothermal expansion is inevitable. An external heat source has to be added to maintain a high isothermity. A conventional turbine may achieve energy efficiency up to 85% under optimised conditions. It is visible that similar efficiency could be achieved for the proposed turbine applications. However, due to the very high pressures ~200 bar involved, multi-stage expansion could be considered. The nearly-ambient operation temperature of the turbine also requires considerations of the sealing and lubrication issues.

For the recycling of the cold exergy (290 kJ/kg) the amount of the cold exergy that can be recycled is dependent on the a) operational pressures model, b) charging and discharging modes, and c) existence of extra cold energy storage system.

For the operational pressure models, two optimum cases have been identified: I) input air at 0.1 MPa and the working fluid at 20.0MPa for operation temperature ~ 300k (no waste heat added) and II) input air at 0.1 MPa or 4.0 MPa and working fluids at 20.0MPa for operation temperature ~400 K (with a waste heat recycle). Take the optimized case I) for example (P1=0.1Mpa, P2=20Mpa and T=300K), for an ideal compression (dS=0), the temperature of liquid air after compressing to 20 MPa is ~84 K, which is the lowest temperature that incoming air can get. The liquefaction process needs to removed ~ 230 kJ/kg (sensible heat) and another ~200 kJ/kg (latent heat) at saturation temperature, e.g. 78 K for air under 1 bar. The only work that can be saved through a heat exchanger is some of the work needed to reduce temperature from ambient to ~ 84 K (this normally involves multi-stage compression and throttling for a liquefaction factory). Approx. 50% of the energy (latent heat + some sensible heat) for air liquefaction can not be extracted by the cold energy from the heat exchanger. The extra electricity needed is ~ 0.2 kWh/kg air during discharging hours if a 0.4 kWh/kg industrial rate is assumed.

For the optimized case II) where the waste heat is utilized, the analysis will be the same as above for the incoming air at 0.1 MPa (P1=0.1MPa, P2=20MPa and T=400K), but different for the incoming air pressure at 4MPa (P1=4MPa, P2=20MPa and T=400K).

Since the saturation temperature is ~ 131K at 4Mpa, incoming air can be cooled down directly to the liquid state through a heat exchanger, which means no extra electricity is needed for manufacturing liquid air during peak hours. However this comes with the penalty of the compression work needed to bring air to 4Mpa. For a pure isothermal compression, ~ 0.328MJ/kg, ~ 0.1 kWh electricity, is needed. The temperature rise is also significant: for an adiabatic compression with compressor efficiency of 0.9, the temperature rise is ~ 620K. The temperature rise reduces to 283 K and 132K respectively for a poly constant of 1.2 and 1.1. Extra cooling facilities are requested for the compressor to achieve a nearly-isothermal compression.

The amount of cold energy recycled is also dependent on the flow rate ratio during charging and discharging periods. The cold exergy application (in the energy release process) is based on the simultaneous cooling of incoming air (in the energy storage process) in a liquefaction unit. In principle these two events do not occur at the same time. For a typical energy storage system, the duration of the energy release process is only a couple of hours in peak times. To maintain safety and extend the running time, a typical liquefaction unit will operate full load at off-peak time and continue to operate at low load at other times. For a model with 8 hrs of discharging and 16 hrs of charging, the steady flow ratio is ~ 2:1. If running at a 50% load during peak times, the flow rate ratio is increased to 4:1. For every kilogram of liquid air produced at peak times, only the sensible heat ~ 230 kJ/kg-air can be cooled down by the evaporation of liquid air for the optimized operational pressure case I). Therefore, a large amount of cold energy will not be fully utilized. The shorter the discharging ratio, the larger the amount of cold energy wasted. To fully utilize the energy, the load for liquefaction could be increased but this would risk the consumption of more electricity at peak times.

Alternatively, the cold energy could be stored. During the discharging period, part of the cold energy could be used to pre-cool the incoming air. At the same time, the extra part of the cold energy will be stored in a thermal energy storage system (TES) that will release cold during the off-peak time to pre-cool the incoming air. This could maximize the opportunities of using cold energy. The storage material may include phase change materials, cryogenic storage materials and others. The storage material is chosen based on its thermal conductivity, specific heat, thermal diffusivity, density, and kinetic behaviour etc. The rate of heat absorption and releasing is directly related to the energy efficiency especially for the phase change materials. The energy storage system may be in the form of fixed bed, suitable geological sites and others. The storage efficiency may be influenced by the properties of the storage materials, the storage temperature and pressure, and the heat transfer coefficient between gas and storage materials.

**PARAMETRIC ANALYSIS - CPS**

A computational code has been written in the Fortran 90 environment to simulate the influences of various parameters on the performance of the CPS system. The code is written for thermodynamics cycles operated between pressures above the ambient pressure and 38 bar (see figure 10a), which can also be used for the high pressure case (see figure lOb). Seven parameters have been considered including:

- Pressure of the input air 1 ($P_1$),
- Ambient temperature ($T_0$),
- Efficiency of the turbine ($\eta_T$),
- Efficiency of the compressor ($\eta_{COM}$),
- Efficiency of the pump ($\eta_P$),
- Polytropic coefficient of compression (*n*),
- Non-isothermicity of expansion in turbine.

In the simulations, the pressure of working fluid is taken as 200 bar, the temperature of hot air/water supplied by CPS as 328 K(55°C), the temperature of cold air for air condition supplied by CPS as 285 K (12°C), the temperature of cold air for food refrigeration supplied by CPS as 249 K(-24° C), the coefficient of performance (COP) of the heat pump ($\zeta$) as 3.0, the COP of cooling air for air conditioning ($\varepsilon_1$) as 5.0, and the COP of refrigeration ($\varepsilon_2$) as 3.0.

**Pressure of input air 1 ($P_1$)**

The ideal and actual efficiencies of CPS are plotted in figure 29 under 14 different pressures of the input air 1 ($P_1$=1.0bar, 2.0bar, 3.0bar, 4.0bar, 6.0bar, 8.0bar, 10bar, 12bar, 14bar, 16bar, 18bar, 20bar, 30bar, 40bar). The ambient temperature is taken as 300K, the polytropic coefficient of the compressor is taken as 1.2 and three efficiencies of the turbine, compressor and pump are considered ($\eta_T$=$\eta_P$=$\eta_{COM}$=0.88, 0.84, 0.80).

From inspection of figure 29, it can be seen that the efficiency of CPS increases with increasing efficiencies of the three components (turbine, compressor and pump). The efficiency increases first with increasing pressure of input air 1 and then decreases after reaching a peak. The maximum efficiency is found to be 0.793, 0.679, 0.646, 0.613 when $\eta_{COM}$=1 (ideal), 0.88, 0.84 and 0.80, respectively. For an ideal case, the peak efficiency of the CPS occurs at $P_1$=~14bar. The optimal pressure of input air 1 at which the peak occurs decreases with decreasing efficiency of the components,

namely, $P_1$=8bar for 0.88, ~6bar for 0.84 and 0.80.

A high pressure of the input air 1 can produce a high proportion of liquid air and therefore a further increase in the efficiency of CPS. However, a high pressure of the input air 1 also consumes more compression work. Therefore, an optimal pressure of the input air 1 should be selected for the best CPS performance. Since the optimal pressure is not significantly different for the three realistic efficiencies of 0.88, 0.84 and 0.80, the pressure of the input air 1 is selected as 8bar, and the following calculations are based on this pressure. At $P_1$=8 bar, $P_2$=200 bar, $\eta_T=\eta_P=\eta_{COM}$=0.88, the maximum energy efficiency of CPS is 67.7%, and the specific outputs of the work, heat and cold of the CPS are 401.9kJ/kg, 29.4kJ/kg, 342.8kJ/kg, respectively. It can be seen that the amount of cold produced by CPS is very large. Therefore, the CPS is particularly suitable for refrigeration boats.

## Ambient Temperature ($T_0$)

Figure 30 shows the influence of the ambient temperature on the efficiency of the CPS at $P_1$=8bar and $P_2$=200bar for five ambient temperatures of 270K, 280K, 290K, 300K and 310K with n=1.2 and $\eta_T=\eta_P=\eta_{COM}$=0.88. When the ambient temperature is 270K, 280K or 290K, it is considered unnecessary to account for cool air for air conditioning. It is apparent that the efficiency of CPS increases monotonically with increasing ambient temperature. When the ambient temperature increases from 270K to 310K, the efficiency of the CPS is increased by 14.9%. Due to the utilisation of cold energy for air conditioning at temperatures higher than 290K, there is a sharp increase in the efficiency from 290K to 300K. It is therefore concluded that the CPS performs better in locations with a high ambient temperature such as tropical regions.

## Efficiency of turbine ($\eta_T$)

Figure 31 shows the influence of the efficiency of the turbine on the overall efficiency of the CPS for seven values of $\eta_T$ = 0.68, 0.72, 0.76, 0.80, 0.88, 0.92, 0.96 and 1.00 with $\eta_{COM}=\eta_P$=0.88, n=1.2, $T_0$=300K, $P_2$=200 bar, and $P_1$=8bar. The efficiency of CPS increases almost linearly with increasing efficiency of the turbine. An increase in the efficiency of the turbine by 1% leads to an increase in the CPS efficiency by 0.738%. The efficiency of the turbine is therefore a key parameter for the CPS efficiency.

## Efficiency of Compressor ($\eta_{COM}$)

The effect of the compressor efficiency on the CPS efficiency is illustrated in figure 32. Simulations are carried out for seven compressor efficiencies of 0.68, 0.72, 0.76, 0.80, 0.88, 0.92, 0.96 and 1.00 with $P_1$=8bar, $P_2$=200bar, $T_0$=300K, $\eta_T=\eta_P$=0.88 and n=1.2. The efficiency of the CPS increases monotonically with increasing efficiency of the compressor. An increase in the compressor efficiency by 1% leads to an increase in the CPS efficiency by 0.09%. Therefore the efficiency of the compressor does not contribute significantly to the CPS efficiency. This is because the amount of work consumed by the compressor is small due to the relatively low working pressure of input air 1 compared to that of the working fluid, and the relatively low flow rate of input air 1 compared to that of the working fluid due to a considerable part of the cold energy of the working fluid being used to provide cold air for air conditioning and refrigeration.

## Efficiency of Pump ($\eta_P$)

The effect of the pump efficiency on the CPS efficiency is illustrated in figure 33. Simulations are performed on seven pump efficiencies of 0.68, 0.72, 0.76, 0.80, 0.88, 0.92, 0.96 and 1.00 for $P_1$=1bar, $P_2$=200 bar, $T_0$=300K, $\eta_T=\eta_{COM}$=0.88 and n=1.2. The efficiency of the CPS increases monotonically with increasing pump efficiency. However, the rate of increase is very small; an increase in the pump efficiency by 1% only leads to an increase in the CPS efficiency by 0.0625%. Therefore the efficiency of the CPS depends little on the efficiency of the pump.

## Polytropic coefficient of compression (n)

Simulations are performed on seven polytropic coefficients of 1.05, 1.10, 1.15, 1.20, 1.25, 1.30, and 1.35 for $P_1$=1bar, $P_2$=200 bar, $T_0$=300K, $\eta_T=\eta_{COM}=\eta_p$=0.88. The results are shown in figure 34, from which it can be seen that the efficiency of the CPS changes little with increasing polytropic coefficient. This is because the amount of work consumed by the compressor is small, and the compression heat is recycled by the input air 2.

## Isothermicity of expansion ($\gamma$)

Five values of the isothermicity of the expansion process in the turbine of 0.80, 0.85, 0.90, 0.95, 1.0 for $P_1$=1bar,

$P_2$=200 bar, $T_0$=300K, $\eta_T=\eta_{COM}=\eta_p$ =0.88 are simulated and the results are shown in figure 35. The efficiency of the CPS increases almost linearly with increasing isothermicity. An increase in the isothermicity by 1% gives an increase in the CPS efficiency by 0.72%. The isothermicity of the expansion is therefore a key parameter for the CPS efficiency.

## HEAT TRANSFER ANALYSIS - CES

The heat exchangers are critical components of the CES. Heat exchangers are widely used in the cryogenics and air liquefaction industries, which has led to establishment of a substantial technology base. In general, the following factors are considered when designing a heat exchanger:

(1) Heat transfer requirement
(2) Efficiency or temperature differences of the exchanger
(3) The dimensions of the space available
(4) The need for low heat capacity
(5) The cost
(6) The importance of pressure drop
(7) The operating pressure

In the following analysis, focus is on the assessment of heat transfer requirements, type and size of the exchangers and influences of various factors on the performance heat exchangers. The following assumptions are made:

(1) Thermodynamic equilibrium between fluid phases
(2) Even flow distribution within heat exchanger
(3) Fully developed turbulent flow
(4) Adiabatic shell wall
(5) Zero axial conduction
(6) No radiation between hot and cold fluids
(7) Constant overall heat transfer coefficient.

Considering a heat exchanger that exchanges an amount of heat, Q, between a hot and a cold fluid, the volume of the heat exchangers can be assessed by: $V=\frac{S}{\vartheta}=\frac{Q}{\vartheta q}=\frac{Q}{\vartheta \overline{U}\Delta\overline{T}}$ where *V* represents the volume of the heat exchanger, *S* is the heat transfer area, $\vartheta$ is the ratio of the compactness of heat exchangers defined as $\vartheta=\frac{S}{V}$, *q* is the heat flux, $\overline{U}$ is the overall average heat transfer coefficient, and $\Delta\overline{T}$ is the average temperature difference between the hot and cold fluids. Considering a tube-in-shell configuration, the overall heat transfer coefficient $\overline{U}$ may be obtained by: $\frac{1}{\overline{U}}=\frac{1}{U_i}+\frac{1}{U_w}+\frac{1}{U_o}$ where $U_i$ is the heat transfer coefficient between the tube wall and the tube side fluid, $U_o$ is that between the tube wall and the shell side fluid, and $U_w$ accounts for the heat conductivity across the tube wall expressed by: $U_w=\frac{\lambda}{\delta}$ with $\lambda,\delta$ respectively the wall thermal conductivity and wall thickness. There is a large amount of literature on the calculations of the heat transfer coefficients $U_i$ and $\overline{U_o}$. For a turbulent flow in a smooth cylindrical tube, the heat transfer coefficient between the tube side fluid and the tube wall is given approximately by $Nu = 0.023 Re^{0.8}Pr^{0.4}$ where *Nu* is the Nusselt number defined as $Nu=\frac{UD}{\lambda}$, Re is the Reynolds number defined as $\mathrm{Re}=\frac{\rho u D}{\mu}$, and Pr is the Prandtl number given by $\mathrm{Pr}=\frac{\nu}{\alpha}$, where ρ is the density of the fluid, D is the diameter of the tube, *v* is the fluid kinematic viscosity, $\alpha$ is the fluid thermal diffusivity and $\mu$ is the fluid dynamic viscosity. For the pressure drop of a Newtonian fluid in a smooth cylindrical tube, the frictional pressure drop can be calculated by $\Delta p=\frac{2f\rho u^2 L}{D}$ where *f* is the friction factor, *u* is the flow velocity, *L* is the length of the tube. For a turbulent flow in tubes, the Blasius equation is generally used for estimating $f$ in a wide range of Reynolds number: $f = \frac{0.079}{\mathrm{Re}^{0.25}}$. The flow in the heat exchangers in the CES of the present invention is likely to be in the two-phase region for which a full analysis of the pressure drop requires a 3-dimensional description of the flow and heat transfer involving phase changes. An engineering approach is to calculate first the pressure with a homogeneous model and then use a safety factor of 3~5 in the design of the heat exchangers.

**Heat transfer requirement**

The CES system could have up to four heat exchangers:

(1) Heat exchanger 1 (350): for input air to extract cold from the working fluid (and take heat from the ambient air)
(2) Heat exchanger 2 (340): for waste heat to superheat the working fluid
(3) Heat exchanger 3: for the turbine to absorb heat from atmosphere
(4) Heat exchanger 4: for the compressor to ensure isothermal operation.

The specific heat transfer requirements for the four heat exchangers are, respectively:

Heat Exchanger 1

$$Q_1 = h_8 - h_7$$

Heat Exchanger 2

$$Q_2 = h_9 - h_8$$

Heat Exchanger 3

$$Q_3 = T_9(S_{10} - S_9)$$

Heat Exchanger 4

$$Q_4 = T_0(S_0 - S_2)$$

By using the above four equations, the specific heat transfer requirements under different conditions are obtained and illustrated in Table 1, where the ambient temperature is 300 K and the superheat temperature is 400 K.
From table 1 it can be seen that for $P_1$=0.1MPa, since there is no need for a compressor, Q4 is zero. If there is no superheat, Q2 is zero. The total quantity of specific heat transfer requirement for a simple cycle without superheating at $P_1$=0.1 MPa is therefore 858.6 kJ/kg. The maximum specific heat transfer requirement is 1308.2 kJ/kg, which corresponds to the cycle with superheating at $P_1$=4.0MPa. In the following sections, analyses will be based on the above two sets of heat transfer requirements.

**Table 1 Specific heat transfer requirement at different conditions**

| P2 (MPa) | P1 (MPa) | Super Heat | $Q_1$ (kJ/kg) | $Q_2$ (kJ/kg) | $Q_3$ (kJ/kg) | $Q_4$ (kJ/kg) |
|---|---|---|---|---|---|---|
| 20.0 | 0.1 | No | 368.9 | 0.0 | 489.7 | 0.0 |
| 20.0 | 0.1 | Yes | 368.9 | 119.8 | 630.8 | 0.0 |
| 20.0 | 4.0 | No | 310.3 | 0.0 | 489.7 | 247.3 |
| 20.0 | 4.0 | Yes | 310.3 | 119.8 | 630.8 | 247.3 |

**Preliminary design of heat exchanger**

As mentioned above, there is a substantial technology base for heat exchangers and there are a lot of types of heat exchangers available for the cryogenics and air separation and liquefaction industries. Tube-in-shell and plate-and-fin heat exchangers are among the most widely used types. Tube-in-shell heat exchangers are commonly used at relatively high temperatures. Tube-in-shell heat exchangers have a high transfer coefficient ranging from ~300 to ~3000W/m$^2$K when the fluid phase in both the shell and tube sides is liquid. A common technique to improve the performance of tube-in-shell heat exchangers is to foil fins helically around the tube thus forming a tube and fin heat exchanger in order to increase the ratio of compactness and the heat transfer coefficient. This is especially effective when the fluid is in a gaseous state in one or both sides of the heat exchanger. In addition, the temperature difference between hot and cold fluids is relative high (~15 K), which leads to a relatively low efficiency.

Plate and fin heat exchangers have an advantage of a high degree of compactness, and a low temperature difference between the hot and cold fluids. This type of heat exchanger can be made of aluminium alloy so the capital cost is relatively low. Plate and fin heat exchangers are suitable for use in the cryogenic field because the innate flexibility of this type of heat exchanger allows the use of a multiplicity of fluids in the same unit. Plate and fin heat exchangers comprise flat plates of aluminium alloy separated by corrugated fins. The fins are brazed onto the plate by means of a thin foil of the same alloy as the plate with added silicon to cause melting of the foil at low temperatures and so to bond the fins to the plate. Aluminium is generally favoured on grounds of cost but copper is also acceptable. Due to the large ratio of compactness of ~250~5000 m$^2$/m$^3$, plate and fin heat exchangers are the most widely used heat exchangers in the air separation and liquefaction industry with a typical heat transfer coefficient of ~30~500W/m$^2$K and a temperature difference of up to ~2~6 K between the hot and cold fluids.

Other types of heat exchangers that could be used include regenerators, coiled tube heat exchangers, multiple tube heat exchangers, and coaxial tube heat exchangers.

The following is an estimation of the size of the heat exchangers based on the performance of the plate and fin type. The overall average heat transfer coefficient $\overline{U}$ is taken as 100 W/m$^2$K; the average temperature difference between hot and cold fluids, $\Delta\overline{T}$, is assumed as 2 K; the ratio of compactness, $\vartheta$, is taken as 1000 m$^2$/m$^3$. The compactness could be much higher, so the estimation is on the conservative side. The maximum heat transfer requirements, $H_R$, with and without superheating are respectively given as 858.6 and 1308.2 kJ/kg on the basis of the above calculation. Two cases of the CES with electricity storage volumes (Ev) of 1 MWh and 500 MWh are considered in the estimation. The operating time ($O_T$) of the CES is assumed as 8 hours. This is according to peak hour operation. Different duty cycles could be used and should not greatly impact efficiency.

For Case 1 of the CES with the storage volume of 1 MWh, the heat transfer requirement without superheating is given by: $Q = \frac{E_V H_R}{O_T E_D} = 0.149MW$ where $E_D$ is the energy density of liquid air (kJ/kg). The total size of the heat transfer exchangers can be calculated by: $V = \frac{Q}{\vartheta \overline{U} \Delta\overline{T}} = 0.745m^3$.

For Case 1 with the superheating, the heat transfer requirement will be: $Q = \frac{E_V H_R}{O_T E_D} = 0.186MW$. The total size of the heat transfer exchangers will be: $V = \frac{Q}{\vartheta \overline{U} \Delta\overline{T}} = 0.929m^3$.

For Case 2 of the CES with a storage volume of 500 MWh, the heat transfer requirement without superheating is: $Q = \frac{E_V H_R}{O_T E_D} = 74.5MW$. The total size of the heat exchangers will be: $V = \frac{Q}{\vartheta \overline{U} \Delta\overline{T}} = 372.5m^3$. If the heat exchanger is assumed to be cubic in shape, the length of each side will be 7.19m. If a factor of safety of 4 is given, the length of each side will be 11.41m.

For Case 2 of the CES with the storage volume of 500 MWh with superheating, the heat transfer requirement will be: $Q = \frac{E_V H_R}{O_T E_D} = 93.0MW$. The total size of the heat exchangers will be: $V = \frac{Q}{\vartheta \overline{U} \Delta\overline{T}} = 464.5m^3$. If a cubic shape is assumed, then the length of each side of the heat exchanger will be 7.74 m. If a factor of safety of 4 is given, the length of each side will be 12.29m.

The liquid nitrogen viscous pressure drop is reported to be about 0.05 MPa and the pressure drop of input air is about 400 Pa. If a safety factor of 4 is used, then the liquid air pressure drop would be about 0.2 MPa which is about 1.0% of the total pumping pressure, and the pressure drop of the input air would be 1600 Pa which is tiny compared with the compression ratio.

## Influence of temperature difference across heat exchanger

Figures 36 and 37 show the efficiencies of a CES as a function of temperature differences between hot and cold fluids in heat exchangers for cases with and without superheating, respectively. Six values of the temperature, 0K, 2K, 4K, 6K, 8K, 10K, are simulated. The efficiencies of the CES decrease monotonically with an increase in the temperature difference. When the temperature difference increases by 1 K, the efficiency of the CES decreases by ~0.37% for $P_1$=0.1 MPa without heat recycle, by ~0.25% for *P1*=0.1MPa with heat recycle, by ~0.36% for *P1*=4.0MPa without heat recycle, and by ~1.33% for *P1*=4.0MPa with heat recycle, respectively. Therefore, the temperature difference of hot and cold fluids in the heat exchangers plays a fairly important role in the overall performance of the CES.

The influence of the temperature of the waste heat used for superheating on the efficiency of the CES for $P_1$=0.1MPa and $P_1$=4.0MPa is illustrated in figure 38. Five values of the temperature, 400K, 450K, 500K, 550K, 600K, are simulated. The selection of the values of the temperature is on the basis of the available waste heat of different types of power plants. For example, the temperature of flue gas of a gas turbine power plant is ~800 K, the temperature of flue gas of a steam turbine power plant is ~400K~500K, the temperature of waste heat from a nuclear power plant is ~550 K, the temperature of waste heat from a cement kiln is ~700K, and the geothermic temperature is ~350K~500K.

The efficiency of the CES increases monotonically with an increase in temperature of the flue gas containing the waste heat. If the waste heat temperature increases from 400K to 600K, the efficiency of the CES increases from 0.558 to 0.749 for $P_1$=0.1 MPa, and from 0.654 to 1.714 for $P_1$=4.0 MPa.

Making the best utilization of waste heat is therefore a very effective way to improve the performance of the CES. Note that the waste heat is not accounted for as the input energy, hence the efficiency can be more than 100%. In addition, the waste heat can be from geothermal, cement kilns, or other industrial sources.

Figure 39 shows the influence of the ambient temperature on the efficiency of the CES for $P_1$=0.1MPa and $P_1$=4.0MPa. Ambient temperatures of 270K, 280K, 290K, 300K and 310K are simulated. The efficiencies of the ideal cycle for $P_1$=0.1MPa, the practical cycle for $P_1$=0.1MPa, the ideal cycle for $P_1$=4.0MPa, and the practical cycle for $P_1$=4.0MPa increase almost linearly with increasing ambient temperature. When the ambient temperature increases from 270K to 310K, the efficiencies of the above mentioned cycles increase by 9.7%, 9.1%, 10.2% and 5.5%, respectively. It is therefore concluded that the CES performs better in locations with a high ambient temperature such as tropical regions.

## Heat dissipation of cryogen tank

The heat dissipation (leakage) of the cryogenic tank is about 1% per day in an insulated Dewar at ambient pressure. If more efforts are taken or cold energy dissipation is utilised, the loss of efficiency of CES due to the dissipation (leakage) may be less than 1% per day. This is important when considering the duration of the energy storage cycle of the CES, i.e. the liquid air must be used within a certain period of time in order to ensure the overall efficiency.

Table 2 shows the process for calculating CES efficiency for a number of thermodynamic cycles.

**Table 2**

| | Cycle 3 | Cycle 4 | Cycle 5 | Cycle 6 | Cycle 7 | Cycle 8 | Cycle 9 |
|---|---|---|---|---|---|---|---|
| Pressure of Liquid air (MPa) | 20 | 20 | 20 | 20 | 20 | 20 | 20 |
| Pressure of Input air (MPa). | 4.0 | 4.0 | 4.0 | 4.0 | 0.1 | 0.1 | 0.1 |
| Temperature of working fluid at turbine (K) | 400 | 400 | 400 | 400 | 400 | 300 | 300 |
| Ratio of the input air to the working fluid (x) (kg/kg) | 0.780 | 0.780 | 0.810 | 0.810 | 1.69 | 1.69 | 1.69 |
| Ratio of liquid air produced from the input air to the working fluid (*xy*) (kg/kg) | 0.730 | 0.730 | 0.724 | 0.724 | 0 | 0 | 0 |
| Heat exchanger temperature differences (K) | 0 | 0 | 5 | 5 | 5 | 5 | 5 |
| Efficiency of turbine | 100% | 88.0% | 100% | 88.0% | 88.0% | 88.0% | 88.0% |

(continued)

| | Cycle 3 | Cycle 4 | Cycle 5 | Cycle 6 | Cycle 7 | Cycle 8 | Cycle 9 |
|---|---|---|---|---|---|---|---|
| Reduction in efficiency of turbine due to non-isothermicity | 0 | 0 | 0 | 0 | 15.0% | 15.0% | 15.0% |
| Efficiency of pump | 100% | 88.0% | 100% | 88.0% | 88.0% | 88.0% | 88.0% |
| Efficiency of compressor | 100% | 88.0% | 100% | 88.0% | 88.0% | 88.0% | 88.0% |
| Reduction of efficiency of compressor due to non-isothermicity | 0 | 0 | 0 | 0 | 15.0% | 15.0% | 15.0% |
| Expansion work (kJ/kg) | 615.2 | 541.4 | 607.5 | 534.6 | 455.6 | 335.3 | 335.3 |
| Compression work (Only x kg of input air is compressed) (kJ) | 247.2 | 280.9 | 256.7 | 291.7 | 0 | 0 | 0 |
| Pumping work (kJ/ kg) | 22.4 | 25.5 | 22.4 | 25.5 | 25.5 | 25.5 | 25.5 |
| Cold energy recycling (kJ/kg) | 0 | 0 | 0 | 0 | 267.2 | 267.2 | 267.2 |
| Net work (Only (1-*xy*) kg of working fluid is used in a single cycle) (kJ) | 345.6 | 235.0 | 328.4 | 217.4 | 697.3 | 577.0 | 577.0 |
| Net flowrate of liquid air (based on 1kg of working fluid) (kg) | 0.270 | 0.270 | 0.276 | 0.276 | 1.0 | 1.0 | 1.0 |
| Energy density ($E_D$) (kJ/kg) | 1280.0 | 870.3 | 1189.9 | 787.7 | 697.3 | .577.0 | 577.0 |
| Energy consumed by air liquefaction ($E_C$) (kJ/kg) | 1440 | 1440 | 1440 | 1440 | 1440 | 1440 | 1080 |
| Efficiency of CES ($E_D/E_C$) | 88.9% | 60.9% | 82.7% | 54.7% | 48.4% | 40.1% | 53.4% |
| Total amount of exergy ($E_I$) (kJ/kg) | 743 | 743 | 743 | 743 | 743 | 743 | 743 |
| Cycle efficiency ($E_D/E_I$) (waste heat is not included as input energy) | 172.3% | 117.1% | 160.1% | 106.0% | 93.8% | 77.7% | 77.7% |

## HEAT TRANSFER ANALYSIS - CPS

The heat exchangers play a critical role in the CPS. The flow and heat transfer in the heat exchangers in CPS involves three dimensional, viscous, turbulent and two-phase phenomena. In this analysis, the following assumptions are made:

(1) Thermodynamic equilibrium between fluid phases
(2) Even flow distribution within heat exchanger
(3) Fully developed turbulent flow
(4) Adiabatic shell wall
(5) Zero axial conduction
(6) No radiation heat transfer between hot and cold fluids
(7) Constant overall heat transfer coefficient.

### Heat transfer requirement

The main CPS system has four heat exchangers and the turbine uses an additional heat exchanger for isothermal expansion (see figure 4):

(1) Heat exchanger 1 (540): for input air 1 to extract cold from the working fluid for condensing the input air 1.
(2) Heat exchanger 2 (535): for input air 1 and 4 to extract cold from the working fluid
(3) Heat exchanger 3 (530): input air 1, 3 and 4 to extract cold from the working fluid
(4) Heat exchanger 4 (525): for input air 1 and 2 to absorb compression heat
(5) Heat exchanger 5: for turbine to absorb heat from atmosphere

The specific heat transfer requirements for the five heat exchangers are, respectively:

Heat Exchanger 1

$$Q_1 = x_1(h_6 - h_7)$$

Heat Exchanger 2

$$Q_2 = x_1(h_{5'} - h_6) + x_4(h_{10} - h_{11})$$

Heat Exchanger 3

$$Q_3 = x_1(h_5 - h_{5'}) + x_3(h_0 - h_{10}) + x_4(h_0 - h_{10})$$

Heat Exchanger 4

$$Q_4 = x_1(h_4 - h_5)$$

Heat Exchanger 5

$$Q_5 = T_0(S_0 - S_3)$$

By using the above equations, the specific heat transfer requirements for $Q_1$ to $Q_5$ are 47.9 kJ/kg, 165.9 kJ/kg, 225.4 kJ/kg, 57.8 kJ/kg and 597.7 kJ/kg respectively, where the ambient temperature is 300 K. The maximum specific heat transfer requirement of the entire CPS system, therefore, is 1102.0 kJ/kg. In the following sections, analyses will be based on this value of heat transfer requirements.

**Preliminary design of heat exchanger**

The following is an estimation of the size of the heat exchangers based on the performance of the plate and fin type. The overall average heat transfer coefficient $\overline{U}$ is taken as 100 W/m$^2$K; the average temperature difference between hot and cold fluids, $\Delta\overline{T}$, is assumed as 2 K; the ratio of compactness, $\vartheta$, is taken as 1000 m$^2$/m$^3$. The compactness could be much higher, so the estimation is on the conservative side. The maximum heat transfer requirements, $H_R$, is given as 1102.0 kJ/kg on the basis of the above calculation. For a CPS with a work output of 1kW, the heat transfer requirement is given by: $Q = \frac{1 \bullet H_R}{W_R \bullet E_E} = 2.184kW$ where $W_R$ and $E_E$ are the maximum specific work of liquid air and the energy efficiency of CPS, respectively. The size of the heat exchanger for a 1kW work output can be calculated by: $V = \frac{Q}{\vartheta \overline{U} \Delta \overline{T}} = 0.011m^3$. If a factor of safety is given as 4, the size of the heat exchanger for a unit work output would be 0.044 $m^3$.

The liquid nitrogen viscous pressure drop is reported to be about 0.5bar and the pressure drop of input air was about 400 Pa. If a safety factor of 4 is used, then the liquid air pressure drop would be about 2 bar which is about 1.0% of the total pumping.pressure (200bar), and the pressure drop of the input air would be 1600 Pa (0.016 bar) which is very small compared with the compression ratio (-0.2% of 8 bar).

**Influence of temperature difference across heat exchanger**

Figure 40 shows the efficiency of a CPS as a function of temperature difference between hot and cold fluids in heat exchangers. Six values of the temperature, 0K, 2K, 4K, 6K, 8K, 10K, are simulated. The efficiency of the CPS deceases monotonically with an increase in the temperature difference. When the temperature difference increases by 1 K, the efficiency of the CPS decreases by ~0.4%. Therefore, the temperature difference of hot and cold fluids in the heat exchangers plays a fairly important role in the overall performance of the CPS.

## Heat dissipation of cryogen tank

The heat dissipation (leakage) rate of the cryogenic tank is about 1% per day in an insulated Dewar at the ambient pressure. If more efforts are taken or cold energy dissipation is utilised, for example for air conditioning, the loss of efficiency of CPS due to the dissipation (leakage) may be less than 1% per day. The efficiency of heat dissipation as a function of time for four dissipation rates of 1%, 0.75%, 0.50%, 0.25% per day, is shown in figure 41. The efficiency of heat dissipation $E_{dis}$ is defined as $E_{dis} = \frac{M_{ideal}}{M_{ac}}$ where $M_{ideal}$ refers to the total amount of mass of liquid air without dissipation, and $M_{ac}$ is the actual total amount of mass of liquid air with the dissipation. It can be seen that the efficiency of heat dissipation decreases with increasing time and dissipation rate. This indicates that the CPS operation should be within a certain period of time in order to ensure a good overall efficiency. It is essential to decrease the heat dissipation especially for a long term journey. For a dissipation rate of ~0.5% per day, the total loss over a duration of 30days is ~7.5%.

## EXAMPLE OF A LAB SCALE CES SYSTEM

An exemplary small lab scale CES system with a capacity of 100 kWh is illustrated schematically in figure 42. This represents a system at a scale much smaller than the probable size of commercial units and is designed for testing operating parameters and optimising performance of the system. A full scale CES system may contain additional components which are not included in the lab scale system. The system has a 12.5 kW power rating and an 8 hour discharge time. The power rating could also be suitable for the power needs of multiple households in a microgeneration configuration. The 8 hour discharge time (100KWh stored) is chosen because this is near to the maximum discharge duration required for energy storage applications suggested by bodies such as the Sandia laboratories.

The experimental system consists of 8 major components, a cryogenic tank 600, a pump 610, a heat exchanger 620, a turbine 630, a transmission box 640, a blower 650, a drier 660 and a three-way valve 670. The system works as follows:

1) Liquid air (working fluid) from a cryogen plant or a storage depot is fed into the cryogenic tank 600.
2) Working fluid is pumped and heated before flowing into the turbine 630, where it expands to produce power to drive the blower 650. The blower 650 has two functions, one is to provide the input air for recovery of the cold energy through the heat exchanger 620, and the other one is to provide a load to the turbine 630 (acting as a generator).
3) A small fraction of the air from the blower 650 (input air) is introduced to the heat exchanger 620 via the three-way valve 670 and the drier 660.
4) No liquid air is produced in the lab scale system to reduce the capital cost. This, however, does not affect assessment of the CES performance as the measured data are sufficient for such a purpose.

## Thermodynamic Analyses

The thermodynamic cycle of the lab scale CES system is shown in figure 43. Let $T_0$ $h_0$ and $S_0$ denote respectively the ambient temperature, enthalpy and entropy, the processes and their heat, work and exergy are given in the following:

**1) 1-2: Pumping of working fluid:** The working fluid (liquid air) from the cryogenic tank is pumped from the ambient pressure $P_0$ to $P_2$. The specific work done on the liquid air is: $W_{1-2} = V_l(P_2 - P_0) = \frac{(P_2 - P_0)}{\rho_l}$. The above work can also be expressed by the enthalpy difference between state 2 and state 1: $W_{1-2} = h_2 - h_1$. The total cold exergy (maximum work availability) of the working fluid at state 1 is: $Ex_1 = T_0(S_0 - S_1) - (h_0 - h_1)$.

**2) 2-3: Isobaric heating of working fluid:** The working fluid is heated by the input air from $T_2$ to $T_3$. The specific work done in this process is zero: $W_{2-3} = 0$. The specific heat absorbed from the input air is: $Q_{2-3} = h_3 - h_2$. The exergy released in the process 2-3 is: $Ex_{2-3} = T_0(S_3 - S_2) - (h_3 - h_2)$.

**3) 3-4: Expansion of working fluid:** The working fluid with a high pressure expands in the turbine to deliver work.

If an ideal isothermal process is considered, the specific work done in the process is: $W_{3\text{-}0} = T_0(S_0 - S_3)\text{-}(h_0 - h_3)$. The specific heat absorbed from the ambient in an ideal isothermal process is: $Q_{3\text{-}0} = T_0(S_0 - S_3)$. If the expansion of the working fluid is adiabatic, the specific ideal work $W_{ad}$ will be: $W_{ad} = \frac{k}{k-1} R T_3 [(\frac{P_0}{P_2})^{\frac{(k-1)}{k}} - 1]$ and there is no heat absorption in the process: $Q_{ad} = 0$. The actual work, however, is expected to be in the range between $W_{3\text{-}0}$ and $W_{ad}$. A factor called isothermicity, $\gamma$, is often used as an index, which is defined as the ratio of the actual work to the isothermal work: $\gamma = \frac{W_{3-4}}{W_{3-0}}$. Thus, the actual work $W_{3\text{-}4}$ can be expressed as: $W_{3\text{-}4} = \gamma W_{3\text{-}0} = \gamma[T_0(S_0 - S_3) - (h_0 - h_3)]$.

**4) 6-7: Extraction of cold energy of the working fluid by input air isobarically:** The cold energy of the working fluid is extracted by the input air isobarically through the heat exchanger. The specific work done in this process is zero: $W_{6\text{-}7} = 0$. The cold energy from the working fluid in the process 6-7 is: $Q_{6\text{-}7} = h_6 - h_7$. The exergy obtained by the input air over the process is given by: $Ex_{6\text{-}7} = T_6(S_6 - S_7) - (h_6 - h_7)$. From the above analysis, the specific ideal net work output of the cycle should be:

$$W_{net} = W_{3-4} - W_{1-2} + \frac{F_2}{F_1} \cdot Ex_{6-7}$$
$$= \gamma T_0(S_0 - S_3) - (h_0 - h_3) - (h_1 - h_2) + \frac{F_2}{F_1} \cdot [T_6(S_6 - S_7) - (h_6 - h_7)]$$

where $F_1$ and $F_2$ are respectively the flowrates of the working fluid and input air, respectively.

The efficiency of the lab scale CES experimental system can therefore be expressed by:

$$E_C = \frac{W_{net}}{Ex_1}$$
$$= \frac{W_{3-4} - W_{1-2} + \frac{F_2}{F_1} \cdot Ex_{6-7}}{Ex_1}$$
$$= \frac{\gamma T_0(S_0 - S_3) - (h_0 - h_3) - (h_1 - h_2) + \frac{F_2}{F_1} \cdot [T_6(S_6 - S_7) - (h_6 - h_7)]}{T_0(S_0 - S_1) - (h_0 - h_1)}$$

where $Ex_1$ is the total cold exergy contained in the working fluid. In the actual experimental system, a certain amount of work is needed to pump the input air through the heat exchanger; therefore the work of process 6-7 is not zero. The actual specific net work output should be:

$$W_{net} = W_{3-4} - W_{1-2} + \frac{F_2}{F_1} \cdot Ex_{6-7} - \frac{F_2}{F_1} \cdot W_{6-7}$$
$$= \gamma T_0(S_0 - S_3) - (h_0 - h_3) - (h_1 - h_2) + \frac{F_2}{F_1} \cdot [T_6(S_6 - S_7) - (h_6 - h_7)] - \frac{F_2}{F_1} \cdot W_{6-7}$$

. The efficiency of the lab scale CES system therefore becomes

$$E_C = \frac{W_{net}}{Ex_1}$$

$$= \frac{W_{3-4} - W_{1-2} + \frac{F_2}{F_1} \cdot Ex_{6-7} - \frac{F_2}{F_1} \cdot W_{6-7}}{Ex_1} .$$

$$= \frac{\gamma T_0(S_0 - S_3) - (h_0 - h_3) - (h_1 - h_2) + \frac{F_2}{F_1} \cdot [T_6(S_6 - S_7) - (h_6 - h_7)] - \frac{F_2}{F_1} \cdot W_{6-7}}{T_0(S_0 - S_1) - (h_0 - h_1)}$$

## Measurement techniques and data processing

A suitable measurement system is shown schematically in figure 42. There are 20 measurement channels with 7 for thermocouples, 7 for pressure transducers, 2 for flow rates, 1 for electric voltage, 1 for electric current, and 1 for torque/speed. A data acquisition system is linked to a computer for data acquisition, storage and processing. The measurement channels comprise:

(1) T1: Temperature of the working fluid at the inlet of the pump 610.
(2) T2: Temperature of the working fluid at the outlet of the pump 610/the inlet of the heat exchanger 620.
(3) T3: Temperature of the working fluid at the outlet of the heat exchanger 620/inlet of the turbine 630.
(4) T4: Temperature of the working fluid at the outlet of the turbine 630.
(5) T5: Temperature of the air at the inlet of the blower 650 (ambient temperature).
(6) T6: Temperature of the input air at the inlet of the heat exchanger 620.
(7) T7: Temperature of the input air at the outlet of the heat exchanger 620.
(8) P1: Static pressure of the working fluid at the inlet of the pump 610.
(9) P2: Static pressure of the working fluid at the outlet of the pump 610/inlet of the heat exchanger 620.
(10) P3: Total pressure of the working fluid at the outlet of the heat exchanger 620/inlet of the turbine 630.
(11) P4: Total pressure of the working fluid at the outlet of the turbine 630.
(12) P5: Total pressure of the air at the inlet of the blower 650 (ambient pressure).
(13) P6: Static pressure of the input air at the inlet of heat exchanger 620.
(14) P7: Static pressure of the input air at the outlet of heat exchanger 620.
(15) F1: Flow rate of the working fluid delivered by the pump 610.
(16) F2: Flow rate of the input air through the heat exchanger 620.
(17) V1: Electric voltage of the pump 610.
(18) C1: Electric current of the pump 610.
(19) ω1: Rotary speed of the turbine 630.
(20) M1: Output torque of the turbine 630.

From the above thermodynamic analyses, it can be seen that seven variables are needed to obtain the actual efficiency of the lab scale experimental system, including $W_{3-4}$, $W_{1-2}$, $Ex_{6-7}$, $W_{Blower}$, $Ex_1$, $F_1$ and $F_2$. The methodologies for obtaining these parameters follow:

**(1)** $W_{3-4}$: **actual work output of the turbine:** A torque/speed meter is directly connected to the axis of the turbine 630, and the blower 650 is used as a load. The work output of the turbine 630 is obtained by multiplying the measured torque ($M_1$) and speed ($\omega_1$): $W_{3-4} = M_1 \bullet \omega_1$.
**(2)** $W_{1-2}$: **work consumed by the pump:** In the experimental system, the pump 610 is driven by a motor. The actual work consumed by the pump 610 can therefore be obtained by measuring the electric voltage ($V_1$) and current ($C_1$) of the motor: $W_{1-2} = V_1 \bullet C_1$. The result of $W_{1-2}$ accounts for both the efficiencies of the pump and the motor 610.
**(3)** $Ex_{6-7}$: **cold exergy recycled by input air:** The cold exergy recovered by the input air can be calculated by: $Ex_{6-7} = T_6(S_6 - S_7) - (h_6 - h_7)$. To obtain the entropies and enthalpies of the input air, i.e. $S_6$, $S_7$, $h_6$ and $h_7$, two thermocouples and two pressure transducers are used in the experimental system at the inlet and outlet of the heat exchanger 620, respectively. Using the measured data of $T_6$, $T_7$, $P_6$ and $P_7$, the entropies and enthalpies of the input air can be found from the thermodynamics data tables for the air.
**(4)** $W_{6-7}$: **work needed for pumping the input air:** The specific work consumed for pumping the input air is calculated by the pressure difference between the inlet and outlet of the heat exchanger 620: $W_{6-7} = P_7 - P_6$.

**(5) $F_1$: Flow rate of working fluid:** The flow rate of the working fluid is measured by the flow meter installed at the inlet of the pump 610.

**(6) $F_2$: Flow rate of input air:** The flow rate of the input air is measured by the flow meter installed at the outlet of the heat exchanger 620.

**(7) $Ex_1$: total cold exergy contained in working fluid:** The total cold exergy recovered from the working fluid is calculated by: $Ex_1 = T_0(S_0 - S_1)-(h_0 - h_1)$. To obtain the entropies and enthalpies of the working fluid, i.e. $S_0$, $S_1$, $h_0$ and $h_1$, two thermocouples and two pressure transducers are installed at the inlet and outlet of the heat exchanger 620, respectively. Using the data of $T_5$, $T_1$, $P_5$ and $P_1$, the entropies and enthalpies of the working fluid can be obtained by referring to the thermodynamic data tables for the air.

Parameters related to individual components that can be obtained from the experimental CES include:

**(1) Cryogenic tank**

a. The volume of liquid air can be obtained from a level indicator; the heat dissipation can be calculated from the difference in volume over a known time period.
b. The temperature at the outlet of the cryogenic tank 600 ($T_1$)
c. The pressure at the outlet of the cryogenic tank 600 ($P_1$)
d. The flow rate of the working fluid ($F_1$)

**(2) Pump**

a. The flow rate of the pump 610 ($F_1$)
b. The temperature at the inlet ($T_1$) and outlet ($T_2$) of the pump 610
c. The pressure at the inlet ($P_1$) and outlet ($P_2$) of the pump 610
d. The efficiency of the pump 610: $\eta_P = \frac{F_1 \cdot \Delta P_t}{V_1 \bullet C_1} = \frac{F_1 \cdot (P_2 - P_1)}{V_1 \bullet C_1}$

**(3) Heat exchanger**

a. The temperature of the working fluid at the inlet ($T_2$) and outlet ($T_3$) of the heat exchanger 620
b. The pressure of the working fluid at the inlet ($P_2$) and outlet ($P_3$) of the heat exchanger 620
c. The temperature of the input air at the inlet ($T_6$) and the outlet ($T_7$) of the heat exchanger 620
d. The pressure of the input air at the inlet ($P_6$) and outlet ($P_7$) of the heat exchanger 620
e. The flow rate of the working fluid ($F_1$)
f. The flow rate of the input air ($F_2$)
g. The temperature differences of the working fluid and the input air between the inlet and outlet of the heat exchanger 620: ($T_7$-$T_2$) and ($T_6$-$T_3$)
h. The pressure differences of the working fluid and the input air between the inlet and outlet of the heat exchanger 620: ($P_7$-$P_2$) and ($P_6$-$P_3$)

**(4) Turbine**

a. The temperature of the working fluid at the inlet ($T_3$) and the outlet ($T_4$) of the turbine 630
b. The pressure of the working fluid at the inlet ($P_3$) and the outlet ($P_4$) of the turbine 630
c. The output torque ($M_1$) and rotary speed ($\omega_1$) of the turbine 630

d. The efficiency of the turbine 630 calculated by: $\eta_T = \dfrac{M_1 \bullet \omega_1}{F_l \bullet (P_3 - P_4)}$

e. The isothermicity of the expansion in the turbine 630 calculated by: $\gamma = \dfrac{M_1 \bullet \omega_1}{T_0(S_0 - S_3) - (h_0 - h_3)}$

**(5) Blower**

a. The temperature of air at the inlet ($T_5$) and outlet ($T_6$) of the blower 650
b. The pressure of air at the inlet ($P_5$) and outlet ($P_6$) of the blower 650
c. The input torque ($M_1$) and rotary speed ($\omega_1$) of the blower 650 (driven by the turbine 630).

**Detailed Thermodynamic Analyses of the Components of the Small Scale Lab CES**

**(1) Cryogenic tank:** The flow rate of the fuel (liquid air) can be calculated by: $F_l = \dfrac{P_o}{\eta \bullet E_D \bullet \rho_l}$ where $F_l$, $P_o$, $\eta$, $E_D$ *and* $\rho_l$ are the flowrate of liquid air, power of the system, efficiency of the turbine 630, energy density of liquid air and density of liquid air, respectively. The volume of the fuel tank 600 is given by: $V_l = \dfrac{S_f \bullet F_l \bullet O_t}{E_{dis}}$ where $S_f$, $V_l$, $O_t$, $E_{dis}$ are respectively the safe factor, volume of liquid air, operating duration and efficiency of heat dissipation of the tank. If a cubic tank is assumed, the length of each side, *d*, is $\sqrt[3]{V_l}$ .

If the working pressure of the working fluid is 20 MPa, the ambient temperature is 300 K, the ideal specific energy density of liquid air is ~455 kJ/kg, the density of liquid air at the ambient pressure is ~876 kg/m$^3$, the efficiency of the turbine 630 is 0.8 and the total power of the lab scale experimental system is 12.5 kW, the flow rate of liquid air is: $F_l = \dfrac{P_o}{\eta \bullet E_D \bullet \rho_l} = \dfrac{12.5}{0.8 \bullet 455 \bullet 876} = 141.0 l/h$ . If a safe factor of 1.3 is considered and the efficiency of heat dissipation is taken as 0.95, then the volume of the cryogenic tank 600 for a total capacity of 100 kWh is: $V_l = \dfrac{S_f \bullet F_l \bullet O_t}{E_{dis}} = \dfrac{1.3 \times 0.141 \times 8}{0.95} = 1.55 m^3$ . If a cubic tank is assumed, the length of each side is 1.14m. Due to heat transfer, liquid air evaporates in the cryogenic tank 600 and the pressure of liquid air at the outlet of the tank 600 (inlet of the pump 610) is higher than the ambient pressure which leads to a decrease in the work consumed by the pump 610. Given that self-pressurisation of the cryogenic tank 600 is unavoidable, a safety valve is included to relieve the pressure once it exceeds a certain level. It is possible to control the tank pressure through alternative systems a safety valve.

**(2) Pump:** Key parameters associated with the pump include the working fluid flow rate, inlet pressure, outlet pressure, working temperature and power consumption. The flow rate of the pump is the same as that for the cryogenic tank: $F_1 = 141.0 l/h$. The inlet pressure of liquid air is determined by the outlet pressure of the cryogenic tank. As a safety valve is used in the lab scale system, the pressure of the tank cannot be determined *a priori.* However, the cryogen pump can work over a certain range of inlet pressures at a given outlet pressure. Therefore, the inlet pressure of the pump is taken as $P_1 = 0.1 \sim 3.0 MPa$. The outlet pressure of the cryogen pump is equal to the working pressure of the working fluid which is given as 20 MPa. Therefore, $P_2 = 20 MPa$. The cryogen pump should work in the normal laboratory temperature. Therefore the working temperature is selected as 0°C~40°C. The temperature of the working fluid at the inlet of the pump is approximately the boiling point of liquid air (-196°C). The temperature of the working fluid at the outlet of pump is expected to be ~-192°C after an adiabatic pressurisation process. The power consumed by the pump is determined by its efficiency given the outlet pressure and flow rate. If the efficiency of the pump is assumed as 0.8, the power requirement of the pump is:

$$P_{pump} = \frac{F_l \bullet \rho_l \bullet W_{1-2}}{\eta_p} = 1.0\text{kW}$$

. If a safe factor of 1.5 is used for the motor of the cryogen pump, the power of the motor will be 1.5 kW.

**(3) Heat Exchanger:** Key parameters associated with the heat exchanger include working pressures, flow rates and pressure drops of both the working fluid and the input air, and temperatures of the working fluid and input air at the inlet and outlet of the heat exchanger. The working pressure of the working fluid is approximately equal to the outlet pressure of the pump: $P_2 = 20MPa$. The working pressure of the input air should be close to the ambient pressure to minimise the work consumed by the blower: $P_7 = P_0$. The inlet pressure of the input air is approximately equal to the pressure drop across the heat exchanger: $P_6 = P_{Loss} + P_7$. The flow rate of the working fluid has been given above: $F_1 = 141.0l/h = (123kg/h)$. The flow rate of the input air is influenced by the performance of the heat exchanger. An approximate value is obtained by thermodynamic calculation as $F_2 = 206.0kg / h$. The pressure drop of the working fluid across the heat exchanger depends on the engineering design of the heat exchanger. It is estimated, however, to be of an order of ~1000 Pa. The pressure drop of the input air across the heat exchanger also depends on the design. It is also estimated to be ~1000 Pa. The temperature of the working fluid at the inlet of the heat exchanger is approximately equal to that at the outlet of the pump if the heat loss of pipes/joints/valves etc is neglected, i.e. $T_2$ = -192°C. The temperature of the working fluid at the outlet of the heat exchanger depends on the performance of the heat exchanger, it is estimated to be close to the ambient temperature with a temperature difference assumed (i.e. 5°C), i.e. $T_3$ = 22°C. The temperature of the input air at the inlet of the heat exchanger is approximately the ambient temperature. The temperature of the input air at the outlet of the heat exchanger also depends on the performance of the heat exchanger; but is estimated to be close to the temperature of the working fluid at the inlet of the heat exchanger (~-192°C).

**(4) Turbine:** In analysing the performance of the turbine a multistage adiabatic expansion process with inter-heating is considered. The pressure of the working fluid at the inlet of the turbine has been given above as $P_3 = 20MPa$. The temperature of the working fluid at the inlet of the turbine should be close to the ambient temperature after being heated by the heat exchanger. If a temperature difference of 5°C (below (ambient) is considered, the temperature of the working fluid at the inlet of the turbine is 22°C (ambient temperature taken as 300K): $T_3 = 22°C$. The number of stages is a key parameter of the turbine; more stages mean nearer isothermal operation hence more work output (see figure 44). However, more stages also mean more mechanical complexity, high pressure loss, and a high cost. A balance between the two is needed. Construction of figure 44 is based on the following assumptions:

*Ideal Case:* The pressure of the working fluid at the inlet of the turbine is 20 MPa, the efficiency of the turbine is 100%, and the temperature of the working fluid at the inlet of each stage is 27 °C.
*Practical Case:* The pressure of the working fluid at the inlet of the turbine is 20 MPa, the efficiency of the turbine is 89%, and the temperature of the working fluid at the inlet of each stage is 22°C.

Both the ideal and practical work outputs of the turbine increase with increasing number of stages and level off between 4 to 8 stages. The total number of stages is also limited by the maximum expansion ratio of the turbine, which is normally less than 3.0. Figure 45 shows the expansion ratio of each stage as a function of the number of stages of the turbine. It can be seen that the expansion ratio exceeds 3 if the number of stages is less than 4. As a consequence, the number of the stages of the turbine should be more than 4. Consequently, the number of stages should lie between 4 and 8.

The pressure of the working fluid at the outlet is generally a little higher than the ambient pressure to ensure the working fluid flows smoothly. The pressure of the working fluid at the outlet is often selected as ~0.13MPa. If the number of stages is 6 and the temperature of the working fluid at the inlet is 22 °C, the temperature of the working fluid at the outlet is approximately -44 °C. Air at such a temperature can be recycled for liquid air production in large CES systems. It could also be used for industrial freezing and air conditioning in summer. The flow rate of the working fluid is equal to the flow rate of the pump: 123 kg/h (141 l/hr). Due to the low flow rate and high pressure of the working fluid, the size of the first stage of the turbine will be several millimetres, which is classified as a micro turbine.

(5) Blower: Key parameters associated with the blower are the pressure, flow rate, power and efficiency. The rated power should be approximately equal to the work output of the turbine (~12.5kW), and the pressure should be higher than the pressure drop of the input air across the heat exchanger.

## Selection of Suitable Components

The following component selection is based on the analyses detailed above.

**(1) Cryogenic tank:** Product No. C404C1 (Model ZCF-2000/16) of Si-Chuan Air Separation Plant (Group) Co. Ltd is a suitable vertical type cryogenic tank having a double-walled and vacuum powder insulated structure; see figure 46 for a schematic diagram. This cryogenic tank has the following parameters:

- Capacity = 2000 litres
- Maximum Working pressure = 1.6 MPa
- Empty Tank Weight = 2282 kg
- Dimensions (Dia×H) = 1712 mm x 3450mm
- Daily boil-off (percentage of liquid air evaporated per day at 20°C and 0.1 MPa) = <0.96%.

**(2) Pump:** A reciprocating piston cryogenic liquid pump is recommended for the lab scale CES experimental system and Product No. B228 of the Cryogenic Machinery Corporation (a Si-Chuan Air Separation Plant (Group) Co. Ltd company) is suitable. This pump has a high vacuum insulated pump head, which can reduce vaporisation loss and the suction pressure of pump. The piston ring and filling ring of the pump use non-metallic cryogenic material possessing good plasticity and lubricating ability. The use of special lubricant ensures that the pump can work for combustible or even explosive liquids such as liquid oxygen. The internal structure of the pump is shown in figure 47. This cryogenic pump has the following parameters:

- Working Fluid = Liquid air/oxygen/nitrogen/ argon
- Inlet Pressure = 0.05~1,5 MPa
- Outlet Pressure = 20~35MPa
- Flow rate = 50~150 l/h
- Power = 3.0 kW
- Working Temperature = -10~40°C
- Weight = ~150 kg.

**(3) Heat Exchanger:** The heat exchanger works at a high pressure of ~20MPa and across a very large temperature difference (-196°C~27°C). The flow rate of the working fluid is 123kg/*h*. No existing products have been found that are suitable for the purpose. Therefore, a especially designed and fabricated heat exchanger is needed. Such a heat exchanger could be a tube-fin structure enclosed in a shell with the following parameters:

- Working Fluid = Liquid air
- Heating Fluid = Ambient Air
- Pressure of (cold) working fluid = 20 MPa
- Pressure of Heating Fluid = 0.1 MPa
- Flow rate of working fluid = 123 kg/h
- Flow rate of heating fluid = ~206 kg/h
- Pressure loss of working fluid = <500 Pa
- Pressure loss of heating fluid = <1000 Pa
- Working Temperature = -10 ~40 °C
- Material of tube = 304 Stainless Steel
- Material of fin and shell = Stainless / Aluminium Alloy
- Dimensions (Length/Width/Height) = 2.5 m/2.2 m / 0.8 m
- Weight = ~1200 kg.

(4) **Turbine:** The performance of the turbine plays a dominant role in the performance of the whole lab scale system. The output work of a turbine is normally used to drive a motor, a compressor, a fan, or a power generator. As the inlet pressure of the proposed turbine is high (~20 MPa) and the flow rate of working fluid is low (~123 kg/h), the turbine has to be a micro-turbine with a diameter of several millimetres. Figure 48 shows a schematic diagram of a suitable turbine. However, no existing turbines have been found that are compatible with the proposed lab scale system. Therefore, a specially designed and fabricated turbine is needed.

(5) **Blower:** The blower should be able to deliver a total pressure to overcome the pressure drop of the input air. As the blower also acts as a load of the turbine, it must be rated at a total power approximately equal to the work output of the turbine (~12.5kW). A blower such as Beijing Dangdai Fan Company's mixed flow GXF-C (product code No. 6.5-C) is suitable. This blower has the following parameters:

- Working Fluid = Air
- Total Pressure = 1162 Pa
- Flow rate = 24105 $m^3$/h
- Rotary Speed = 2900 rpm
- Noise = 83 dB(A)
- Power = 15 kW
- Dimensions (Length/Width/Height) = 0.845 m/0.751 m/0.800 m
- Weight = 234 kg

(6) **Other Components:** As the rotary speed of the turbine is normally very high (tens of thousands of rpm), whereas the rotational speed of the proposed blower is low (2900 rpm), a transmission system is necessary for the small scale CES experimental system. In addition, to avoid icing of water (from the input air) on the wall of the heat exchanger, a drier is necessary to dehumidify the input air before it enters the heat exchanger.

**Component Integration:** Liquid air from a cryogen plant is transported to the laboratory by a cryogenic truck and fed into the cryogenic tank C404C1: The reciprocating piston cryogenic liquid pump B228 pressurises the liquid air and provides kinetic energy for the working fluid to flow through the heat exchanger. The working fluid is heated in the heat exchanger by the input air provided by the blower GXF-C-6.5C, which also serves as the load of the micro-turbine in which the working fluid expands to provide power of the blower. Only a fraction of air from the blower is used as the input air.

**TECHNOLOGICAL AND ECONOMICAL COMPARISONS OF CES WITH OTHER STORAGE SYSTEMS**

Currently existing energy storage systems will now be evaluated and compared with the CES. The data of the CES is calculated based on a 500 MWh storage volume and a discharge time of 8 hours. The data for other energy storage systems are mainly taken from J. Kondoh et al. "Electrical energy storage systems for energy networks" (2000, Energy Conversion & Management, vol. 41, 1863-1874), P. Denholm et al. "Life cycle energy requirements and greenhouse gas emissions from large scale energy storage systems" (2004, Energy Conversion and Management, vol. 45, 2153-2172), and F.R. Mclarnon et al. "Energy storage" (1989, Annual Review of Energy, vol. 14, 241-271).

**Output power and output duration:** The relationship between the output power and the output duration of the storage systems is shown in figure 49. Each storage system has a suitable range, and they can be classified into two types: the daily load levelling type and the electric power quality improving type.

Pumped hydro, CAES, batteries and CES are suitable to level daily load fluctuation. The superconducting magnet and flywheel with conventional bearing have a fast response and, therefore, can be utilised for the instantaneous voltage drop, flicker mitigation and short duration UPS.

Other systems such as the flywheel with levitation bearing, double-layer capacitor and redox supercapacitor are promising for small capacity energy storage and short output duration (less than 1 h).

The output power and duration of the CES is better than batteries, competitive with CAES and slightly lower than the pumped hydro. However, as discussed before, the pumped hydro requires special geographical location. Furthermore, as discussed below, pumped hydro requires a very high capital cost.

The relationship between the efficiency and the cyclic period is shown in figure 50. The downwards concave curves are due to self-discharge or energy dissipation. The efficiency of the CES without superheat is lower than other energy storage systems. However, if the waste heat is recycled to superheat the working fluid in CES, its efficiency is competitive with other energy storage systems. Furthermore, the efficiency of CES with superheating increases with improvement of the air liquefaction process as discussed above.

The energy storage densities of different energy storage systems are shown in figure 51. The data is based on the following:

- The energy stored in a pumped hydro plant is calculated based on *mgh*, where *m* is the mass of water, *g* is acceleration due to gravity, and *h* is the effective head which is assumed to be 500 m.
- The cavern volume of CAES is assumed to be 54,000 $m^3$ at about 60 atm. The stored air allows the plant to produce 100 MW for 26 h continuously. The calculation of the energy density of CAES does not include the volume of fuel storage, motor/generator, compressor and expanders.

- Calculation of the energy density of the CES is based on the stored energy and the volume of the cryogen tank and heat exchangers; the volume of the motor/generator, compressor and expanders are not considered as they are at least an order of magnitude smaller than the cryogen tank.
- The energy density for other systems is calculated by dividing the output power by the volume of the storage device.

It can be seen that the CES and advanced secondary Na/S batteries have the highest energy densities among all systems. The energy density of the CES is higher than CAES by more than an order of magnitude and higher than pumped hydro by about two orders of magnitude.

The lifetimes of storage systems are shown in Table 3. The cycle durability of secondary batteries is not as high as other systems owing to the chemical deterioration with the operating time. Many of the components in CES are similar to those used in CAES. Therefore it is expected that the CES will have a similar life time to CAES.

**Table 3 Life time of the electrical energy storage systems**

| Systems | Years | Cycles |
|---|---|---|
| Pumped Hydro | 40~60 | Almost unlimited |
| CAES | 20~40 | Almost unlimited |
| **CES** | **20~40** | **Almost unlimited** |
| Lead Acid Battery | 10~15 | 2000 |
| Na/S battery | 10~15 | 2000~2500 |
| Zn/Br Battery | 10 | 1500 |
| Redox Flow Battery | | 10,000 |
| Flywheel | >15 | >20,000 |
| Double-layer capacitor | | >50,000 |
| Redox super capacitor | 5 | |

Figure 52 shows the relationship between the output power per unit capital cost and the storage energy capacity per unit capital cost of the compared systems. It can be seen that the CAES has the lowest capital cost per unit output power of all the systems. The capital cost of the advanced batteries (Na/S, Zn/Br, and vanadium redox flow) is slightly higher than the breakeven cost against the pumped hydro although the gap is gradually closed. The SMES and flywheel are suitable for high power and short duration applications since they are cheap on the output power basis but expensive in terms of the storage energy capacity.

In terms of the CES, the output adjusted capital cost of the CES is lower than that of the CAES because the life time of the CES is equal to that of the CAES, the initial investment of the CES is less than that of the CAES as no cavern is needed, and the energy density of the CES is higher than that of the CAES by at least an order of magnitude.

Therefore, the capital cost of the CES is lowest of all of the systems examined. In addition, the CES offers a flexibility in terms of commercial operations as products such as oxygen, nitrogen and argon can also be produced.

Construction of a pumped hydro storage system inevitably involves the destruction of trees and green land for in order to build the reservoirs. The construction of the reservoirs could also change the local ecological system which also presents environmental consequences. CAES is based on conventional gas turbine technology and involves the combustion of fossil fuel and consequently the emission of contaminates, whilst secondary batteries produce solid toxic waste.

However, CES is benign to the environment. For example, $CO_2$ and $SO_x$ are removed during the liquefaction process, which help with mitigating the negative environmental issues associated with the burning of fossil fuels. Undesirable airborne particulates are also removed during production of liquid air.

Therefore it can be concluded that CES has a better performance than other energy storage systems in terms of energy density, lifetime, capital cost and environmental impact. It is very competitive in comparison to other systems in terms of the output power and duration and energy efficiency. Compared with cryogenic engines for vehicles, the work output and efficiency of CES are much higher due to the use of both 'heat' and 'cold' recycles. The optimal pressure of the working fluid is ~20 MPa for the CES. The optimal pressure of the input air is found to be ~0.1 MPa when there is no waste heat recycled. However, when waste heat is used, the optimal input pressure could be either 0.1 MPa or 4.0 MPa. Based on an efficiency of 0.4kWh/kg for air liquefaction, an overall efficiency of the CES operated in an ideal cycle is estimated at 0.516 for cases without using the waste heat recycle, and at 0.612. for cases using waste heart from flue gas at a temperature of 127°C. If the efficiency of the air liquefaction is taken as 0.3kWh/kg, then the overall efficiency of the CES operated in an ideal cycle would be 0.688 for cases which do not use the waste heat recycle and at 0.816 for cases which do use the waste heat from a flue gas at a temperature of 127°C.

The specific work output and energy density of the CES depend mainly on the efficiencies of the turbine $\eta_T$ and the air liquefaction $\eta_A$. The efficiency of the compressor can also be important if the input air is compressed. The heat exchangers play an important role in determining the overall efficiency of the cycle. A higher temperature of waste heat and a higher temperature of environment give a higher efficiency.

The CES system has a number of critical inventive steps, including the recycling of waste cold as well as waste heat. These specifically improve the overall work cycle against previous systems designed using cryogenic liquid as the working fluid.

The CES system has the potential to achieve a better performance over the existing energy storage systems in terms of energy density, lifetime, capital cost and environmental impact and is a competitive technology with respect to the output power and duration, and the energy efficiency.

The CES system has the potential to harness low grade heat and no obvious barriers to engineering. The system can be built using existing technologies for the liquefaction plant, turbine, heat exchanges, compressors, pumps, etc.

The majority of work in a CES is achieved by harnessing energy attributed to the temperature difference between the cryogen (~77K) and the ambient (~300K), whereas a standard geothermal or waste heat energy system can only harness temperatures above ambient (~300K).

**SAMPLE MODELS OF CPS ENGINES**

Five marine engine models have been prepared using the CPS. These models are then compared against five known diesel engines. The details of the five known industrial diesel engines are shown in table 4.

CAT-3516 is a 78.1 litre 60° V-type 16-cylinder diesel engine. This engine is designed for medium transportation boats with medium speeds. CAT-3126 is a 7.2 litre turbocharged aftercooled in-line 6-cylinder engine adapted for small yachts. The ST3 engine is an air cooled diesel engine form Lister Petter company designed for narrow boats. The Cummins 6-cylinder T/C diesel engine is used by a Thames river liner suitable for public transport applications and pleasure cruising.

**Table 4**

| | CAT-3516 (Caterpillar Marine Power Co Ltd) | CAT-3126 (Caterpillar Marine Power Co Ltd) | Ford Porbeangle 6-cylinder | ST3 air cooled (Lister Petter) | Cummins 6-cylinderT/C Riverliner |
|---|---|---|---|---|---|
| **Total Power** | 2525 bkW | 261 bkW | 77.6 bkW | 25 bkW | 522 kW |
| **Speed** | 1800 rpm | 2800 rpm | | | |
| **Working Time** | 24 days | 24 hrs | 10 hrs | 42 hrs | 24 days |
| **Heat** | 0 kW | 0 kW | 0 kW | 0 kW | 0 kW |
| **Refrigeration** | 0 kW | 0 kW | 0 kW | 0 kW | 0 kW |
| **Air Condition** | 0 kW | 0 kW | 0 kW | 0 kW | 0 kW |
| **Work Output** | 2525 kW | 261 kW | 77.6 kW | 25 kW | 522 kW |
| **Fuel Consumption** | 617 litre/hr | 68 litre/hr | 21 litre/hr | 6.9 litre/hr | 128 litre/hr |
| **Fuel Tank Volume** | 355.4 $m^3$ | 1.5 $m^3$ | 0.21 $m^3$ | 0.29 $m^3$ | 14 $m^3$ |
| **Tank Side Length[1]** | 7.1m | 1.2m | 0.6m | 0.7m | 2.4m |
| **Boat Speed** | 8.5 m/s (~17 knots) | 14 m/s (~28 knots) | 6 m/s (~12 knots) | 3 m/s (~6 knots) | 6 m/s (~12 knots) |
| **Cruising Range** | 17,626 km | 1,210 km | ~210 km | ~483 km | ~3,100 km |

(continued)

| | CAT-3516 (Caterpillar Marine Power Co Ltd) | CAT-3126 (Caterpillar Marine Power Co Ltd) | Ford Porbeangle 6-cylinder | ST3 air cooled (Lister Petter) | Cummins 6-cylinderT/C Riverliner |
|---|---|---|---|---|---|
| [1]Assuming a cubic tank. | | | | | |

CPS Model 1 corresponds to the CAT-3516 and is suitable for medium sized boats. As the CPS can provide a large quantity of cold, Model 1 is particularly designed for transportation of materials below sub-ambient conditions e.g. frozen meat and fish or other products. Model 1 also makes use of the cooling air and heat from the CPS for the occupants of the boat.

Models 2 to 4 correspond to the CAT-3126, the Ford Porbeagle and the Lister Petter ST3 engine and are suitable for small yachts or boats for which there is no need for large scale refrigeration, or for cool air for air conditioning. The CPS system is used to provide both propulsion and heat for use by the occupants of the boat e.g. for heating.

Model 5 corresponds to the Cummins Riverliner. The CPS system is used to provide propulsion, cooling air and heat for the boat occupants and cold for freezing foods. Only a small part (~10%) of the cold capacity of CPS is assumed for freezing foods because the requirement for freezing food is much lower than that of model 1 for transportation of materials under sub-ambient conditions. However, a cruising range of only 60 miles (110km) is required as the Cummins Riverliner is designed to provide 12 return journeys of 5 nautical miles per day.

The typical working conditions of all five models are $P_2$=200 bar, $P_1$=8bar, $T_0$=300K, $\eta_T=\eta_{COM}=\eta_p$ =0.88, n=1.2, $\gamma$=0.90, and $T_{df}$=5.0K. The overall performance of Models 1 to 5 under these typical conditions is presented in table 5.

**Table 5**

| Model | M1 | M2 | M3 | M4 | M5 |
|---|---|---|---|---|---|
| Total Power (kW) | 2525 | 261 | 77.2 | 25 | 599.5 |
| Working Time | 24 days | 24 hrs | 10 hrs | 42 hrs | 5 hrs |
| Heat (kW) | 169.6 | 22.0 | 6.5 | 2.1 | 45.2 |
| Cold Refrigeration (kW) | 962.0[1] | 0 | 0 | 0 | 51.4[2] |
| Cold for Air Condition (kW) | 962.0[1] | 0 | 0 | 0 | 256.8[2] |
| Work output (kW) | 1955.4 | 253.7 | 71.7 | 22.9 | 522 |
| Energy Efficiency | 59.4 % | 47.3 % | 47.3 % | 47.3 % | 52.8% |
| Speed (m/s) | 7.8 | 13.9 | 5.9 | 3.0 | 6.0 |
| Cruising Range (km) | 16180 | 1198 | ~207 | ~477 | 110 |
| Fuel Consumption (litre/hr) | 23264.4 | 3016.7 | 892.3 | 289.0 | 6210.5 |
| Efficiency of Dissipation | 88.1% | 99.0% | 99.5% | 98.2% | 99.8% |
| Volume of Fuel ($m^3$) | 13400.3 | 73.2 | 9.0 | 12.1 | 31.0 |
| Length of Side (m) | 23.7 | 4.2 | 2.1 | 2.3 | 3.1 |
| Heat transfer requirement (kW) | 5514.6 | 734.5 | 217.3 | 70.4 | 1309.3 |
| Volume of heat exchangers ($m^3$) | 27.8 | 2.9 | 0.9 | 0.3 | 6.6 |
| Conservative Volume ($m^3$) | 111.1 | 11.6 | 3.4 | 1.1 | 26.4 |
| Length of Side (m) | 4.8 | 2.3 | 1.5 | 1.0 | 3.0 |
| [1]Assuming the quantities of cold for re frigeration and air condition are the same.<br>[2] Assuming the quantities of cold for re frigeration and 1/5 of that for air condition. | | | | | |

For a given boat and a given power, the cruising speed $v_k$ can be calculated by: $P_o = \frac{\Delta^{2\ 3} v_k^3}{C_o}$ where $P_o$, $\Delta$, $v_k$, $C_o$ are power (work) of the engine, tonnage of the boat, cruising speed of the boat and a ship geometry related coefficient, respectively. Assuming the Model 1 CPS powered boat has the same boat body, tonnage $\Delta$, and coefficient $C_o$ as the data used for the CAT-3516 engine, the cruising speed, $v_{kl}$, is calculated using: $v_{k1} = v_{k_3516} \bullet \sqrt[3]{\frac{W_{O1}}{P_{o_3516}}}$ where $W_{O1}$ is the work output of model 1. The cruising range of model 1 is therefore given by $C_{r1} = v_{k1} \bullet O_{t1}$ where $O_{t1}$ is the maximum working time.

It can be seen that for the same total power, the work output of model 1 CPS for propulsion is ~22.6% lower than that of CAT-3516, while the cruising speed and range decrease only by ~8%. Furthermore, model 1 CPS provides -169.6 kW heat, 962.0kW refrigeration cold and 962.0kW cold for air conditioning at the same time.

Similarly, the cruising speed and range for CPS models 2 to 4 powered boat can be obtained according to the data of CAT-3126. The cruising speed and range for a CPS model 2 powered boat are: $v_{k2} = v_{k_3126} \bullet \sqrt[3]{\frac{W_{O2}}{P_{o_3126}}}$ and $C_{r2} = v_{k2} \bullet O_{t2}$. The cruising speed and range for a CPS model 3 powered boat are: $v_{k3} = v_{k_3126} \bullet \sqrt[3]{\frac{W_{O3}}{P_{o_3126}}}$ $C_{r3} = v_{k3} \bullet O_{t3}$. The cruising speed and range for a CPS model 4 powered boat are: $v_{k4} = v_{k_3126} \bullet \sqrt[3]{\frac{W_{O4}}{P_{o_3126}}}$ and $C_{r4} = v_{k4} \bullet O_{t4}$. For the same total power, the work outputs of models 2 to 4 for propulsion are ~2.8% lower than those of the corresponding diesel engine. However, models 2 to 4 can provide 22.0 kW, 6.5 kW and 2.1 kW heat at the same time, respectively. It can be seen that the cruising speed and the range of models 2 to 4 of the CPS are ~99.0% of those of the corresponding diesel engines.

Similarly, the cruising speed and range for a CPS model 5 powered boat can be obtained according to the data of the Riverliner. The cruising speed and range for a CPS model 5 powered boat are: $v_{k5} = v_{k_Riverliner} \bullet \sqrt[3]{\frac{W_{O5}}{P_{o_Riverline}}}$ and $C_{r5} = v_{k5} \bullet O_{t5}$. For the same work output for propulsion, the CPS model 5 provides ~45.2 kW heat, 256.8 kW refrigeration cold and 51.4 kW cold for air conditioning although the total power is 14.8 % higher than that of the corresponding diesel engine.

The flow rate of the fuel (liquid air) can be calculated by: $F_l = \frac{P_o}{E_D \bullet \rho_l}$ where $F_l$, $P_o$, $E_D$, $\rho_l$ are flow rate of liquid air, power of the engine, energy density of CPS and density of liquid air, respectively. The volume of the fuel tank is expressed as: $V_l = \frac{F_l \bullet O_t}{E_{dis}}$ where $V_l$, $O_t$, $E_{dis}$ are volume of liquid air, operation time and efficiency of heat dissipation of the tank. If a cubic tank is assumed, the length of each side, $d$, is $d = \sqrt[3]{V_l}$.

The maximum heat transfer requirement has been analysed and estimated above. For the CPS with a unit work output (1kW), the heat transfer requirement is: $Q = 2.184kW$. The size of the heat transfers exchangers for a unit work output is: $V = 0.011m^3$. If a factor of safety is given as 4, the size of the heat transfer exchangers for a unit work output would be 0.044 $m^3$.

On the basis of above data, a conservative estimation of the total volume of heat exchangers for models 1 to 5 CPS are listed in table 5.

## COMPARISON OF CPS WITH DIESEL ENGINES

**Energy density and price:** A comparison between tables 4 and 5 shows that the fuel consumptions of models 1 to 5 CPS are 37.70, 44.36, 42.08, 42.5 and 42.3 times those of the corresponding diesel engines respectively. Therefore, the energy densities of models 1 to 5 are 1/37.70, 1/44.36, 1/42.08, 1/42.5 and 1/42.3 of those of the corresponding diesel engines.

To compare the price of specific power of the eight engines, the price of electricity is taken as *Price_e* =6 pence/kWh and that of diesel as *Price_d*=90 pence/litre, the energy consumption to produce 1 kg of liquid air is taken as 0.4 kWh (W. F. Castle. 2002). The price of the specific power (*Price_p*) of the four models is calculated as: CAT-3516 = 22.0 p/kWh, M1 = 25.0 p/kWh, CAT-3126 = 23.4 p/kWh, M2 = 31.3 p/kWh, Ford Porbeagle = 24.7 p/kWh, M3 = 31.3 p/kWh, Lister Petter ST3 = 24.8 p/kWh, M4 = 31.3 p/kWh, Cummins = 22.1 p/kWh, and M5 = 28.8 p/kWh.

The price of specific power for the CPS models is comparable to the corresponding diesel models. If model 1 CPS is used for boats for transportation of frozen materials, the price of specific power would be very competitive to the counterpart diesel model.

If the energy consumption to produce 1 kg of liquid air is taken as 0.3 kWh, then the price of specific power (*Price_p*) for models 1 to 4 CPS become respectively 18.8, 23.4, 23.4, 23.4 and 21.6 p/kWh .

**Energy Efficiency:** The comparison of well-to-wheel efficiencies among the five models is shown in table 6. The CPS data is based on 0.4 kWh to produce 1 kg liquid air. It can be seen that the efficiency of model 1 CPS is similar to that of CAT-3516 and the efficiency of models 2 to 4 CPS using liquid air as fuel is lower than that of the corresponding diesel engines. The medium sized CPS boats have a higher efficiency when used for transportation of frozen materials than the small yachts do because the small yachts do not fully recover the cold. The efficiencies of CPS models 1 to 4 shown in brackets is that if the consumption of producing 1 kg liquid air is taken to be 0.3 kWh.

**Table 6**

| **Model** | **CAT-3516** | **Model 1 CPS** | **CAT-3126 Ford Porbeagle Lister Petter ST3** | **Models 2 to 4 CPS** | **Cummins Riverliner** | **Model 5 CPS** |
|---|---|---|---|---|---|---|
| Fuel | Diesel | Liquid Air | Diesel | Liquid Air | Diesel | Liquid Air |
| Fuel production efficiency | 94% | 51.6% (68.8%) | 94% | 51.6% (68.8%) | 94% | 51.6% (68.8%) |
| Peak brake engine efficiency or stack efficiency | 38% | 59.4% | 38% | 47.3% | 38% | 52.8% |
| Part load efficiency factor | 70% | 70% | 70% | 70% | 70% | 70% |
| Transmission efficiency | 85% | 80% | 85% | 90% | 85% | 80% |
| Weight factor X Idle factor | 100% | 100% | 100% | 100% | 100% | 100% |
| Total cycle efficiency | 21% | 18% (24%) | 21% | 15% (20%) | 21% | 16% (21%) |

**Life time and capital cost:** Since all major components of the CPS are similar to the CES, the life time of a CPS system is also estimated to be about 20 to 40 years. The life time of the Diesel is considered to be about 17 years. However, it is believed that the life time of CPS is higher than that of diesel engines because there is no combustion process at high temperatures involved in CPS, and there is no strong friction between pistons and cylinders.

It is believed that the CPS is competitive in terms of capital cost because there is little special requirement in terms of components. In addition, a refrigeration system is made obsolete in the case of refrigeration transportation boats.

**Influences of systems on the environment:** Diesel engines involve combustion of fossil fuels and hence lead to emission of contaminates. CPS is a totally zero emission and environmentally benign system. If liquid air is produced by renewable energy, the CPS system would be a complete 'Green' power system. Furthermore, contaminates can be removed during liquefaction process, which would help with mitigating the negative environmental issues associated with burning of fossil fuels. Undesirable airborne particulates can also be removed during production of liquid air.

Accordingly, Cryogenic Propulsion System (CPS) using liquid air can be used to provide combustion free and non-polluting maritime transportation. CPS has a competitive performance against the diesel engines in terms of energy price, energy efficiency, life time and capital cost and impact on the environment. CPS can have a higher efficiency if the cold energy is recovered for e.g. on-boat refrigeration and air-conditioning.

It will of course be understood that the present invention has been described by way of example, and that modifications of detail can be made within the scope of the invention as defined by the following claims.

**Claims**

1. A method of storing energy using a cryogenic energy storage system having a first (340) and a second (350) heat exchanger, said method comprising the steps of:

    1) providing a gaseous input (120), wherein the gaseous input is air;
    2) producing a cryogen (250) from the gaseous input, wherein the cryogen is liquid air, and comprising:

        compressing, in a compressor (310), the gaseous input; and
        after the compressed gaseous input has been cooled in the first (340) and the second (350) heat exchanger, feeding the compressed gaseous input to a throttling valve (360) to convert the compressed gaseous input into cryogen;

    3) storing the cryogen;
    4) pumping the cryogen to a form a pressurised cryogen;
    5) heating the pressurised cryogen in the second heat exchanger (350) using heat from the compressed gaseous input;
    6) superheating the heated pressurised cryogen in the first heat exchanger (340) using heat from the compressed gaseous input;
    7) expanding the superheated cryogen through a turbine (320) to drive the turbine; and
    8) recovering cold energy by recycling at least a portion of the cold energy contained in the cryogen by extracting said cold energy through said first (340) and second (350) heat exchangers to cool down the compressed gaseous input, thereby using the recovered cold energy to enhance production of more cryogen,

    wherein steps 1 and 2 occur simultaneously with steps 4 to 8.

2. The method of claim 1 further comprising using the turbine (320, 510) to drive a generator (330, 515) and generate electricity.

3. The method of claim 1 further comprising using the turbine (320, 510) to drive a propeller (505).

4. The method of any preceding claim wherein the step of expanding the cryogen comprises heating the cryogen using: ambient heat; or geothermal heat; or waste heat from a power plant, from a steam stream, from the flue gas of a power plant or from another waste heat resource.

5. The method of claim 4 wherein the step of expanding the cryogen comprises heating the cryogen using waste heat generated during the step of compressing the gaseous input.

6. The method of any of claims 1 to 4 wherein the step of expanding the cryogen comprises:

    heating the cryogen to approximately the environmental temperature using ambient air; then
    heating the cryogen further using waste heat.

7. The method of any preceding claim wherein the cryogen is stored at an increased temperature prior to expansion.

8. The method of any preceding claim further comprising using the recovered cold energy.

9. The method of any preceding claim further comprising using the recovered cold energy for refrigeration or for air conditioning.

**10.** The method of any preceding claim further comprising using waste heat generated during the step of producing the cryogen to provide: hot air for heating; or hot water.

**11.** A cryogenic energy storage system (300) comprising:

a gaseous input (120), wherein the gaseous input is air;
means for producing cryogen from the gaseous input, wherein the cryogen is liquid air, the means comprising:

a compressor (310) for compressing the gaseous input; and
a throttling valve (360) arranged to convert the compressed gaseous input into a cryogen after the compressed gaseous input has been cooled in a first (340) and a second (350) heat exchanger;

a cryogen storage facility (370);
a pump arranged (380) for increasing the pressure of the cryogen by pumping the cryogen from the cryogen storage facility;
the first heat exchanger (340) and the second heat exchanger (350), wherein the second heat exchanger (350) is arranged for heating the cryogen using heat from the compressed gaseous input after the pressure has been increased by the pump (380); and
the first heat exchanger (340) is arranged for superheating the cryogen using heat from the compressed gaseous input after the cryogen has been heated by the second heat exchanger (350);
a turbine (320) for expanding the cryogen and capable of being driven by the expanding cryogen; and
whereby in use, cold energy is recovered by recycling at least a portion of the cold energy contained in the cryogen by extracting said cold energy through said first and second heat exchangers to cool down the compressed gaseous input, thereby using the recovered cold energy to enhance production of more cryogen,
wherein the means for producing cryogen, the first heat exchanger, the second heat exchanger, and the turbine are configured to operate simultaneously.

**12.** The cryogenic energy storage system of claim 11 further comprising a generator (330, 515) wherein the generator (330, 515) is capable of being driven by the turbine (320, 510).

**13.** The cryogenic energy storage system of claim 11 further comprising a propeller (505) wherein the propeller (505) is capable of being driven by the turbine (320, 510).

**14.** The cryogenic energy storage system of claim 11 wherein the first heat exchanger (340) is arranged to superheat the cryogen using: heat from ambient air; or geothermal heat; or waste heat from a power plant, from a steam stream, from the flue gas of a power plant or from another waste heat resource.

**15.** The cryogenic energy storage system of claim 11 wherein:

the second heat exchanger (350) is arranged to heat the cryogen to approximately the environmental temperature using ambient air; and
the first heat exchanger (340) is arranged to heat the cryogen further using waste heat.

**16.** The cryogenic energy storage system of any of claims 11 to 15 wherein the turbine (320, 510) comprises a multi-stage quasi-isothermal turbine.

**17.** The method of any of claims 1 to 10 wherein the turbine (320, 510) comprises a multi-stage quasi-isothermal turbine.

## Patentansprüche

**1.** Verfahren zum Speichern von Energie mithilfe eines Systems zum Speichern von kryogener Energie mit einem ersten (340) und einem zweiten (350) Wärmetauscher, wobei das Verfahren die folgenden Schritte umfasst:

1) Bereitstellen einer gasförmigen Einspeisung (120), wobei die gasförmige Einspeisung Luft ist;
2) Herstellen eines Kryogens (250) aus der gasförmigen Einspeisung, wobei das Kryogen flüssige Luft ist, und umfassend:

Verdichten, in einem Kompressor (310), der gasförmigen Einspeisung; und
nach dem Abkühlen der verdichteten gasförmigen Einspeisung in dem ersten (340) und dem zweiten (350) Wärmetauscher Zuführen der verdichteten gasförmigen Einspeisung zu einem Drosselventil (360) zum Umwandeln der verdichteten gasförmigen Einspeisung in Kryogen;

3) Speichern des Kryogens;
4) Pumpen des Kryogens zum Bilden eines Druckkryogens;
5) Erwärmen des Druckkryogens im zweiten Wärmetauscher (350) mithilfe der Wärme aus der verdichteten gasförmigen Einspeisung;
6) Überhitzen des erwärmten Druckkryogens im ersten Wärmetauscher (340) mithilfe von Wärme aus der gasförmigen Einspeisung;
7) Expandieren des überhitzten Kryogens durch eine Turbine (320) zum Antreiben der Turbine;
und
8) Gewinnen von Kälteenergie durch Rückführen mindestens eines Teils der im Kryogen enthaltenen Kälteenergie durch Extrahieren der Kälteenergie durch den ersten (340) und den zweiten (350) Wärmetauscher zum Herunterkühlen der verdichteten gasförmigen Einspeisung, wodurch die gewonnene Kälteenergie zur Steigerung der Produktion von mehr Kryogen genutzt wird,

wobei die Schritte 1 und 2 gleichzeitig mit den Schritten 4 bis 8 erfolgen.

**2.** Verfahren nach Anspruch 1, ferner umfassend Nutzen der Turbine (320, 510) zum Antreiben eines Generators (330, 515) und Erzeugen von Elektrizität.

**3.** Verfahren nach Anspruch 1, ferner umfassend Nutzen der Turbine (320, 510) zum Antreiben eines Propellers (505) .

**4.** Verfahren nach einem vorhergehenden Anspruch, wobei der Schritt des Expandierens des Kryogens das Erwärmen des Kryogens mithilfe des Folgenden umfasst: Umgebungswärme; oder geothermischer Wärme; oder Abwärme aus einem Kraftwerk, aus einem Dampfstrom, aus dem Rauchgas eines Kraftwerks oder aus einer anderen Abwärmequelle.

**5.** Verfahren nach Anspruch 4, wobei der Schritt des Expandierens des Kryogens Erwärmen des Kryogens mithilfe von Abwärme, die während des Schritts des Verdichtens der gasförmigen Einspeisung erzeugt wird, umfasst.

**6.** Verfahren nach einem der Ansprüche 1 bis 4, wobei der Schritt des Expandierens des Kryogens Folgendes umfasst:

Erwärmen des Kryogens auf ungefähr Umgebungstemperatur mithilfe von Umgebungsluft; dann
weiteres Erwärmen des Kryogens mithilfe von Abluft.

**7.** Verfahren nach einem vorhergehenden Anspruch, wobei das Kryogen vor dem Expandieren mit erhöhter Temperatur gespeichert wird.

**8.** Verfahren nach einem vorhergehenden Anspruch, ferner umfassend Nutzen der gewonnenen Kälteenergie.

**9.** Verfahren nach einem vorhergehenden Anspruch, ferner umfassend Nutzen der gewonnenen Kälteenergie zur Kühlung oder Klimatisierung.

**10.** Verfahren nach einem vorhergehenden Anspruch, ferner umfassend Nutzen von Abwärme, die während des Schritts des Erzeugens des Kryogens erzeugt wird, zum Bereitstellen von: Warmluft zur Erwärmung oder Warmwasser.

**11.** System (300) zum Speichern von kryogener Energie, umfassend:

eine gasförmige Einspeisung (120); wobei die gasförmige Einspeisung Luft ist;
Mittel zum Erzeugen von Kryogen aus der gasförmigen Einspeisung; wobei das Kryogen flüssige Luft ist, wobei das Mittel Folgendes umfasst:

einen Kompressor (310) zum Verdichten der gasförmigen Einspeisung; und
ein Drosselventil (360), das zum Umwandeln der verdichteten gasförmigen Einspeisung in ein Kryogen nach dem Herunterkühlen der verdichteten gasförmigen Einspeisung in einem ersten (340) und einem zweiten (350) Wärmetauscher angeordnet ist;
eine Kryogenspeichereinrichtung (370);
eine Pumpe (380), die zum Erhöhen des Drucks des Kryogens durch Pumpen des Kryogens aus der Kryogenspeichereinrichtung angeordnet ist;
den ersten Wärmetauscher (340) und den zweiten Wärmetauscher (350), wobei der zweite Wärmetauscher (350) zum Erwärmen des Kryogens mithilfe von Wärme aus der verdichteten gasförmigen Einspeisung nach Erhöhen des Drucks durch die Pumpe (380) angeordnet ist; und
der erste Wärmetauscher (340) zum Überhitzen des Kryogens mithilfe von Wärme aus der verdichteten gasförmigen Einspeisung nach dem Erwärmen des Kryogens durch den zweiten Wärmetauscher (350) angeordnet ist,
eine Turbine (320) zum Expandieren des Kryogens, die dazu fähig ist, vom expandierenden Kryogen angetrieben zu werden; und
wobei im Gebrauch die Kälteenergie durch Rückführung mindestens eines Teils der im Kryogen enthaltenen Kälteenergie gewonnen wird, indem die Kälteenergie durch den ersten und den zweiten Wärmetauscher extrahiert wird, um die verdichtete gasförmige Einspeisung herunterzukühlen, wodurch die gewonnene Kälteenergie zur Steigerung der Produktion von mehr Kryogen genutzt wird, wobei das Mittel zum Erzeugen von Kryogen, der erste Wärmetauscher, der zweite Wärmetauscher und die Turbine zum gleichzeitigen Betrieb konfiguriert sind.

**12.** System zum Speichern von kryogener Energie nach Anspruch 11, ferner umfassend einen Generator (330, 515), wobei der Generator (330, 515) dazu fähig ist, von der Turbine (320, 510) angetrieben zu werden.

**13.** System zum Speichern von kryogener Energie nach Anspruch 11, ferner umfassend einen Propeller (505), wobei der Propeller (505) dazu fähig ist, von der Turbine (320, 510) angetrieben zu werden.

**14.** System zum Speichern von kryogener Energie nach Anspruch 11, wobei der erste Wärmetauscher (340) zum Überhitzen des Kryogens mithilfe von: Wärme aus der Umgebungsluft; oder geothermischer Wärme; oder Abwärme aus einem Kraftwerk, aus einem Dampfstrom, aus dem Rauchgas eines Kraftwerks oder aus einer anderen Abwärmequelle angeordnet ist.

**15.** System zum Speichern von kryogener Energie nach Anspruch 11, wobei:

der zweite Wärmetauscher (350) dazu angeordnet ist, das Kryogen mithilfe von Umgebungsluft auf ungefähr Umgebungstemperatur zu erwärmen; und
der erste Wärmetauscher (340) dazu angeordnet ist, das Kryogen mithilfe von Abwärme weiter zu erwärmen.

**16.** System zum Speichern von kryogener Energie nach einem der Ansprüche 11 bis 15, wobei die Turbine (320, 510) eine mehrstufige quasi-isotherme Turbine umfasst

**17.** Verfahren nach einem der Ansprüche 1 bis 10, wobei die Turbine (320, 510) eine mehrstufige quasi-isotherme Turbine umfasst.

## Revendications

**1.** Procédé de stockage d’énergie en utilisant un système de stockage d’énergie cryogénique ayant un premier (340) et un second (350) échangeur thermique, ledit procédé comprenant les étapes suivantes :

1) fournir une entrée gazeuse (120), l’entrée gazeuse étant de l’air ;
2) produire un cryogène (250) à partir de l’entrée gazeuse, le cryogène étant de l’air liquide, et comprenant :

la compression, dans un compresseur (310), de l’entrée gazeuse ; et
après le refroidissement de l’entrée gazeuse compressée dans le premier (340) et le second (350) échangeur thermique, la fourniture de l’entrée gazeuse compressée à une vanne d’étranglement (360) pour convertir l’entrée gazeuse compressée en cryogène ;

3) stocker le cryogène ;
4) pomper le cryogène jusqu’à la formation d’un cryogène pressurisé ;

5) chauffer le cryogène pressurisé dans le second échangeur thermique (350) en utilisant de la chaleur provenant de l'entrée gazeuse compressée ;
6) surchauffer le cryogène pressurisé chauffé dans le premier échangeur thermique (340) en utilisant de la chaleur provenant de l'entrée gazeuse compressée ;
7) dilater le cryogène surchauffé à travers une turbine (320) pour entraîner la turbine ; et
8) récupérer de l'énergie froide en recyclant au moins une partie de l'énergie froide contenue dans le cryogène en extrayant ladite énergie froide à travers lesdits premier (340) et second (350) échangeurs thermiques afin de refroidir l'entrée gazeuse compressée, utilisant de ce fait l'énergie froide récupérée pour renforcer la production de plus de cryogène,

les étapes 1 et 2 se produisant en simultané avec les étapes 4 à 8.

**2.** Procédé selon la revendication 1, comprenant en outre l'utilisation de la turbine (320, 510) pour entraîner un générateur (330, 515) et générer de l'électricité.

**3.** Procédé selon la revendication 1, comprenant en outre l'utilisation de la turbine (320, 510) pour entraîner une hélice (505).

**4.** Procédé selon l'une quelconque des revendications précédentes, l'étape de dilatation du cryogène comprenant le chauffage du cryogène en utilisant : de la chaleur ambiante ; ou de la chaleur géothermique ; ou de la chaleur perdue provenant d'une centrale électrique, d'un courant de vapeur, des gaz de fumée d'une centrale électrique ou d'une autre ressource de chaleur perdue.

**5.** Procédé selon la revendication 4, l'étape de dilatation du cryogène comprenant le chauffage du cryogène en utilisant de la chaleur perdue générée pendant l'étape de compression de l'entrée gazeuse.

**6.** Procédé selon l'une quelconque des revendications 1 à 4, l'étape de dilatation du cryogène comprenant :

le chauffage du cryogène jusqu'à approximativement la température ambiante en utilisant de l'air ambiant ; et ensuite
le chauffage supplémentaire du cryogène en utilisant de la chaleur perdue.

**7.** Procédé selon l'une quelconque des revendications précédentes, le cryogène étant stocké à une température accrue avant la dilatation.

**8.** Procédé selon l'une quelconque des revendications précédentes, comprenant en outre l'utilisation de l'énergie froide récupérée.

**9.** Procédé selon l'une quelconque des revendications précédentes, comprenant en outre l'utilisation de l'énergie froide récupérée à des fins de réfrigération ou de conditionnement d'air.

**10.** Procédé selon l'une quelconque des revendications précédentes, comprenant en outre l'utilisation de chaleur perdue générée pendant l'étape de production du cryogène pour fournir : de l'air chaud pour le chauffage ; ou de l'eau chaude.

**11.** Système de stockage d'énergie cryogénique (300), comprenant :

une entrée gazeuse (120), l'entrée gazeuse étant de l'air ;
des moyens pour produire un cryogène à partir de l'entrée gazeuse, le cryogène étant de l'air liquide, les moyens comprenant :

un compresseur (310) pour compresser l'entrée gazeuse ; et
une vanne d'étranglement (360) prévue pour convertir l'entrée gazeuse compressée en un cryogène après le refroidissement de l'entrée gazeuse compressée dans un premier (340) et un second (350) échangeur thermique ;

une installation de stockage de cryogène (370) ;
une pompe (380) prévue pour augmenter la pression du cryogène en pompant le cryogène depuis l'installation de stockage de cryogène ;

le premier échangeur thermique (340) et le second échangeur thermique (350), le second échangeur thermique (350) étant prévu de manière à chauffer le cryogène en utilisant de la chaleur provenant de l'entrée gazeuse compressée après l'augmentation de la pression par la pompe (380) ; et

le premier échangeur thermique (340) étant prévu de manière à surchauffer le cryogène en utilisant de la chaleur provenant de l'entrée gazeuse compressée après le chauffage du cryogène par le second échangeur thermique (350) ;

une turbine (320) pour dilater le cryogène et capable d'être entraînée par le cryogène qui se dilate ; et

moyennant quoi, lors de l'utilisation, de l'énergie froide est récupérée en recyclant au moins une partie de l'énergie froide contenue dans le cryogène en extrayant ladite énergie froide à travers lesdits premier et second échangeurs thermiques afin de refroidir l'entrée gazeuse compressée, utilisant de ce fait l'énergie froide récupérée pour renforcer la production de plus de cryogène,

les moyens pour produire un cryogène, le premier échangeur thermique, le second échangeur thermique et la turbine étant configurés pour fonctionner simultanément.

**12.** Système de stockage d'énergie cryogénique selon la revendication 11, comprenant en outre un générateur (330, 515), le générateur (330, 515) étant capable d'être entraîné par la turbine (320, 510).

**13.** Système de stockage d'énergie cryogénique selon la revendication 11, comprenant en outre une hélice (505), l'hélice (505) étant capable d'être entraînée par la turbine (320, 510).

**14.** Système de stockage d'énergie cryogénique selon la revendication 11, le premier échangeur thermique (340) étant prévu de manière à surchauffer le cryogène en utilisant : de la chaleur provenant de l'air ambiant ;
ou de la chaleur géothermique ; ou de la chaleur perdue provenant d'une centrale électrique, d'un courant de vapeur, des gaz de fumée d'une centrale électrique ou d'une autre ressource de chaleur perdue.

**15.** Système de stockage d'énergie cryogénique selon la revendication 11 :

le second échangeur thermique (350) étant prévu de manière à chauffer le cryogène jusqu'à approximativement la température ambiante en utilisant de l'air ambiant ; et

le premier échangeur thermique (340) étant prévu de manière à chauffer le cryogène davantage en utilisant de la chaleur perdue.

**16.** Système de stockage d'énergie cryogénique selon l'une quelconque des revendications 11 à 15, la turbine (320, 510) comprenant une turbine quasi-isotherme à étages multiples.

**17.** Procédé selon l'une quelconque des revendications 1 à 10, la turbine (320, 510) comprenant une turbine quasi-isotherme à étages multiples.

FIG. 1

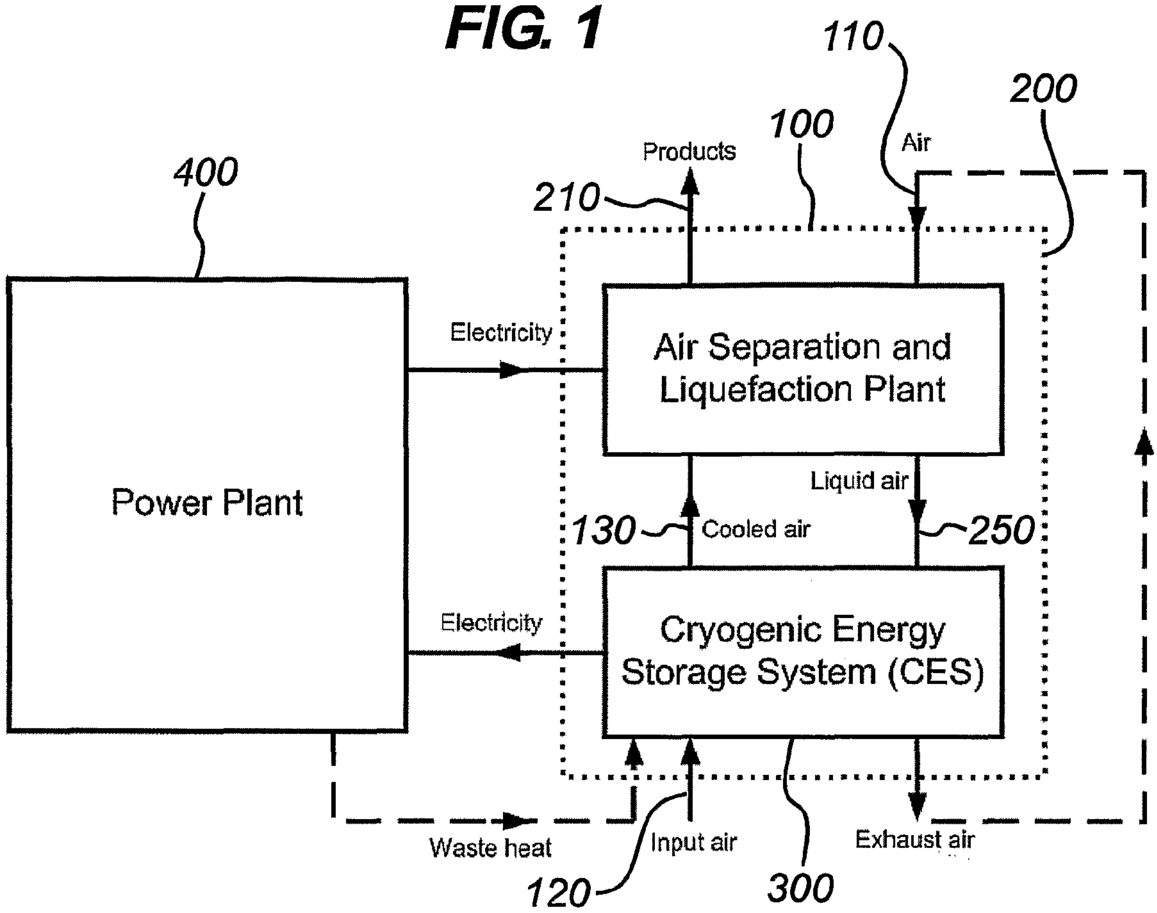
400
Power Plant
Electricity
Electricity
Waste heat
100
110
200
210
Products
Air
Air Separation and Liquefaction Plant
Liquid air
Cooled air
130
250
Cryogenic Energy Storage System (CES)
Input air
120
300
Exhaust air

FIG. 2

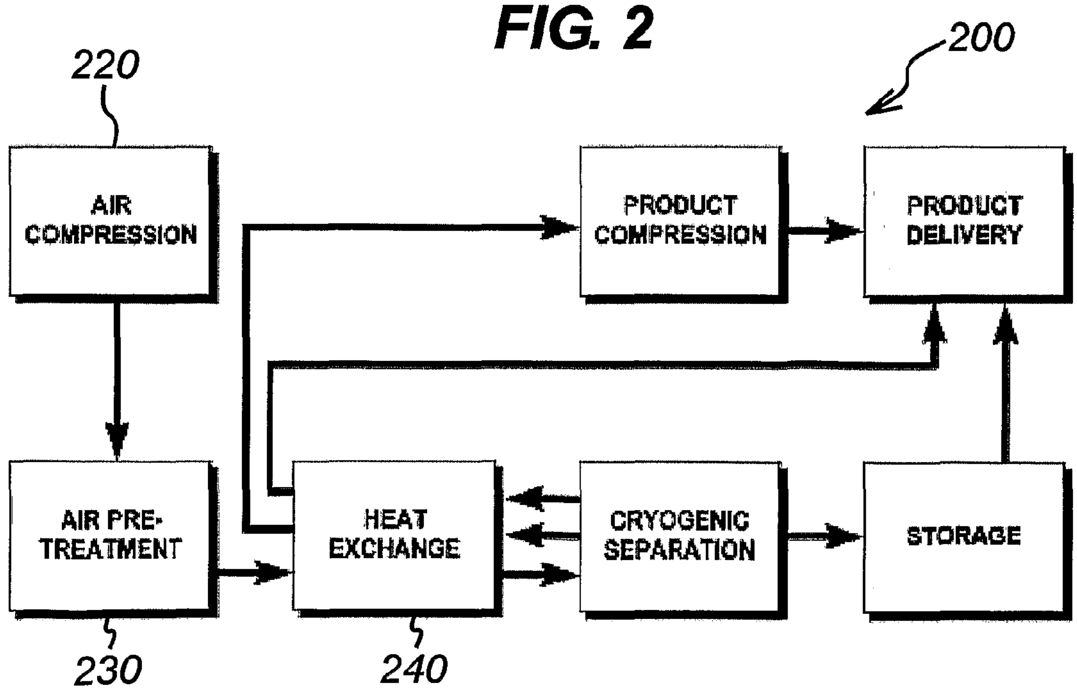
220
200
AIR COMPRESSION
PRODUCT COMPRESSION
PRODUCT DELIVERY
AIR PRE-TREATMENT
HEAT EXCHANGE
CRYOGENIC SEPARATION
STORAGE
230
240

# FIG. 3

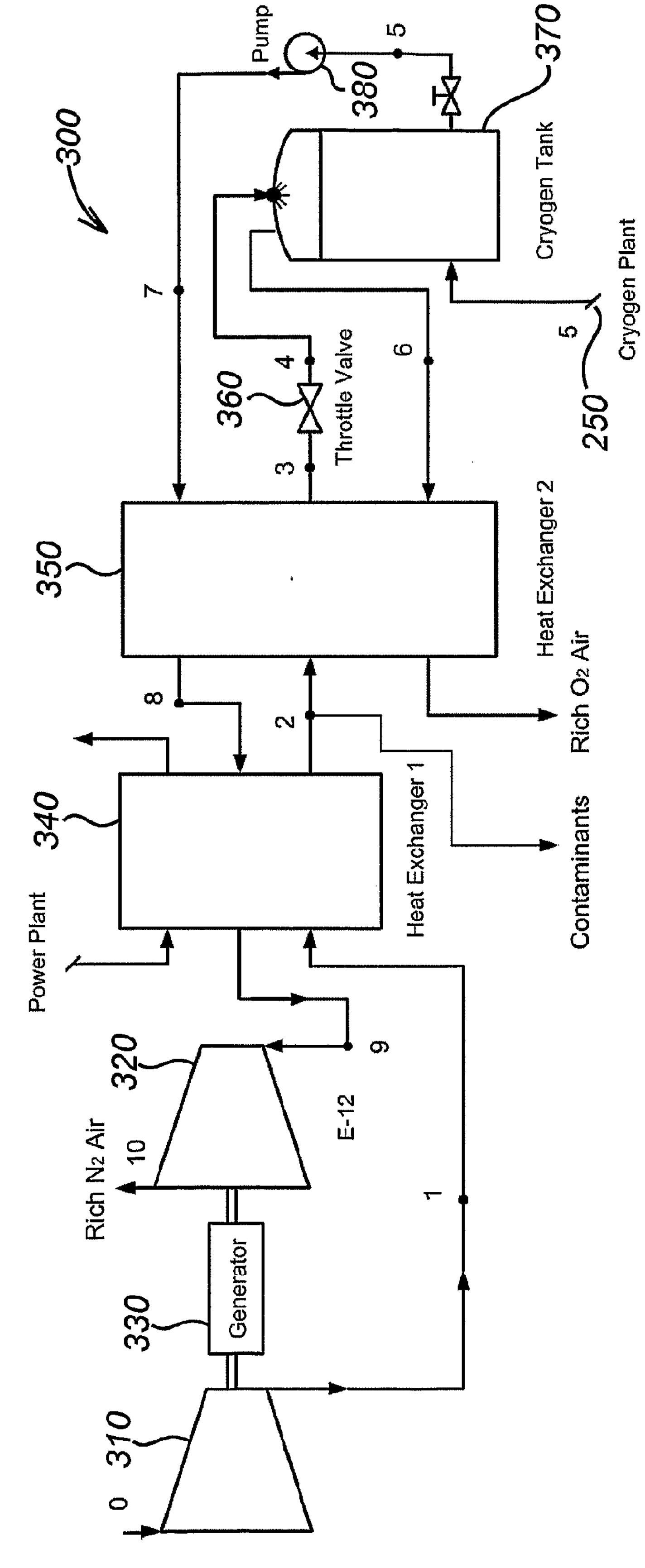
300
Pump
380
5
370
Cryogen Tank
7
4
Throttle Valve
360
3
6
5
Cryogen Plant
250
350
Heat Exchanger 2
Rich O2 Air
8
2
340
Heat Exchanger 1
Contaminants
Power Plant
320
9
E-12
Rich N2 Air
10
1
330
Generator
310
0

FIG. 4

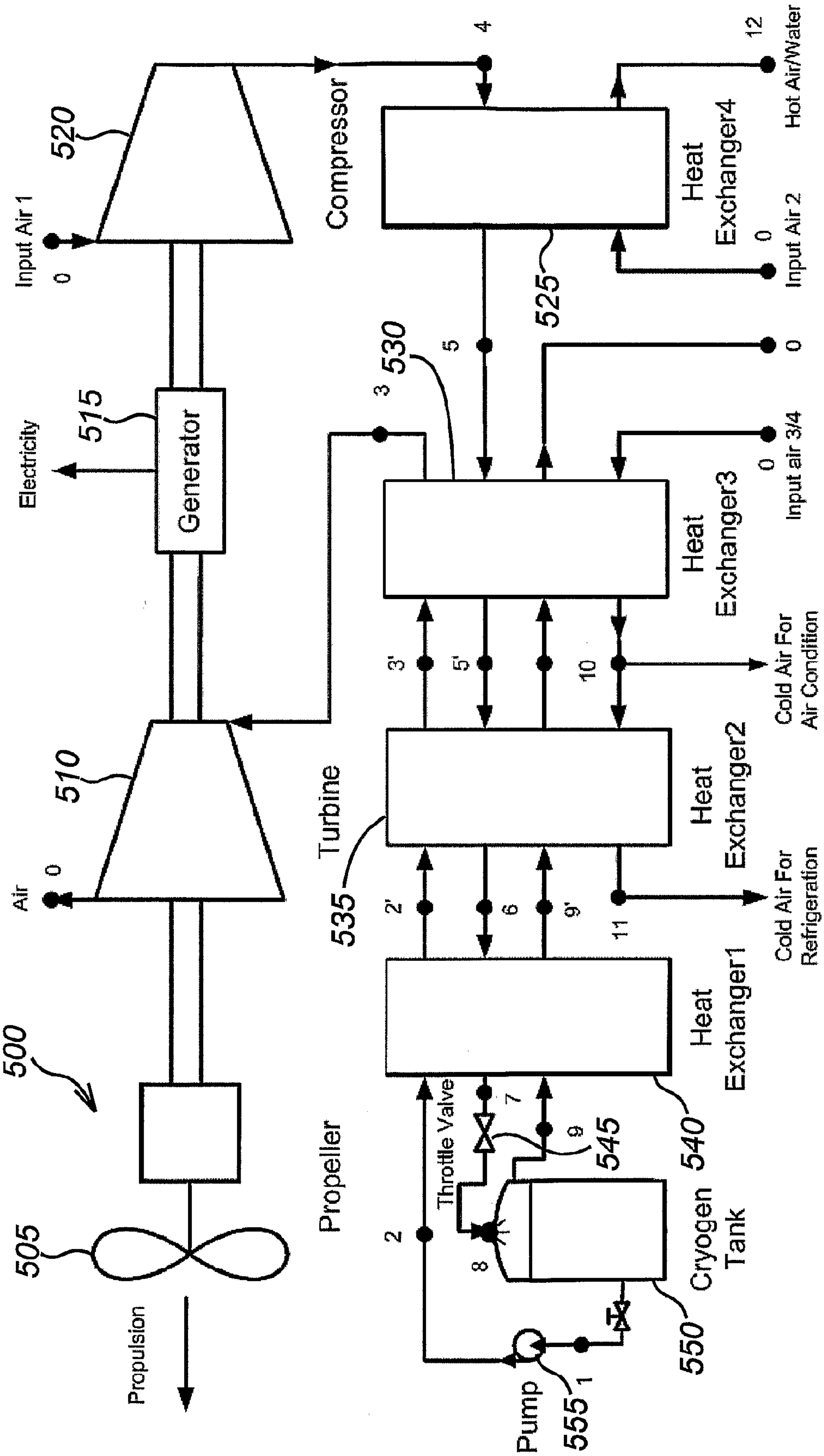
500
505
Propulsion
Propeller
510
Air
0
515
Electricity
Generator
520
Input Air 1
0
Compressor
Turbine
535
530
525
540
545
550
555
Pump
Throttle Valve
Cryogen Tank
Heat Exchanger1
Heat Exchanger2
Heat Exchanger3
Heat Exchanger4
Cold Air For Refrigeration
Cold Air For Air Condition
Input air 3/4
Input Air 2
Hot Air/Water
1
2
2'
3
3'
4
5
5'
6
7
8
9
9'
10
11
12

*FIG. 5*

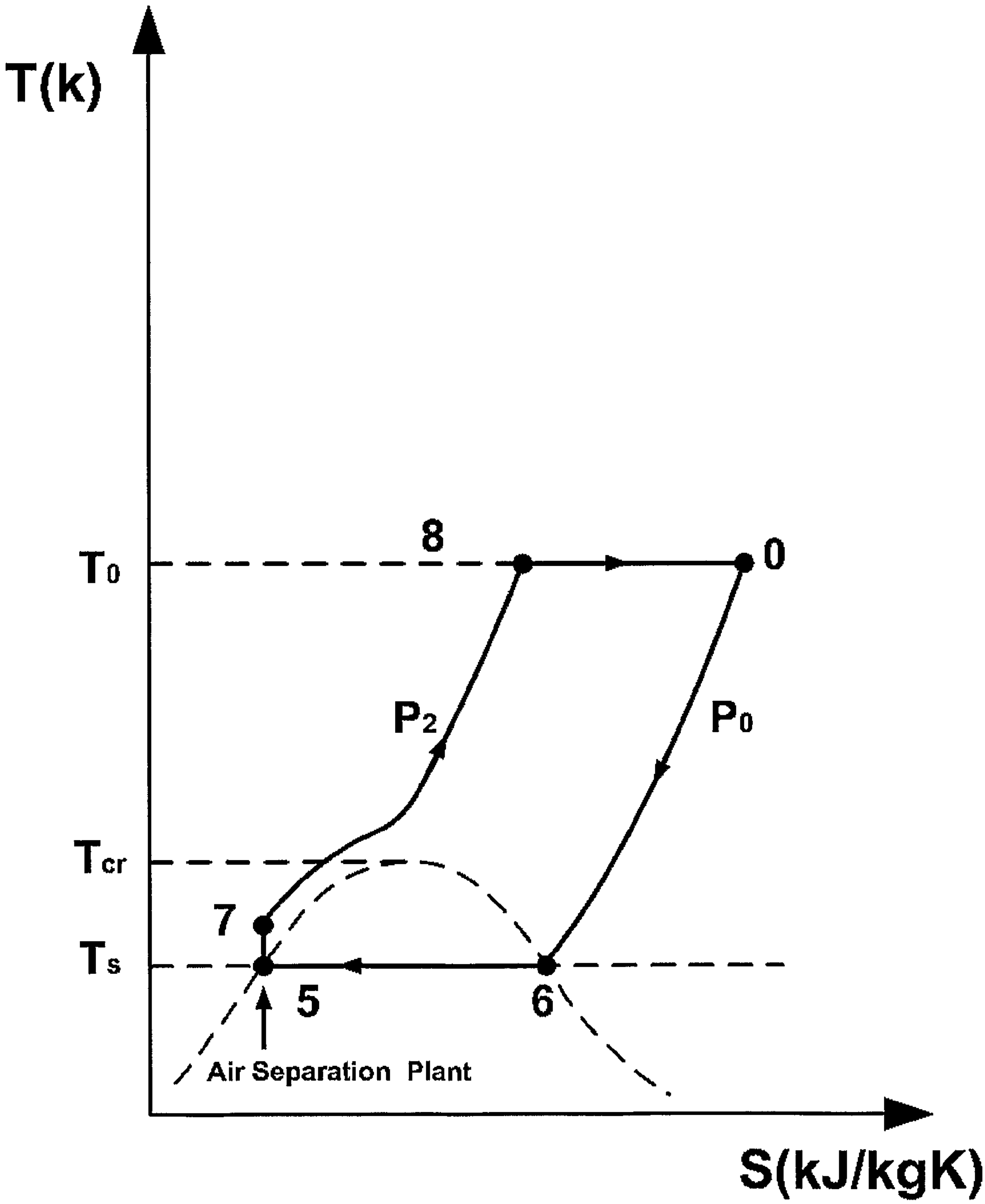

FIG. 6

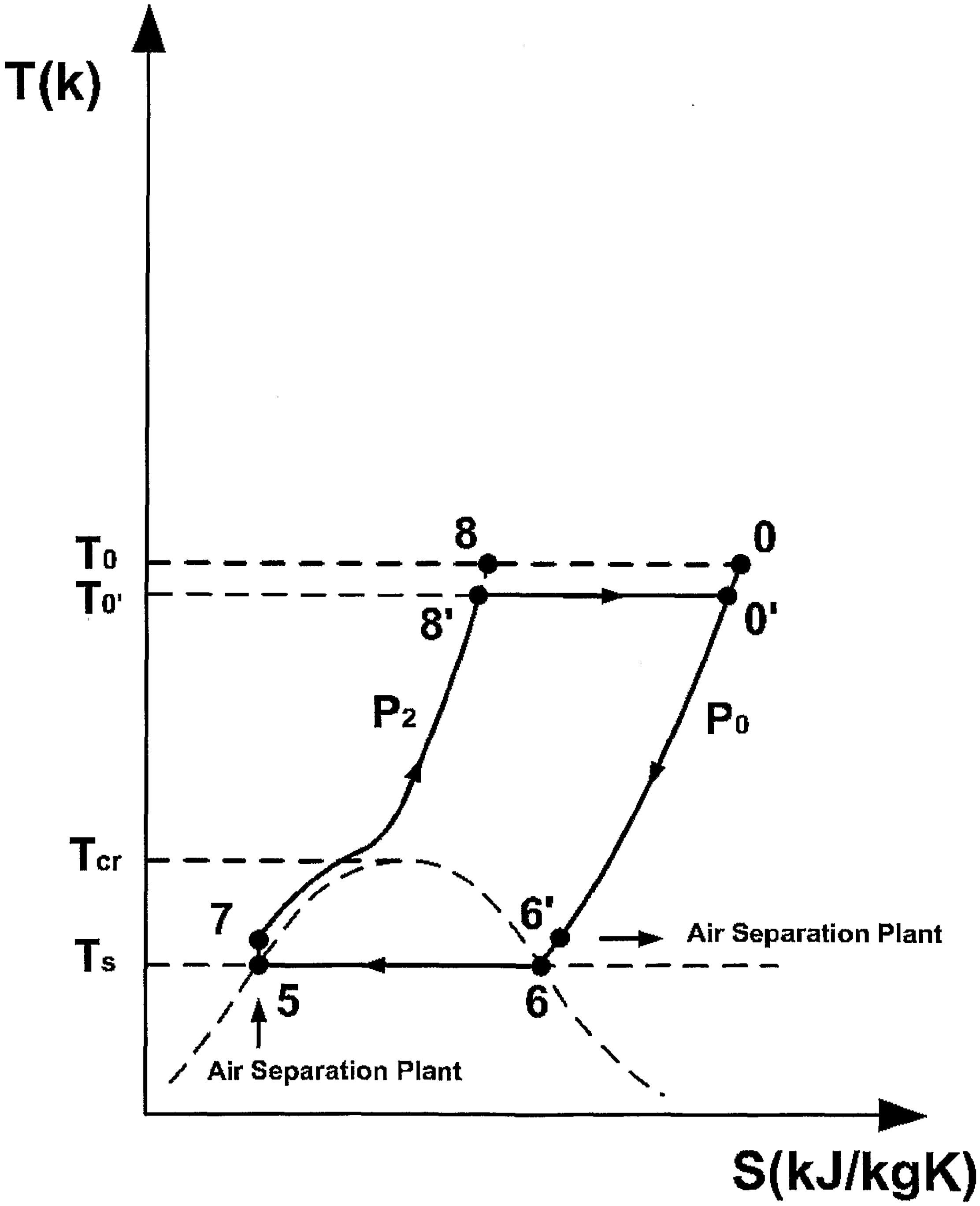
T(k)
T0
T0'
Tcr
Ts
8
0
8'
0'
P2
P0
7
6'
5
6
Air Separation Plant
Air Separation Plant
S(kJ/kgK)

FIG. 7

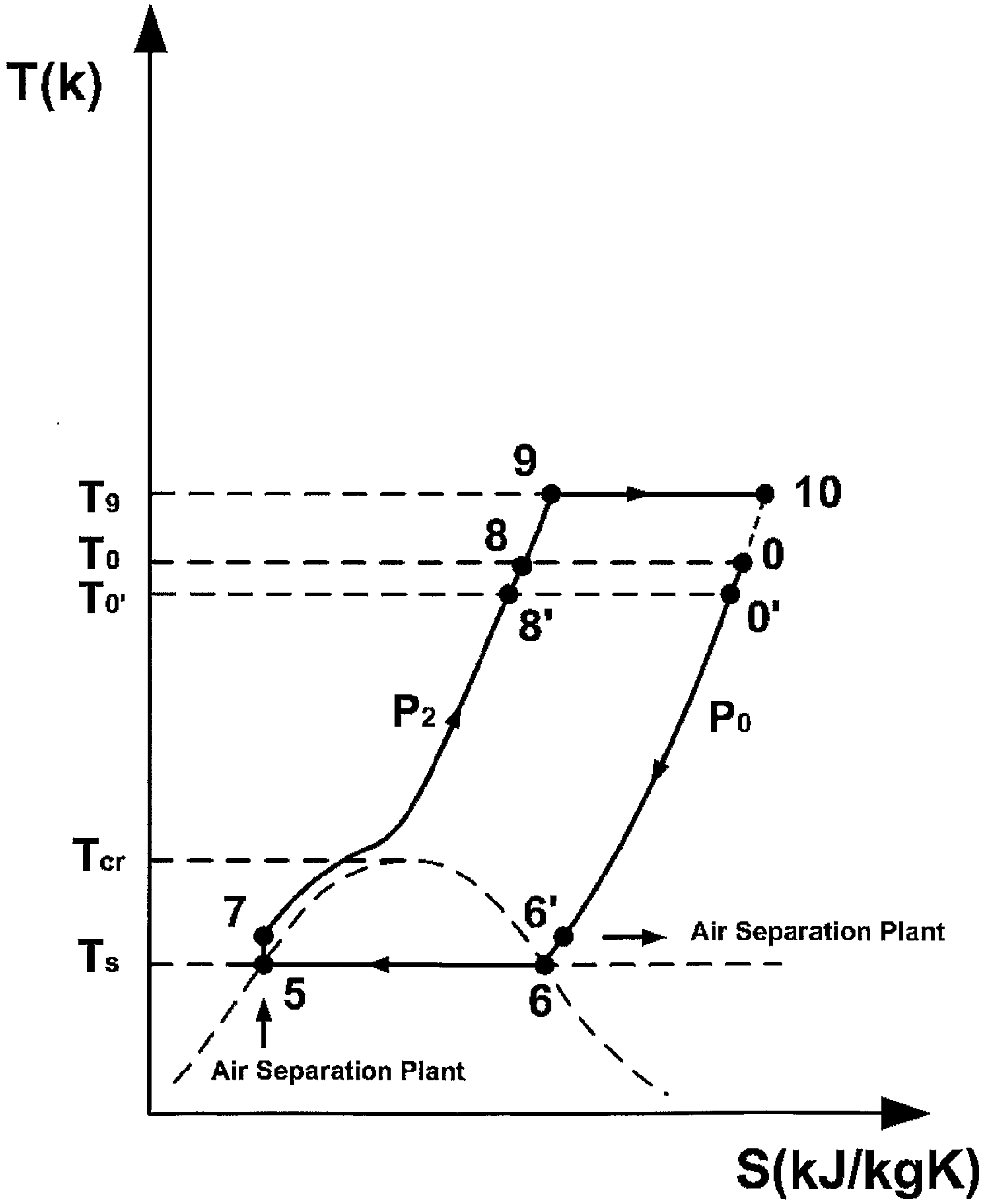
T(k)
T9
T0
T0'
Tcr
Ts
9
10
8
0
8'
0'
P2
P0
7
6'
Air Separation Plant
5
6
Air Separation Plant
S(kJ/kgK)

*FIG. 8*

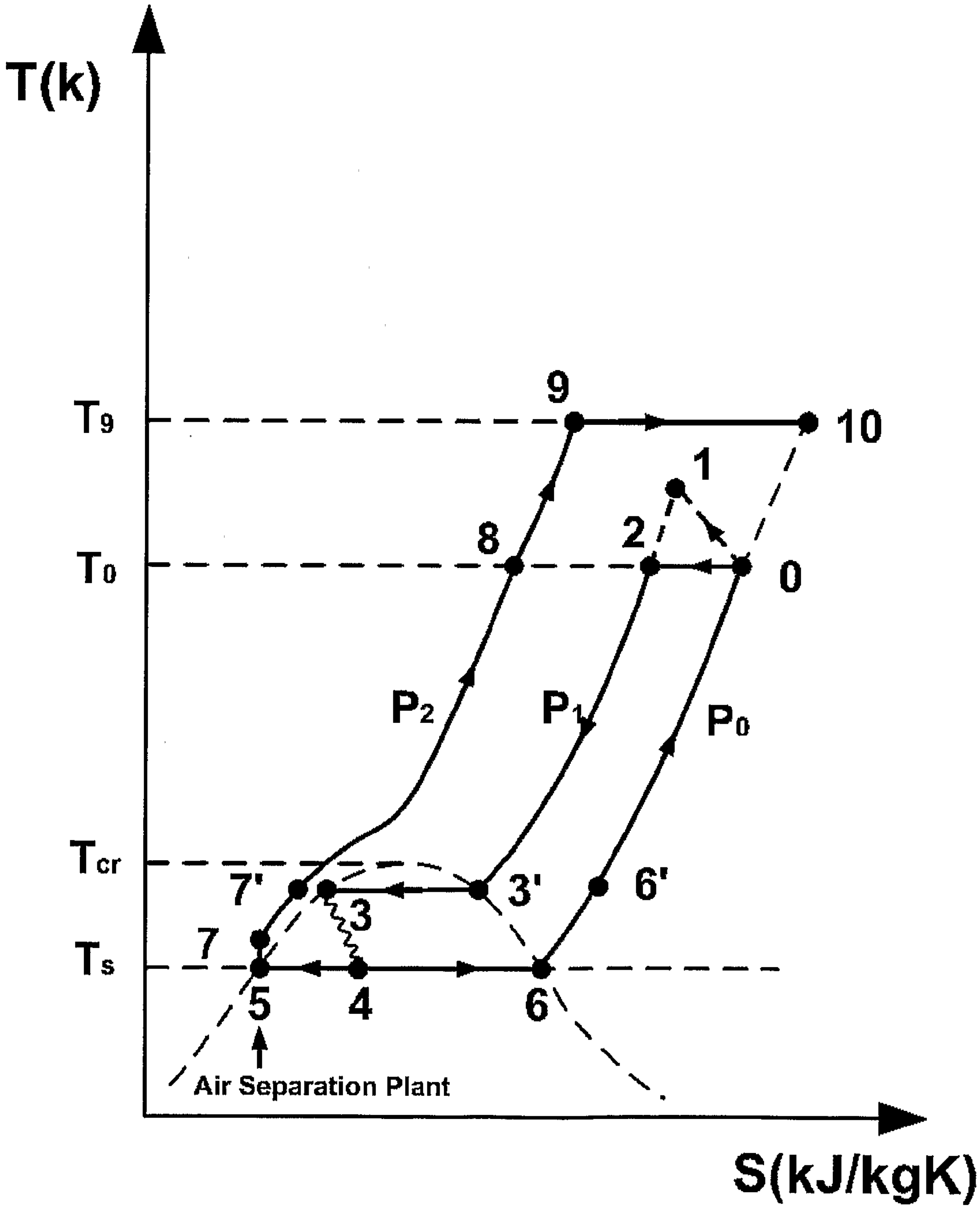
T(k)
T9
T0
Tcr
Ts
9
10
1
2
8
0
P2
P1
P0
7'
3'
6'
3
7
5
4
6
Air Separation Plant
S(kJ/kgK)

FIG. 9

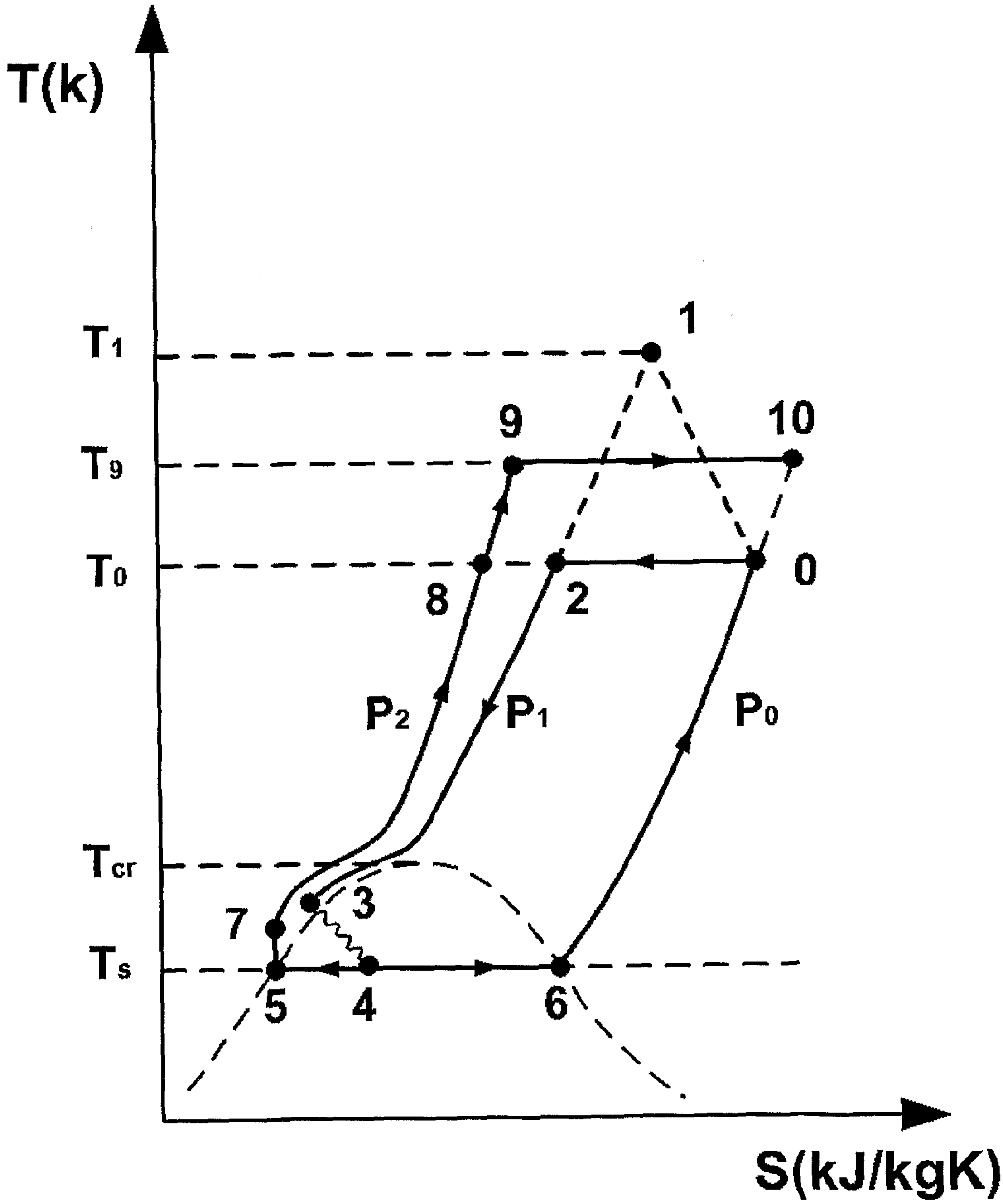

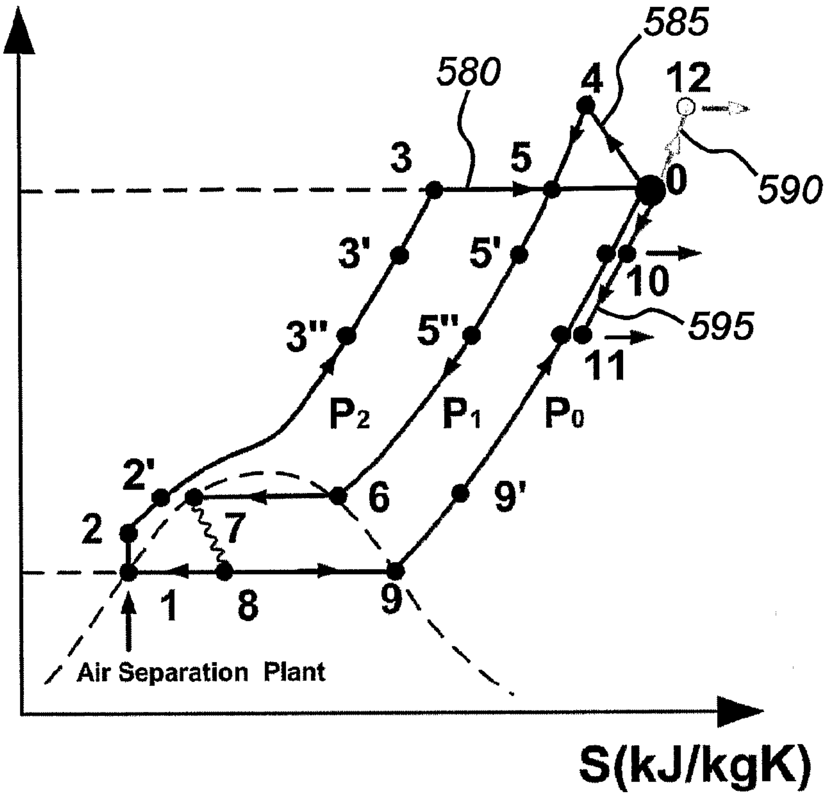


FIG. 10a

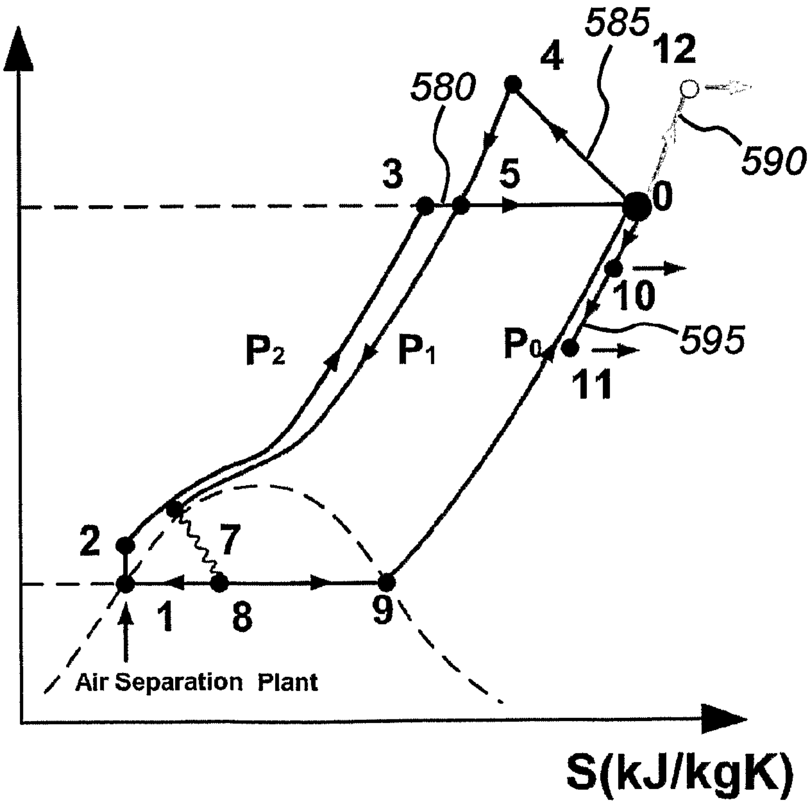


FIG. 10b

FIG. 11

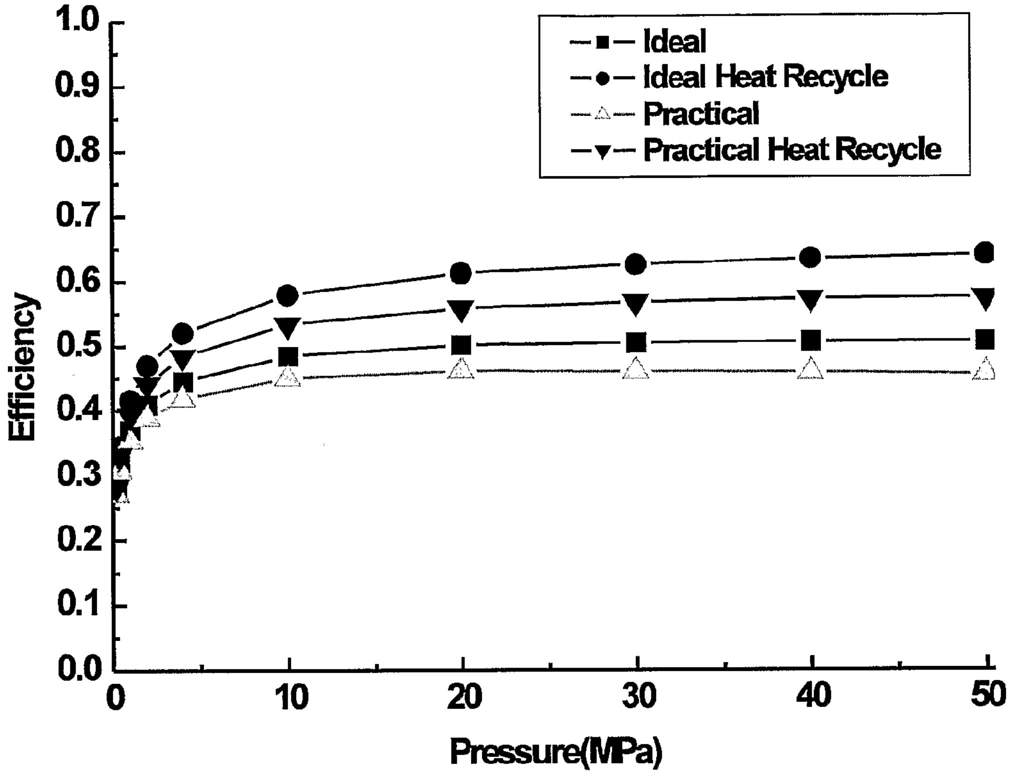
Ideal
Ideal Heat Recycle
Practical
Practical Heat Recycle
Efficiency
1.0
0.9
0.8
0.7
0.6
0.5
0.4
0.3
0.2
0.1
0.0
0
10
20
30
40
50
Pressure(MPa)

FIG. 12

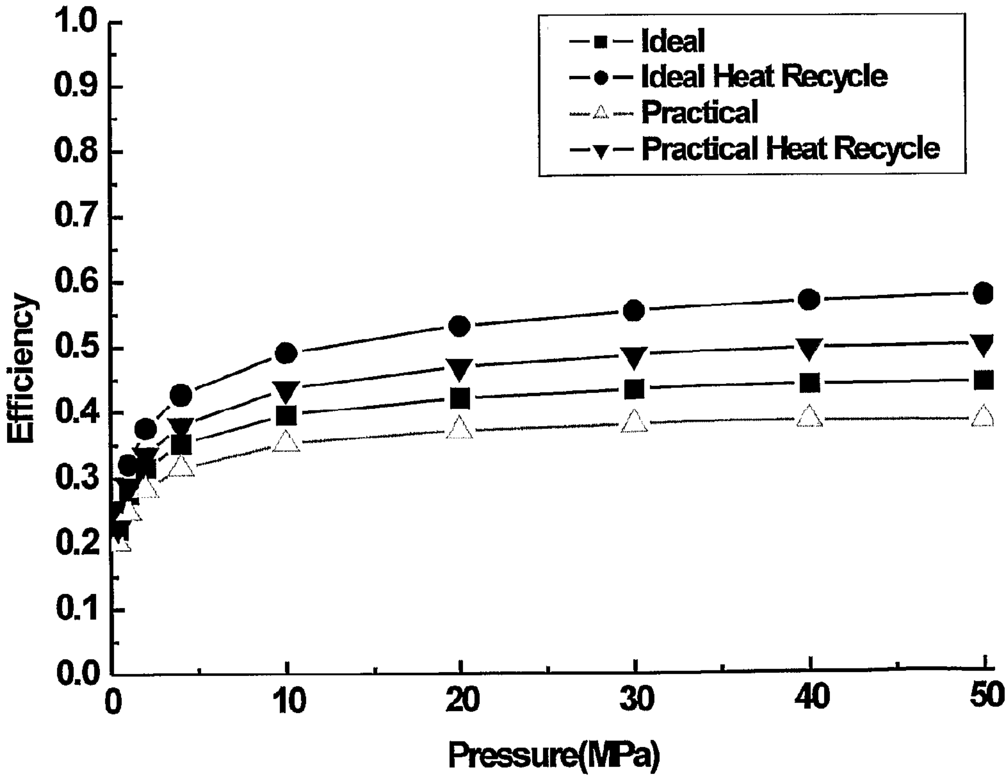
Ideal
Ideal Heat Recycle
Practical
Practical Heat Recycle
Efficiency
1.0
0.9
0.8
0.7
0.6
0.5
0.4
0.3
0.2
0.1
0.0
0
10
20
30
40
50
Pressure(MPa)

FIG. 13

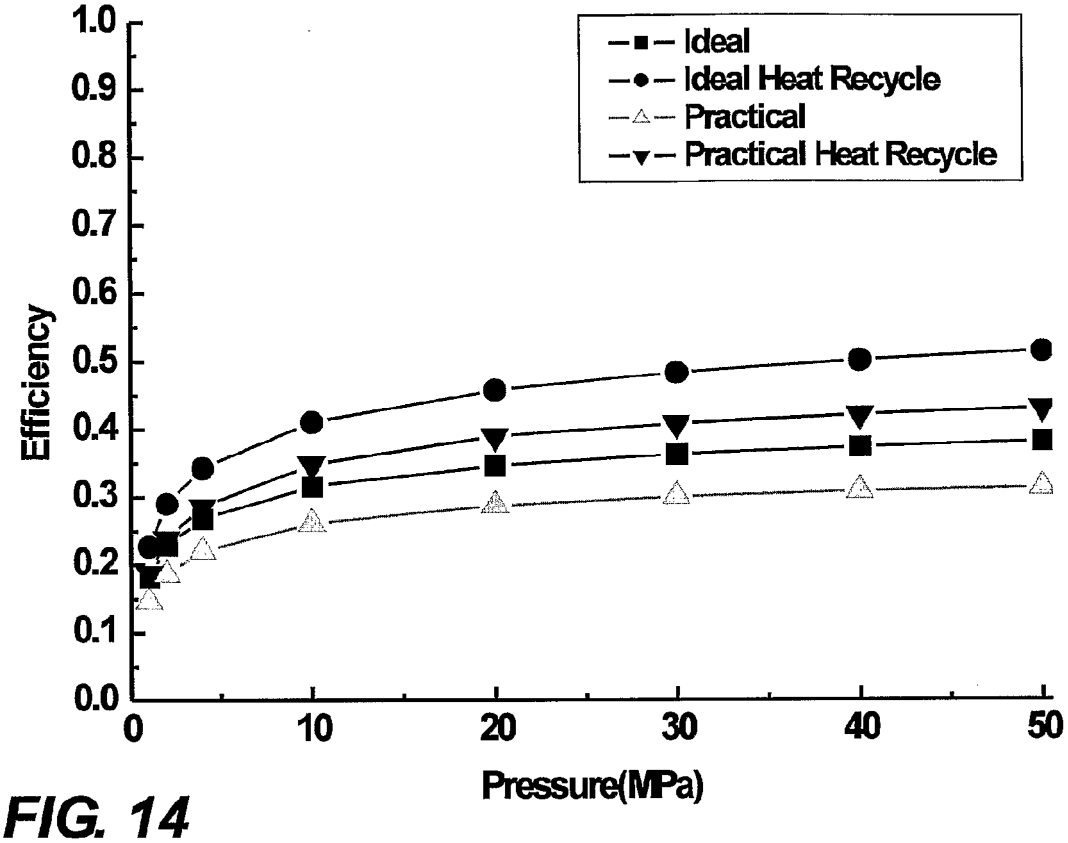
1.0
0.9
0.8
0.7
0.6
0.5
0.4
0.3
0.2
0.1
0.0
Efficiency
0
10
20
30
40
50
Pressure(MPa)
Ideal
Ideal Heat Recycle
Practical
Practical Heat Recycle

FIG. 14

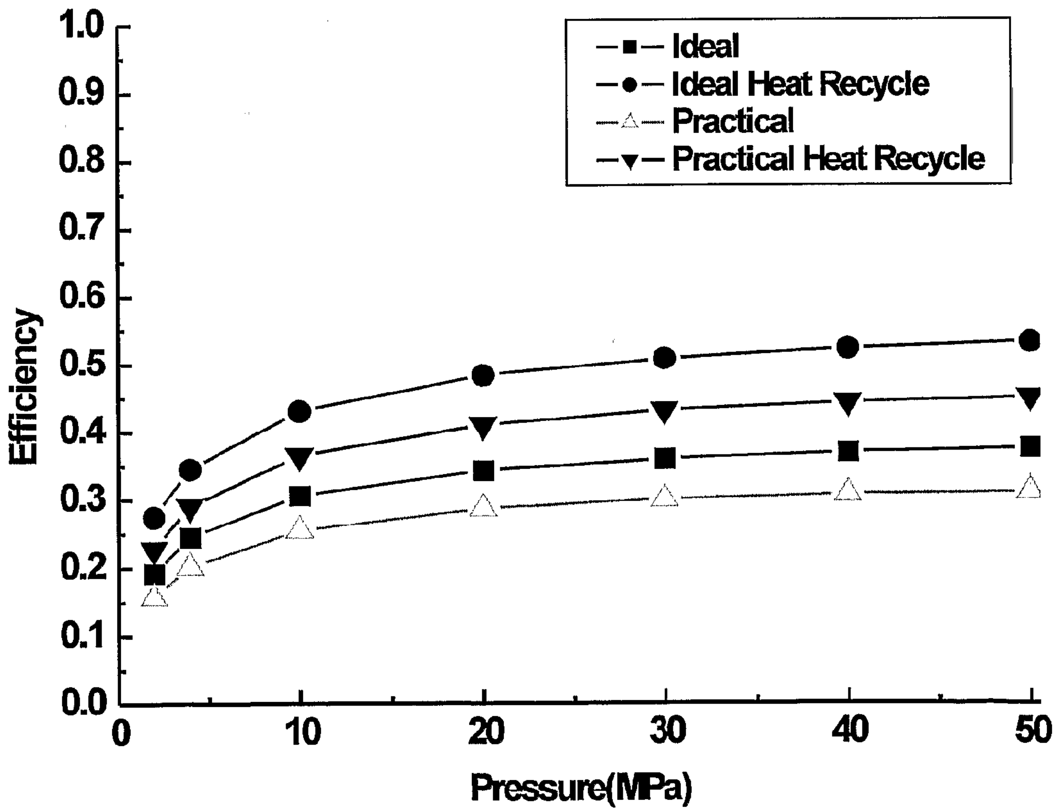
1.0
0.9
0.8
0.7
0.6
0.5
0.4
0.3
0.2
0.1
0.0
Efficiency
0
10
20
30
40
50
Pressure(MPa)
Ideal
Ideal Heat Recycle
Practical
Practical Heat Recycle

FIG. 15

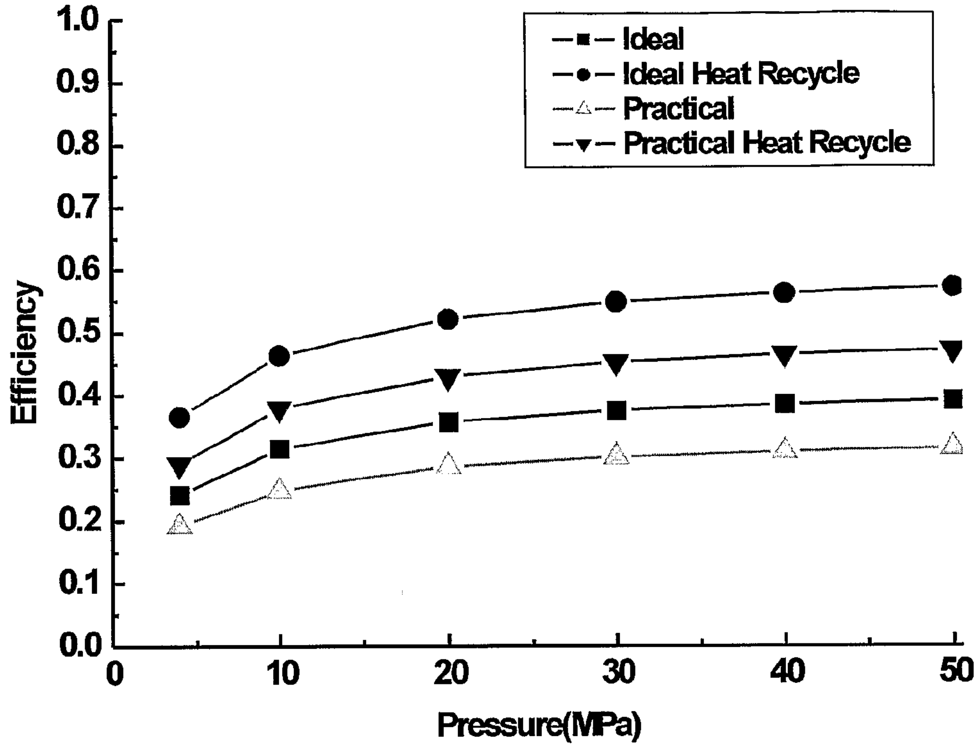
Ideal
Ideal Heat Recycle
Practical
Practical Heat Recycle
Efficiency
1.0
0.9
0.8
0.7
0.6
0.5
0.4
0.3
0.2
0.1
0.0
0
10
20
30
40
50
Pressure(MPa)

FIG. 16

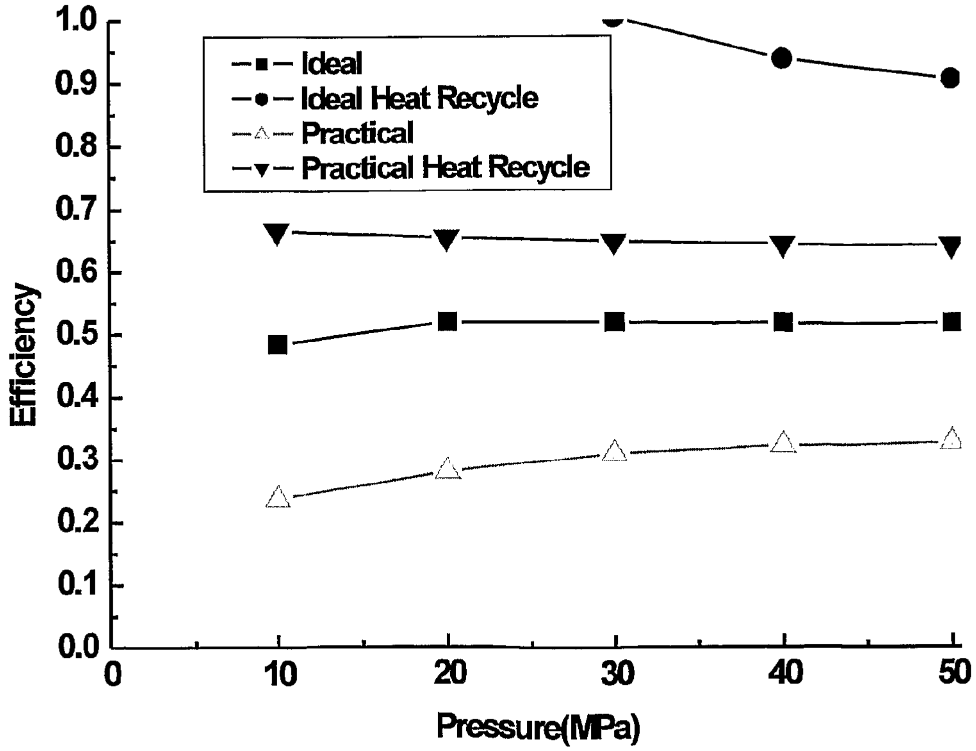
Ideal
Ideal Heat Recycle
Practical
Practical Heat Recycle
Efficiency
1.0
0.9
0.8
0.7
0.6
0.5
0.4
0.3
0.2
0.1
0.0
0
10
20
30
40
50
Pressure(MPa)

FIG. 17

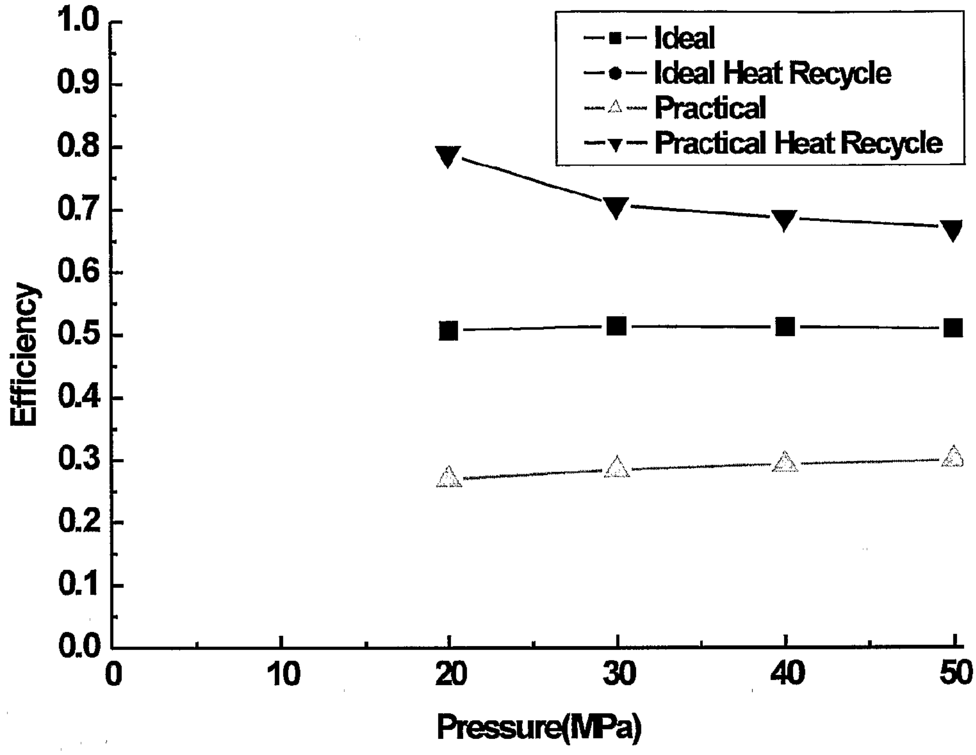
Ideal
Ideal Heat Recycle
Practical
Practical Heat Recycle
Efficiency
1.0
0.9
0.8
0.7
0.6
0.5
0.4
0.3
0.2
0.1
0.0
0
10
20
30
40
50
Pressure(MPa)

FIG. 18

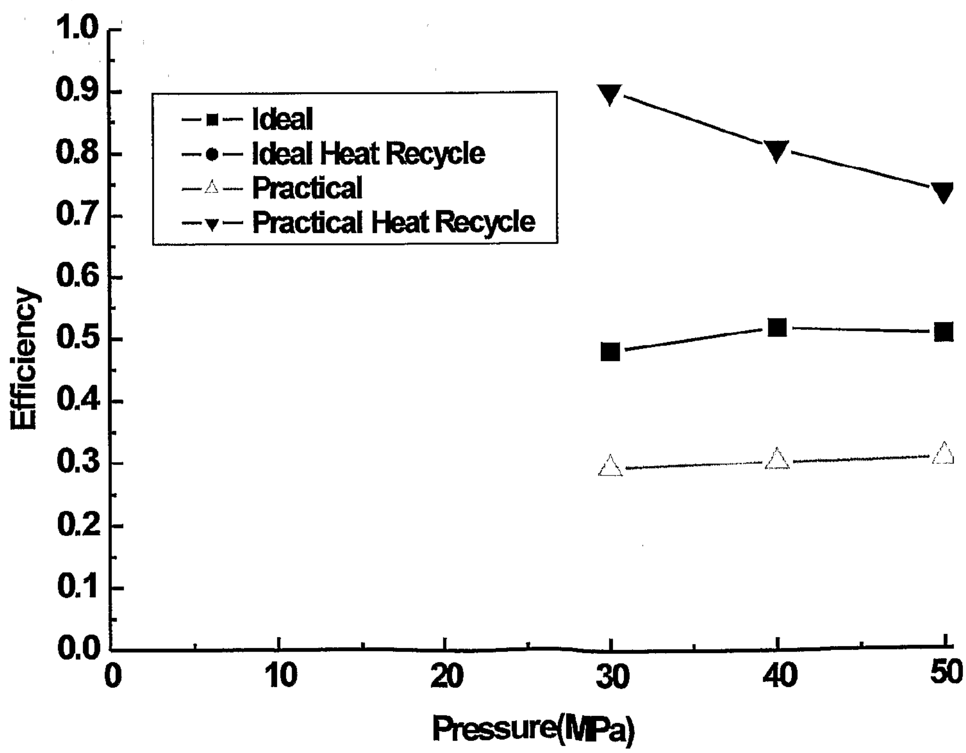
Ideal
Ideal Heat Recycle
Practical
Practical Heat Recycle
Efficiency
1.0
0.9
0.8
0.7
0.6
0.5
0.4
0.3
0.2
0.1
0.0
0
10
20
30
40
50
Pressure(MPa)

FIG. 19

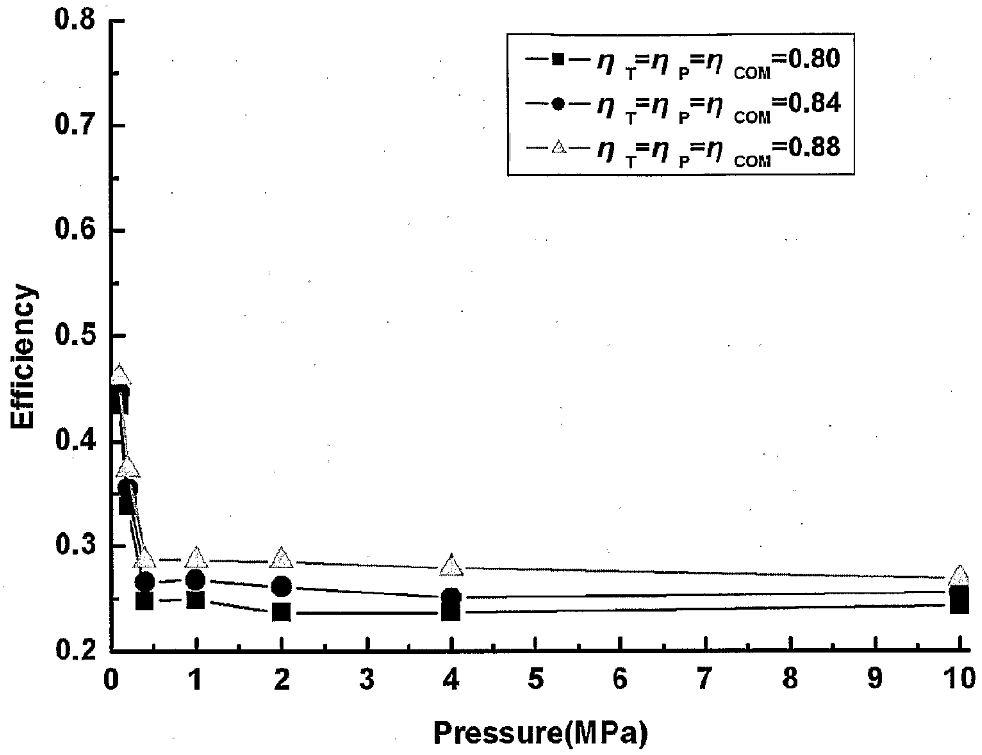

—■— $\eta_T=\eta_P=\eta_{COM}=0.80$
—●— $\eta_T=\eta_P=\eta_{COM}=0.84$
—△— $\eta_T=\eta_P=\eta_{COM}=0.88$
Efficiency
0.8
0.7
0.6
0.5
0.4
0.3
0.2
0
1
2
3
4
5
6
7
8
9
10
Pressure(MPa)


FIG. 20

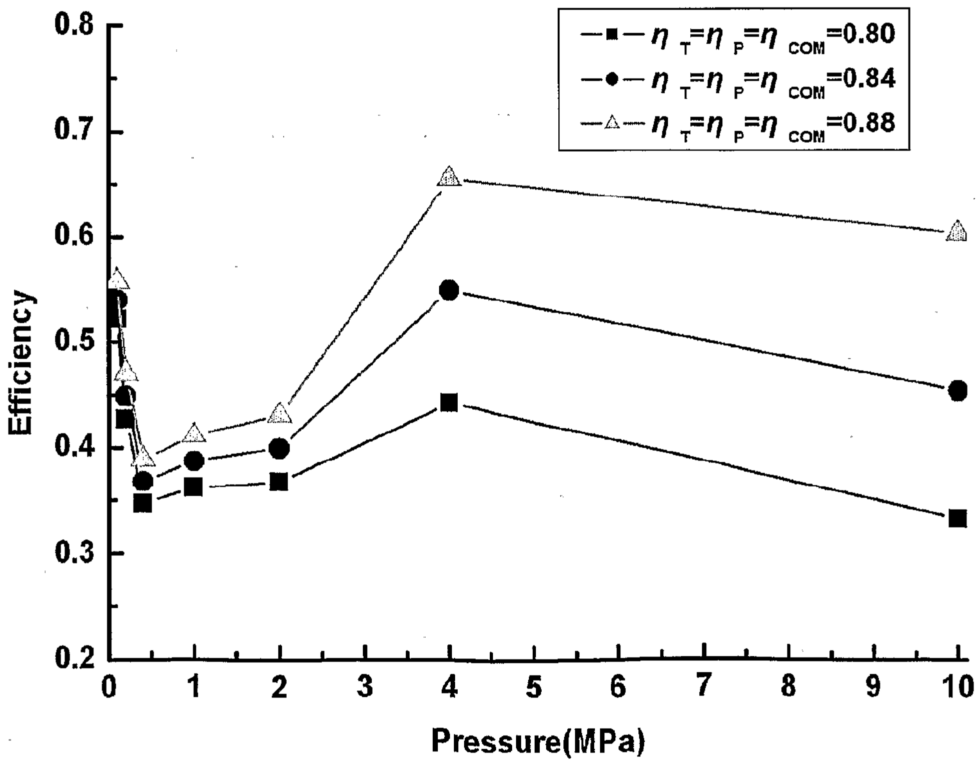

—■— $\eta_T=\eta_P=\eta_{COM}=0.80$
—●— $\eta_T=\eta_P=\eta_{COM}=0.84$
—△— $\eta_T=\eta_P=\eta_{COM}=0.88$
Efficiency
0.8
0.7
0.6
0.5
0.4
0.3
0.2
0
1
2
3
4
5
6
7
8
9
10
Pressure(MPa)

FIG. 21

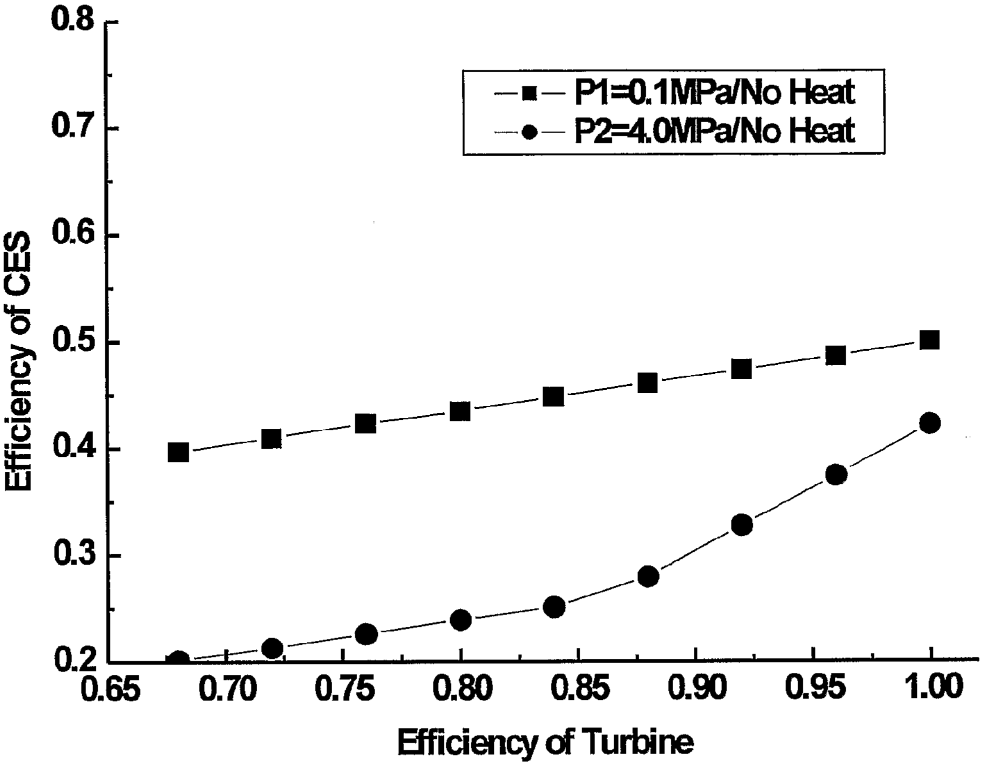
0.8
0.7
0.6
0.5
0.4
0.3
0.2
Efficiency of CES
P1=0.1MPa/No Heat
P2=4.0MPa/No Heat
0.65
0.70
0.75
0.80
0.85
0.90
0.95
1.00
Efficiency of Turbine

FIG. 22

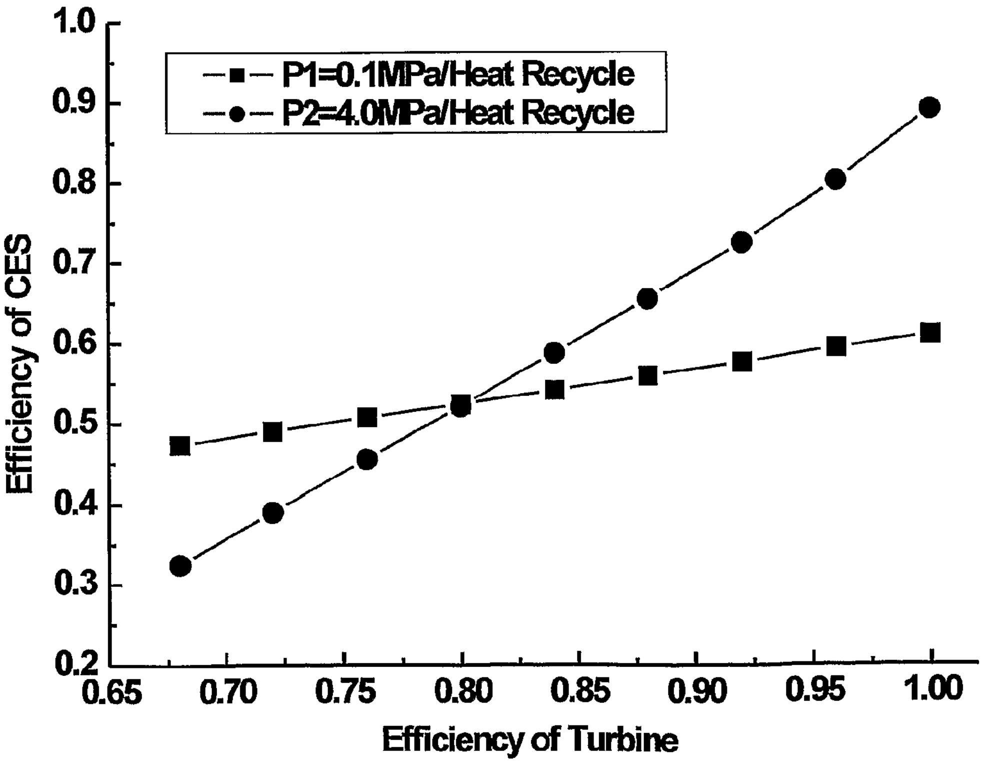
1.0
0.9
0.8
0.7
0.6
0.5
0.4
0.3
0.2
Efficiency of CES
P1=0.1MPa/Heat Recycle
P2=4.0MPa/Heat Recycle
0.65
0.70
0.75
0.80
0.85
0.90
0.95
1.00
Efficiency of Turbine

FIG. 23

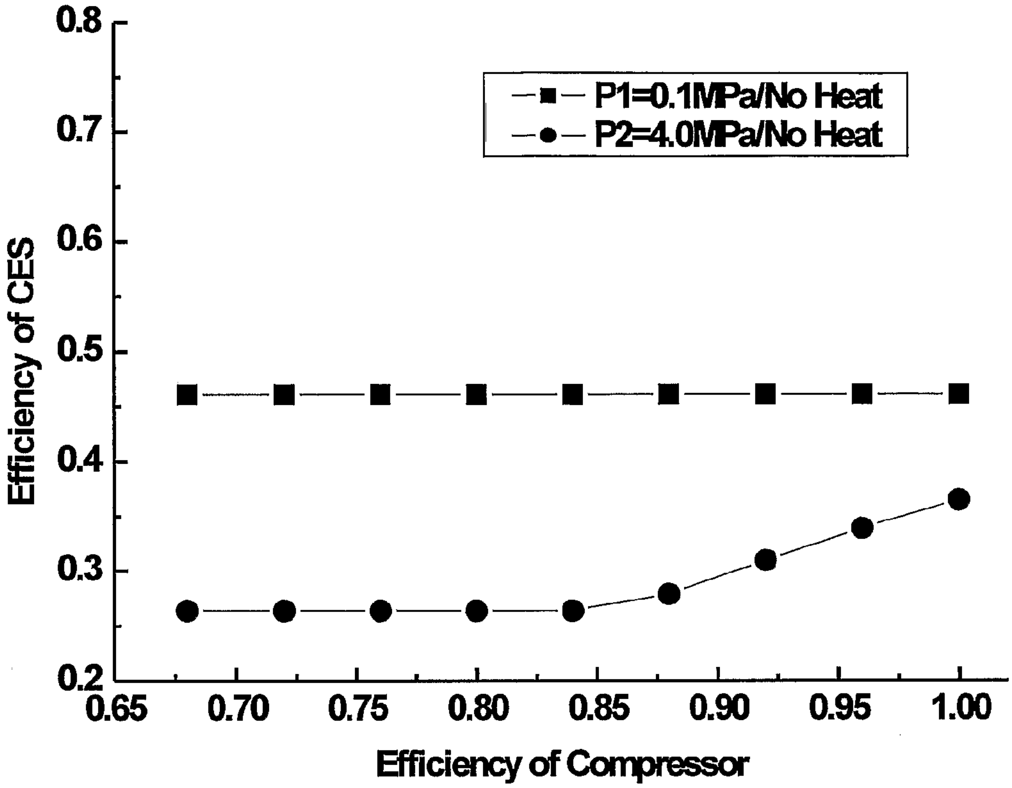
P1=0.1MPa/No Heat
P2=4.0MPa/No Heat
Efficiency of CES
0.8
0.7
0.6
0.5
0.4
0.3
0.2
0.65
0.70
0.75
0.80
0.85
0.90
0.95
1.00
Efficiency of Compressor

FIG. 24

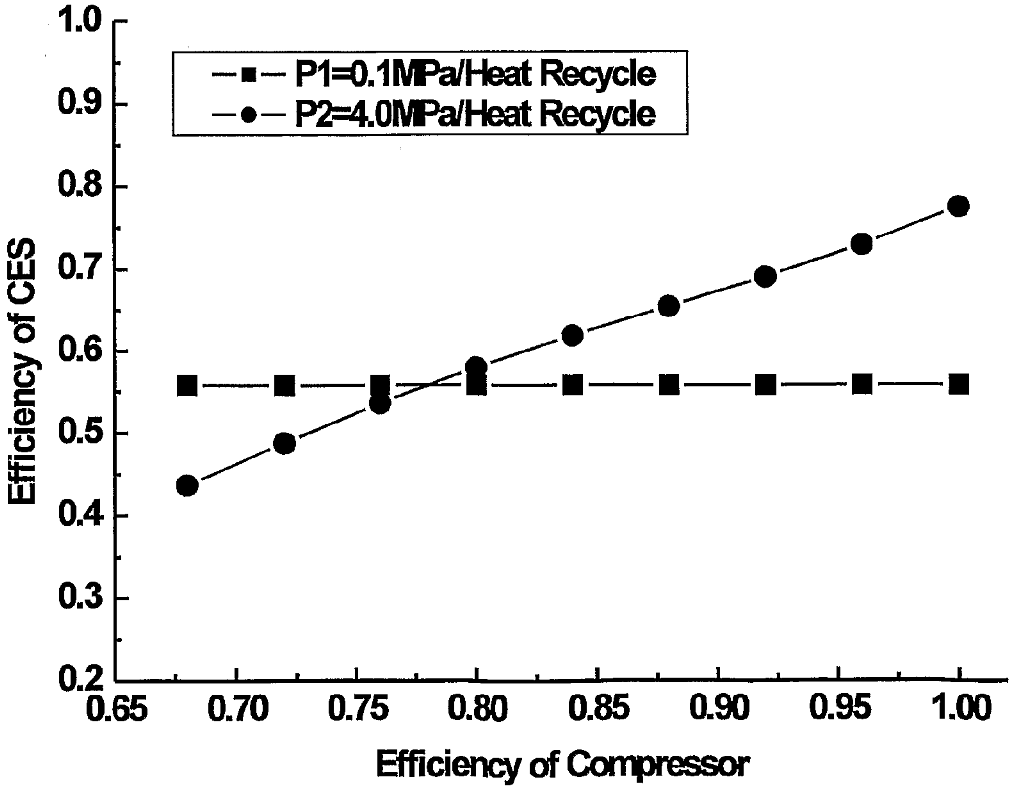
P1=0.1MPa/Heat Recycle
P2=4.0MPa/Heat Recycle
Efficiency of CES
1.0
0.9
0.8
0.7
0.6
0.5
0.4
0.3
0.2
0.65
0.70
0.75
0.80
0.85
0.90
0.95
1.00
Efficiency of Compressor

FIG. 25

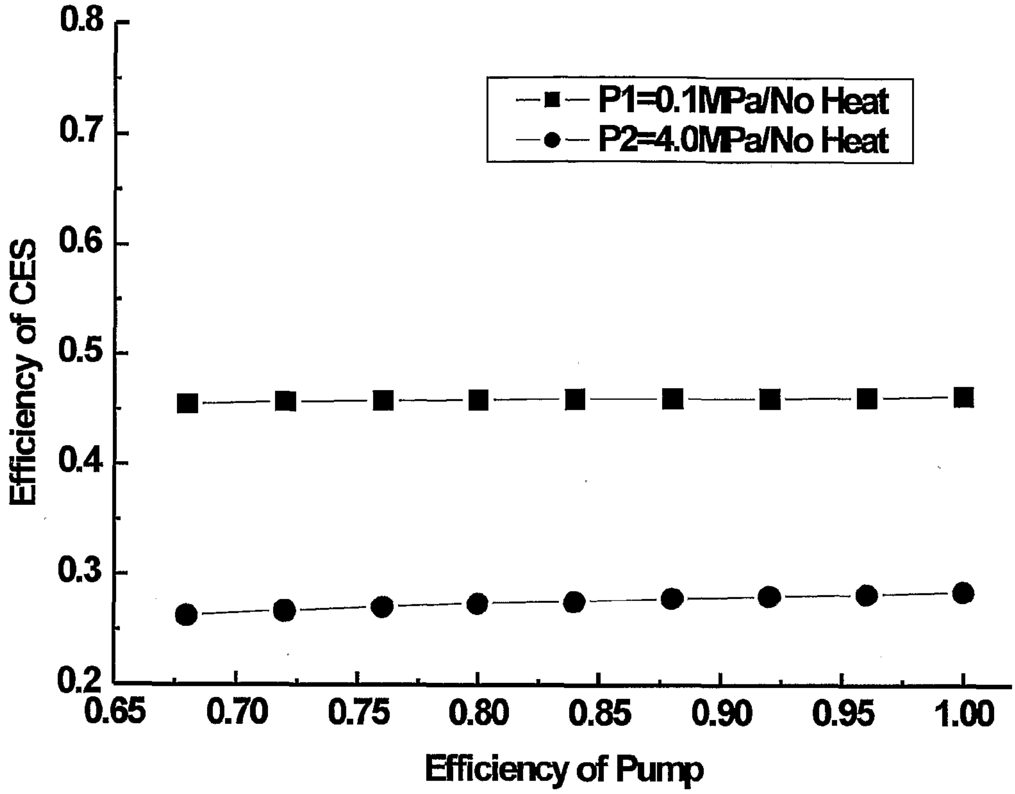
0.8
0.7
0.6
0.5
0.4
0.3
0.2
Efficiency of CES
—■— P1=0.1MPa/No Heat
—●— P2=4.0MPa/No Heat
0.65
0.70
0.75
0.80
0.85
0.90
0.95
1.00
Efficiency of Pump

FIG. 26

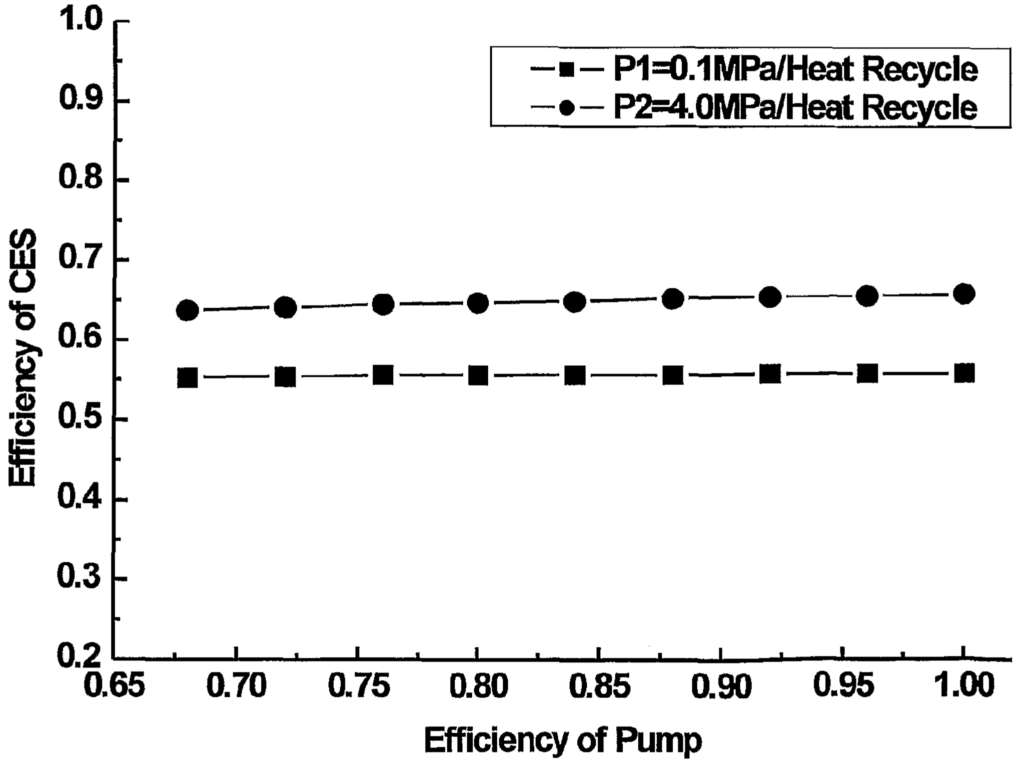
1.0
0.9
0.8
0.7
0.6
0.5
0.4
0.3
0.2
Efficiency of CES
—■— P1=0.1MPa/Heat Recycle
—●— P2=4.0MPa/Heat Recycle
0.65
0.70
0.75
0.80
0.85
0.90
0.95
1.00
Efficiency of Pump

FIG. 27

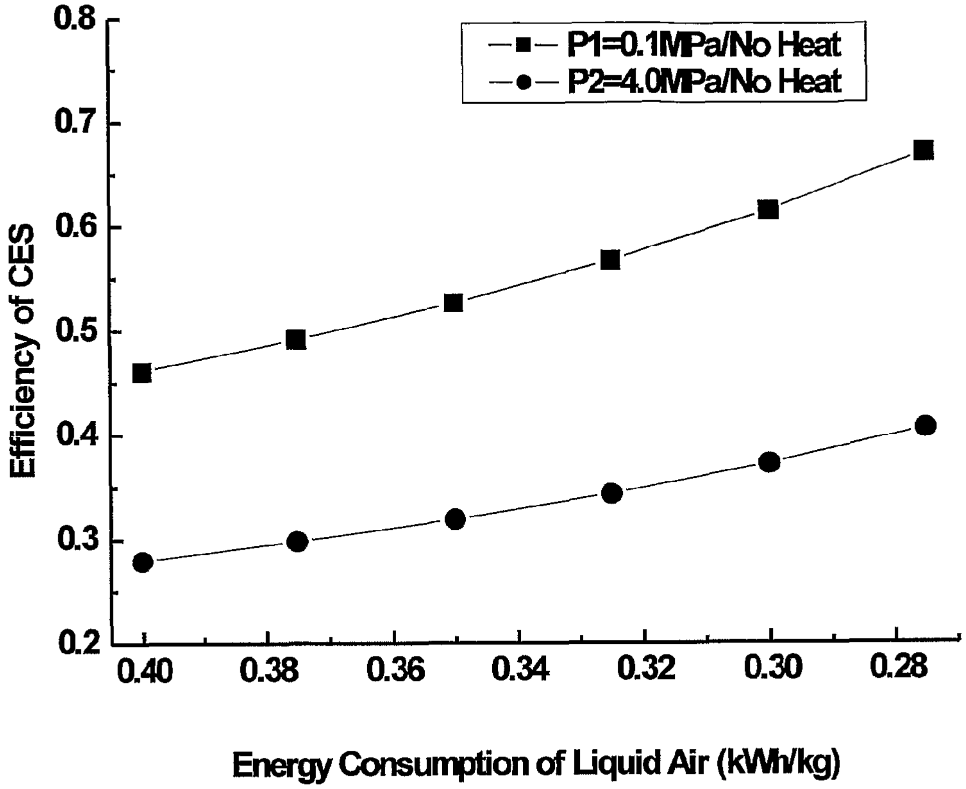
—■— P1=0.1MPa/No Heat
—●— P2=4.0MPa/No Heat
Efficiency of CES
0.8
0.7
0.6
0.5
0.4
0.3
0.2
0.40
0.38
0.36
0.34
0.32
0.30
0.28
Energy Consumption of Liquid Air (kWh/kg)

FIG. 28

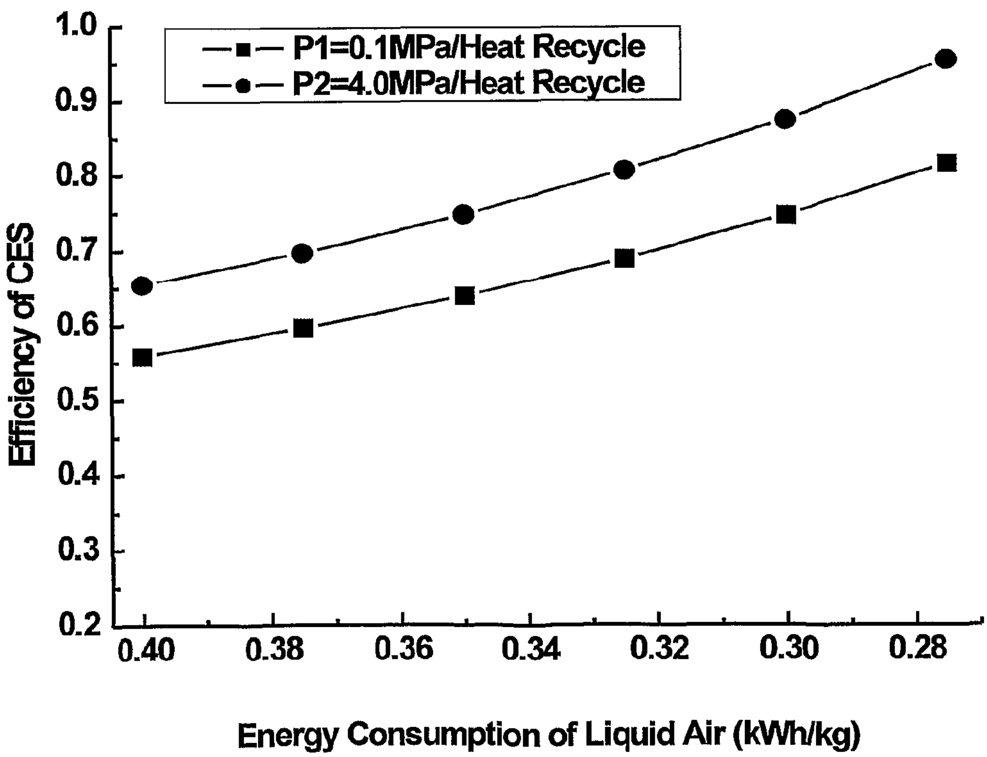
—■— P1=0.1MPa/Heat Recycle
—●— P2=4.0MPa/Heat Recycle
Efficiency of CES
1.0
0.9
0.8
0.7
0.6
0.5
0.4
0.3
0.2
0.40
0.38
0.36
0.34
0.32
0.30
0.28
Energy Consumption of Liquid Air (kWh/kg)

FIG. 29

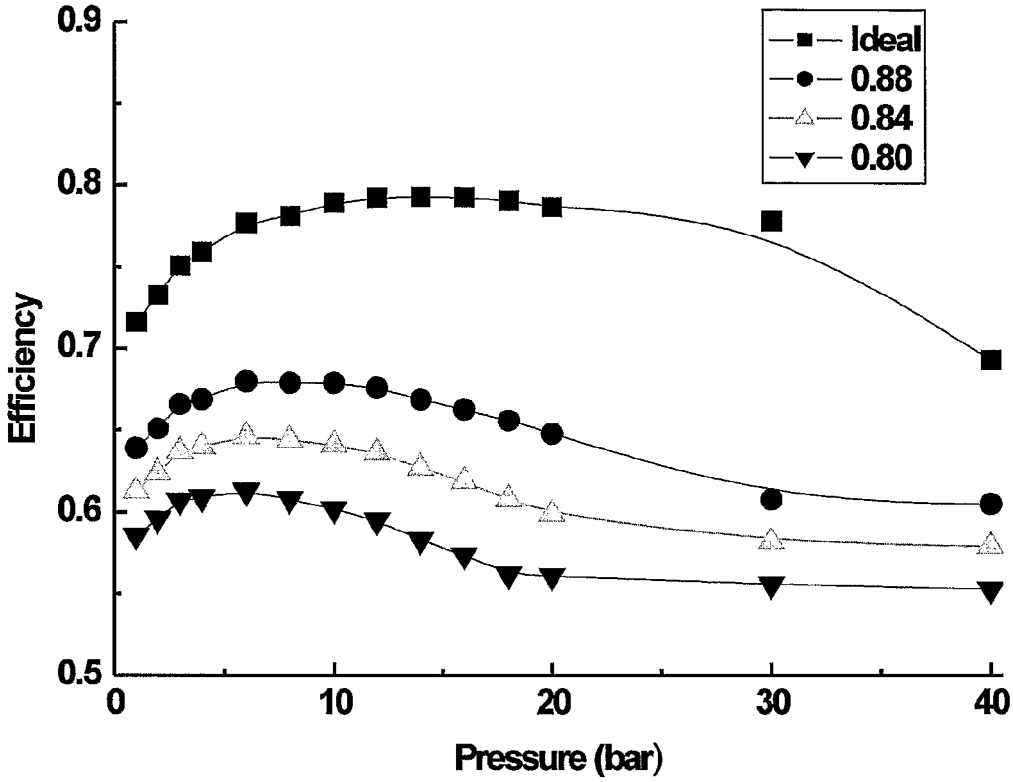
Ideal
0.88
0.84
0.80
Efficiency
0.9
0.8
0.7
0.6
0.5
0
10
20
30
40
Pressure (bar)

FIG. 30

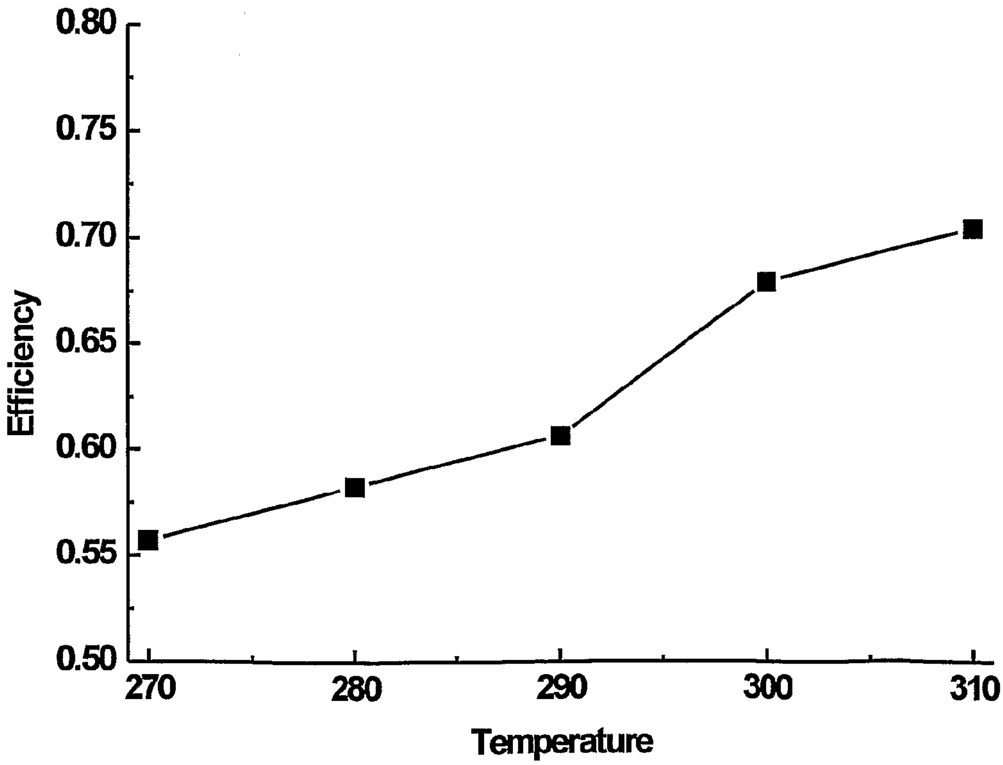
Efficiency
0.80
0.75
0.70
0.65
0.60
0.55
0.50
270
280
290
300
310
Temperature

FIG. 31

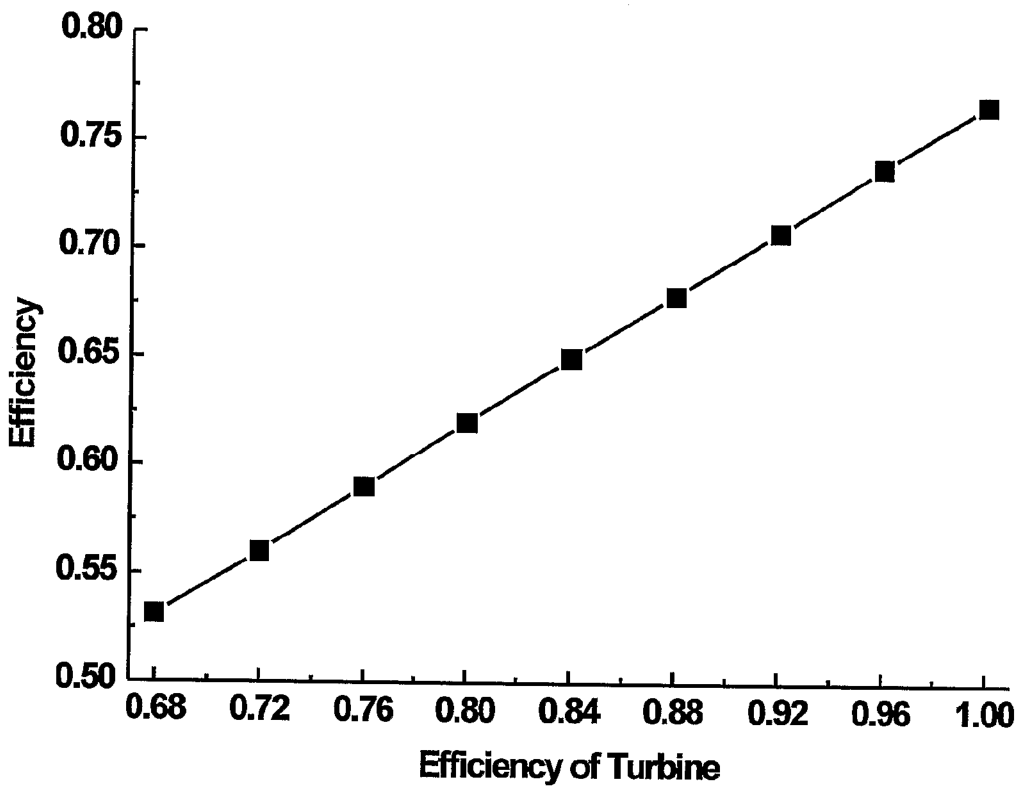
0.80
0.75
0.70
0.65
0.60
0.55
0.50
Efficiency
0.68
0.72
0.76
0.80
0.84
0.88
0.92
0.96
1.00
Efficiency of Turbine

FIG. 32

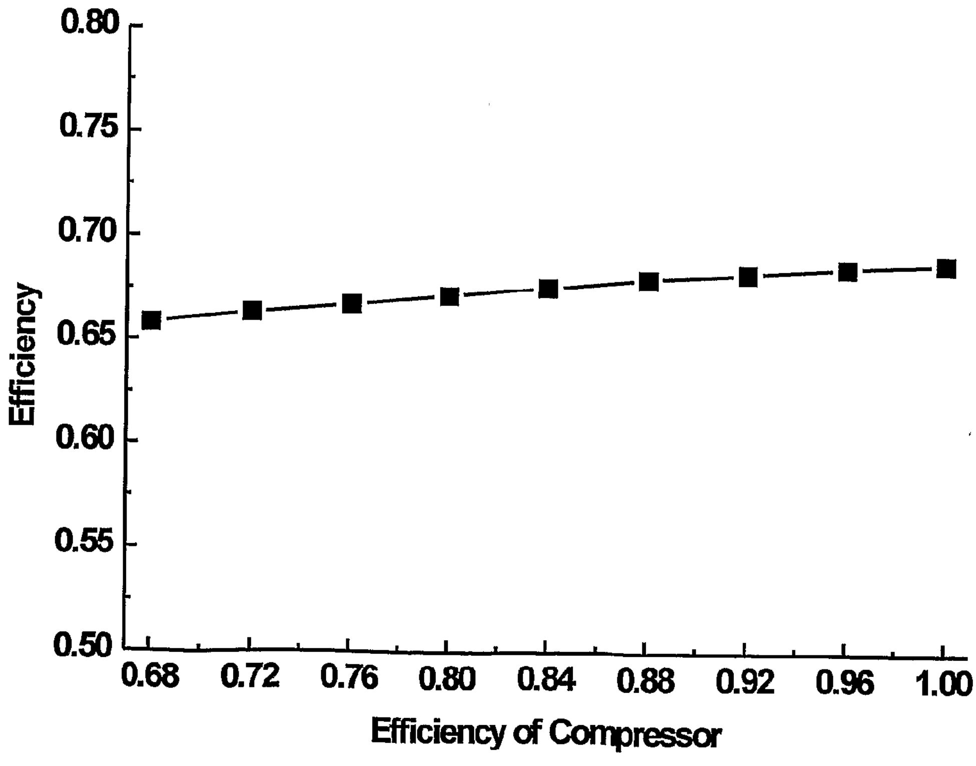
0.80
0.75
0.70
0.65
0.60
0.55
0.50
Efficiency
0.68
0.72
0.76
0.80
0.84
0.88
0.92
0.96
1.00
Efficiency of Compressor

FIG. 33

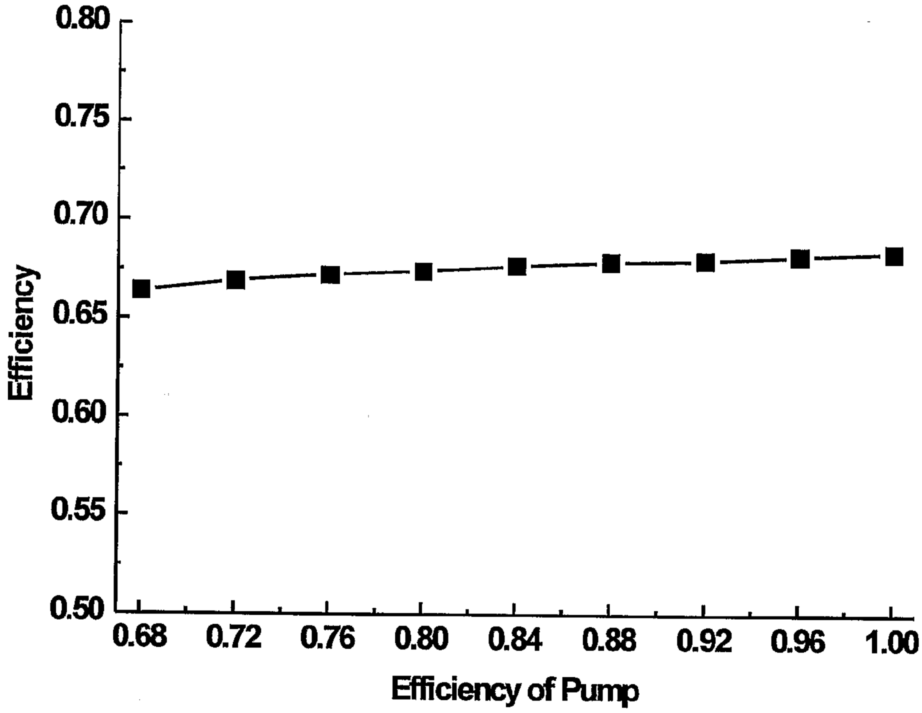
0.80
0.75
0.70
0.65
0.60
0.55
0.50
Efficiency
0.68
0.72
0.76
0.80
0.84
0.88
0.92
0.96
1.00
Efficiency of Pump

FIG. 34

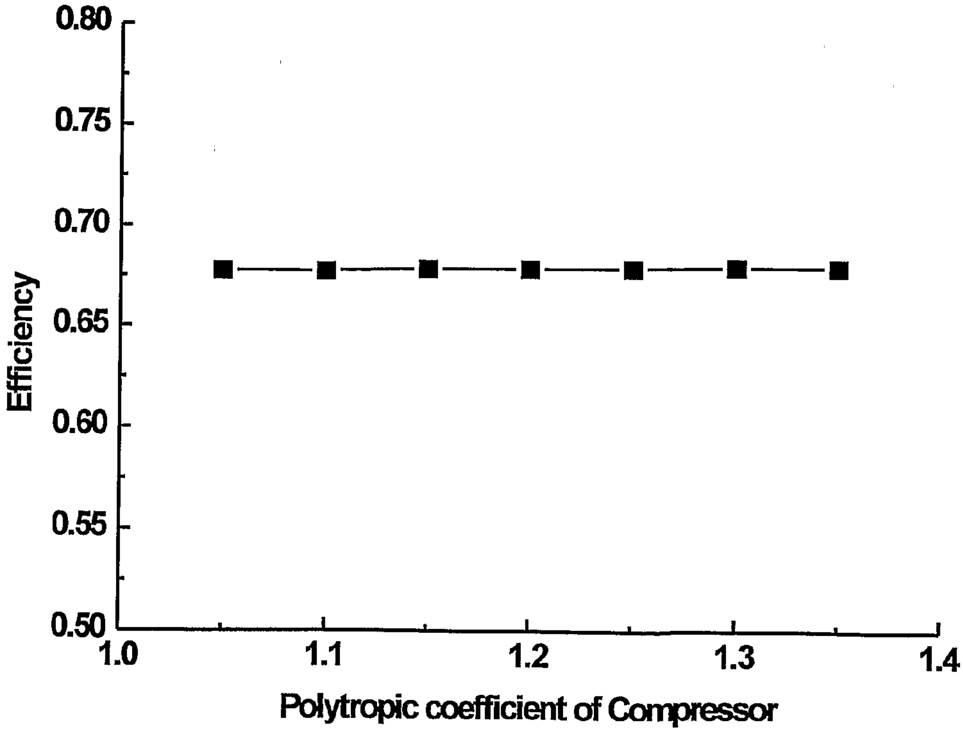
0.80
0.75
0.70
0.65
0.60
0.55
0.50
Efficiency
1.0
1.1
1.2
1.3
1.4
Polytropic coefficient of Compressor

FIG. 35

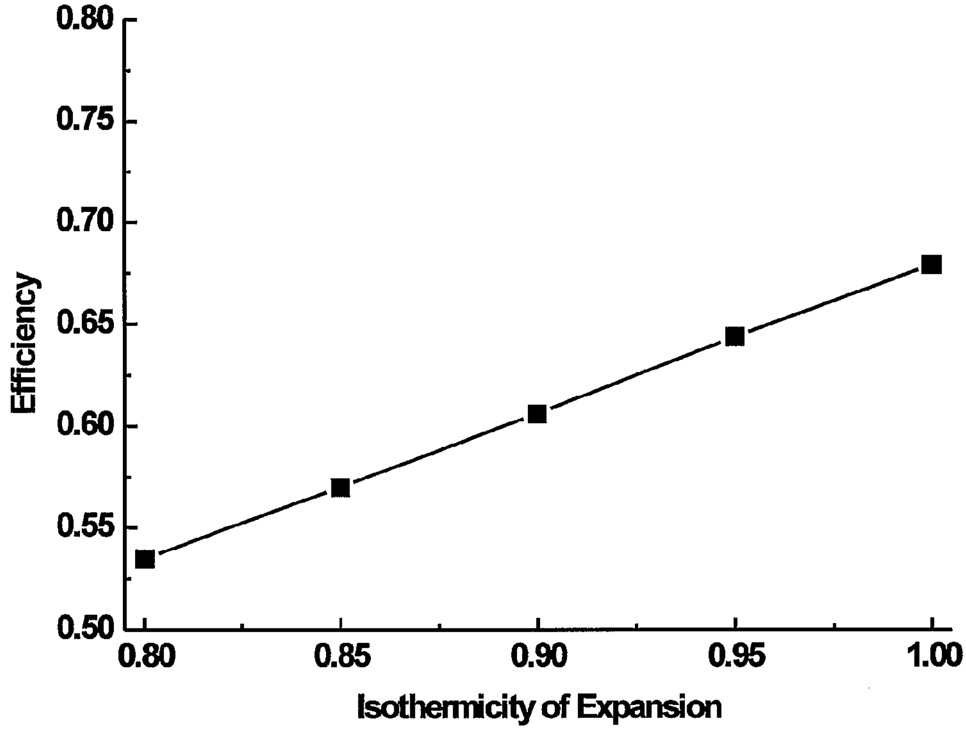
0.80
0.75
0.70
0.65
0.60
0.55
0.50
Efficiency
0.80
0.85
0.90
0.95
1.00
Isothermicity of Expansion

FIG. 36

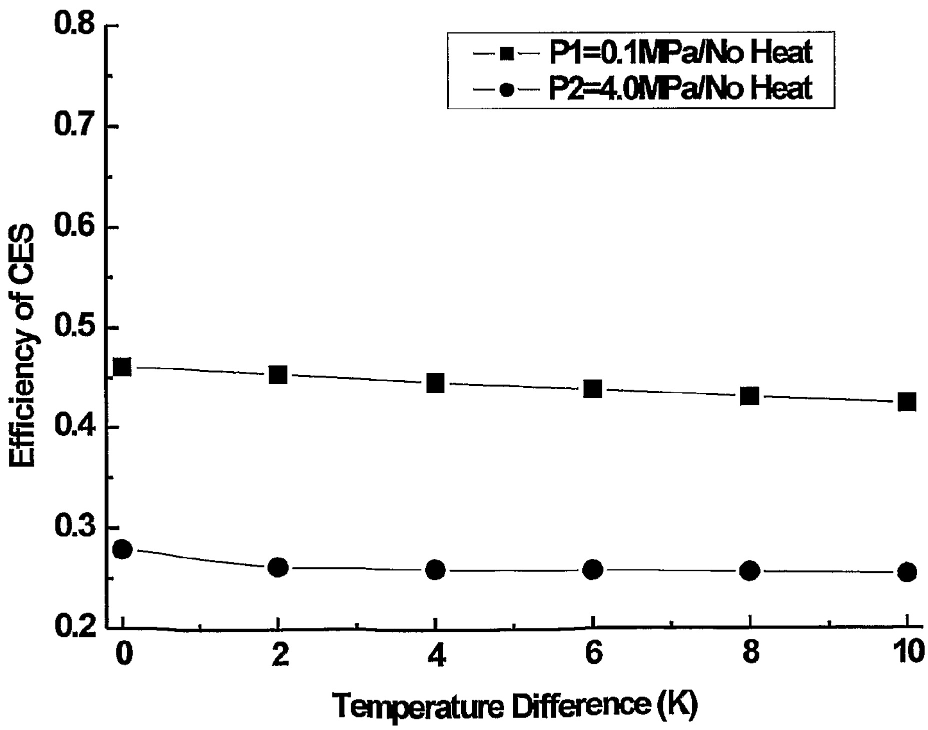
0.8
0.7
0.6
0.5
0.4
0.3
0.2
Efficiency of CES
P1=0.1MPa/No Heat
P2=4.0MPa/No Heat
0
2
4
6
8
10
Temperature Difference (K)

FIG. 37

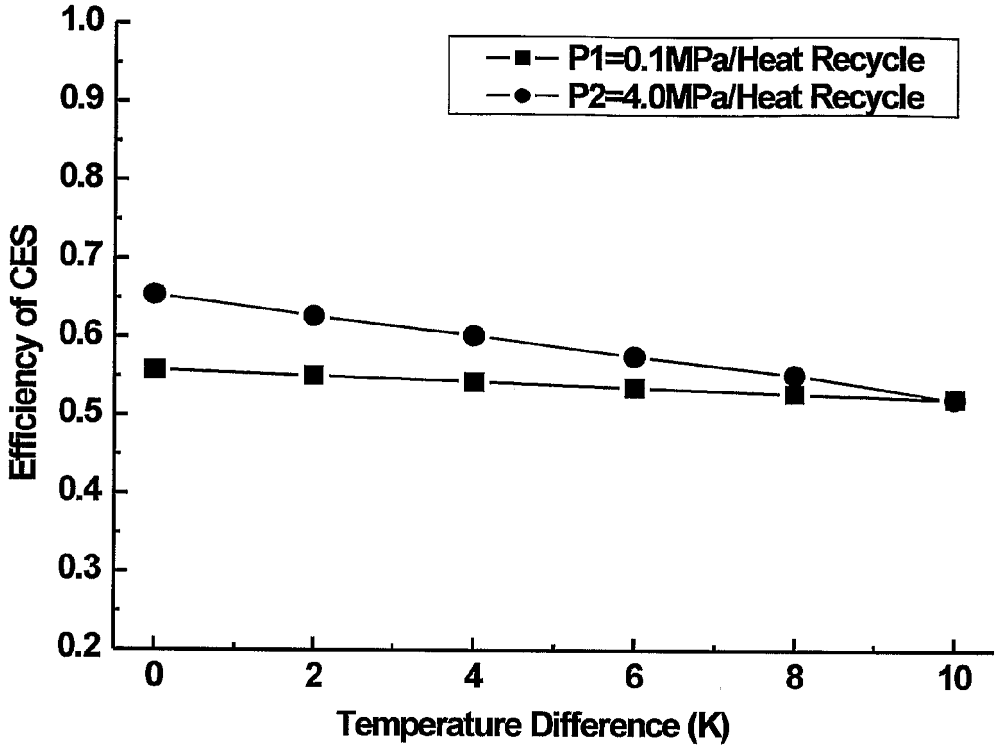
1.0
0.9
0.8
0.7
0.6
0.5
0.4
0.3
0.2
Efficiency of CES
P1=0.1MPa/Heat Recycle
P2=4.0MPa/Heat Recycle
0
2
4
6
8
10
Temperature Difference (K)

FIG. 38

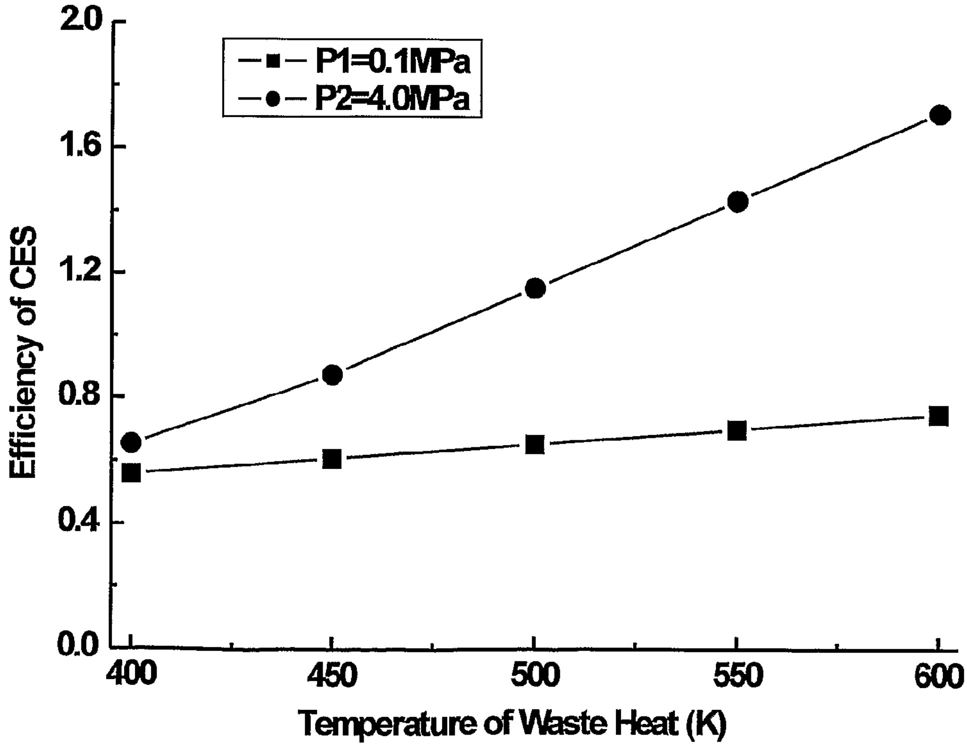
2.0
1.6
1.2
0.8
0.4
0.0
Efficiency of CES
P1=0.1MPa
P2=4.0MPa
400
450
500
550
600
Temperature of Waste Heat (K)

FIG. 39

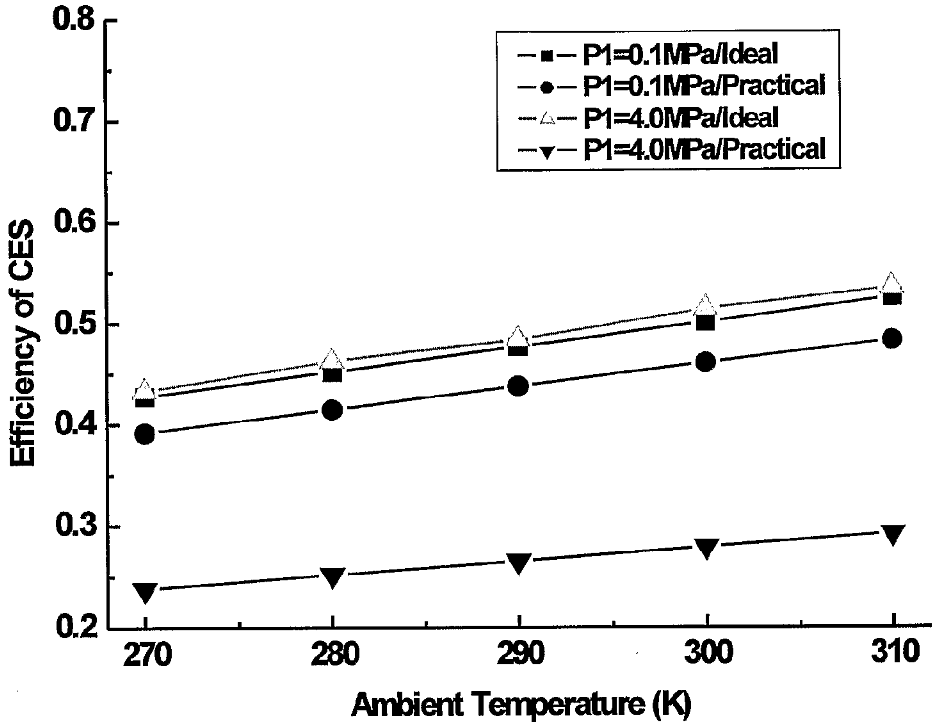
P1=0.1MPa/Ideal
P1=0.1MPa/Practical
P1=4.0MPa/Ideal
P1=4.0MPa/Practical
Efficiency of CES
0.8
0.7
0.6
0.5
0.4
0.3
0.2
270
280
290
300
310
Ambient Temperature (K)

FIG. 40

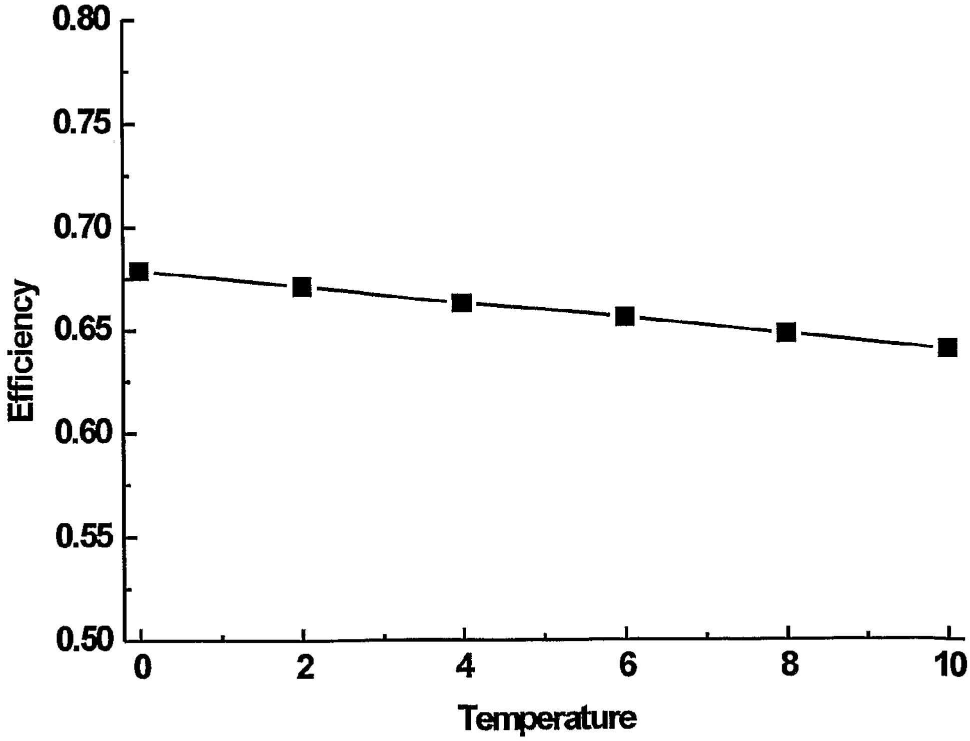
Efficiency
0.80
0.75
0.70
0.65
0.60
0.55
0.50
0
2
4
6
8
10
Temperature

*FIG. 41*

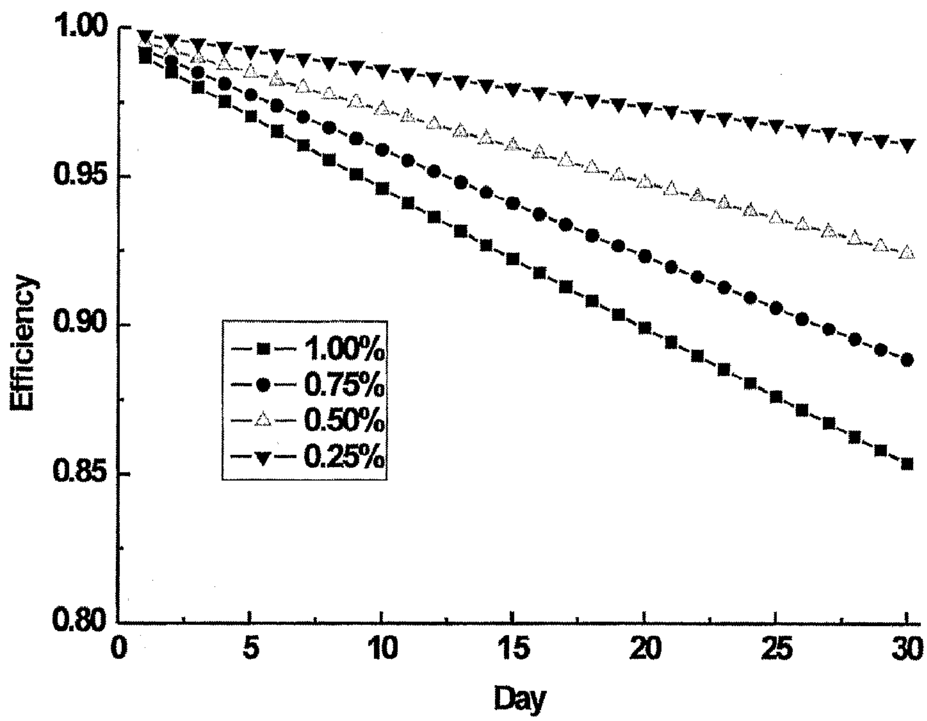
1.00
0.95
0.90
0.85
0.80
Efficiency
0
5
10
15
20
25
30
Day
1.00%
0.75%
0.50%
0.25%

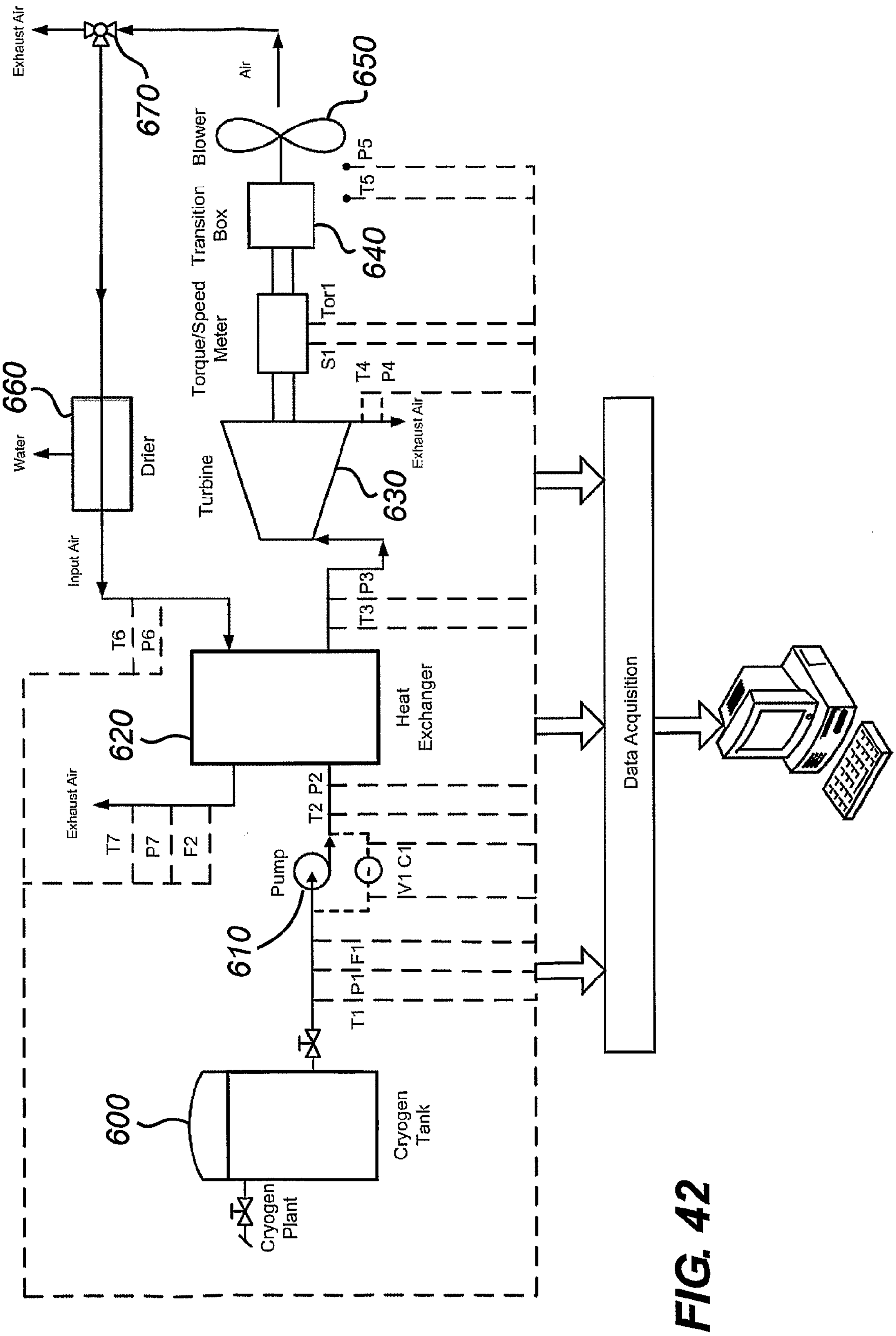
Exhaust Air
670
Air
650
Blower
P5
T5
Transition Box
640
Torque/Speed Meter
Tor1
S1
T4
P4
660
Water
Drier
Turbine
Exhaust Air
630
Input Air
P3
T3
T6
P6
620
Heat Exchanger
Exhaust Air
T2 P2
T7
P7
F2
Pump
V1 C1
610
F1
P1
T1
Data Acquisition
600
Cryogen Tank
Cryogen Plant

FIG. 42

FIG. 43

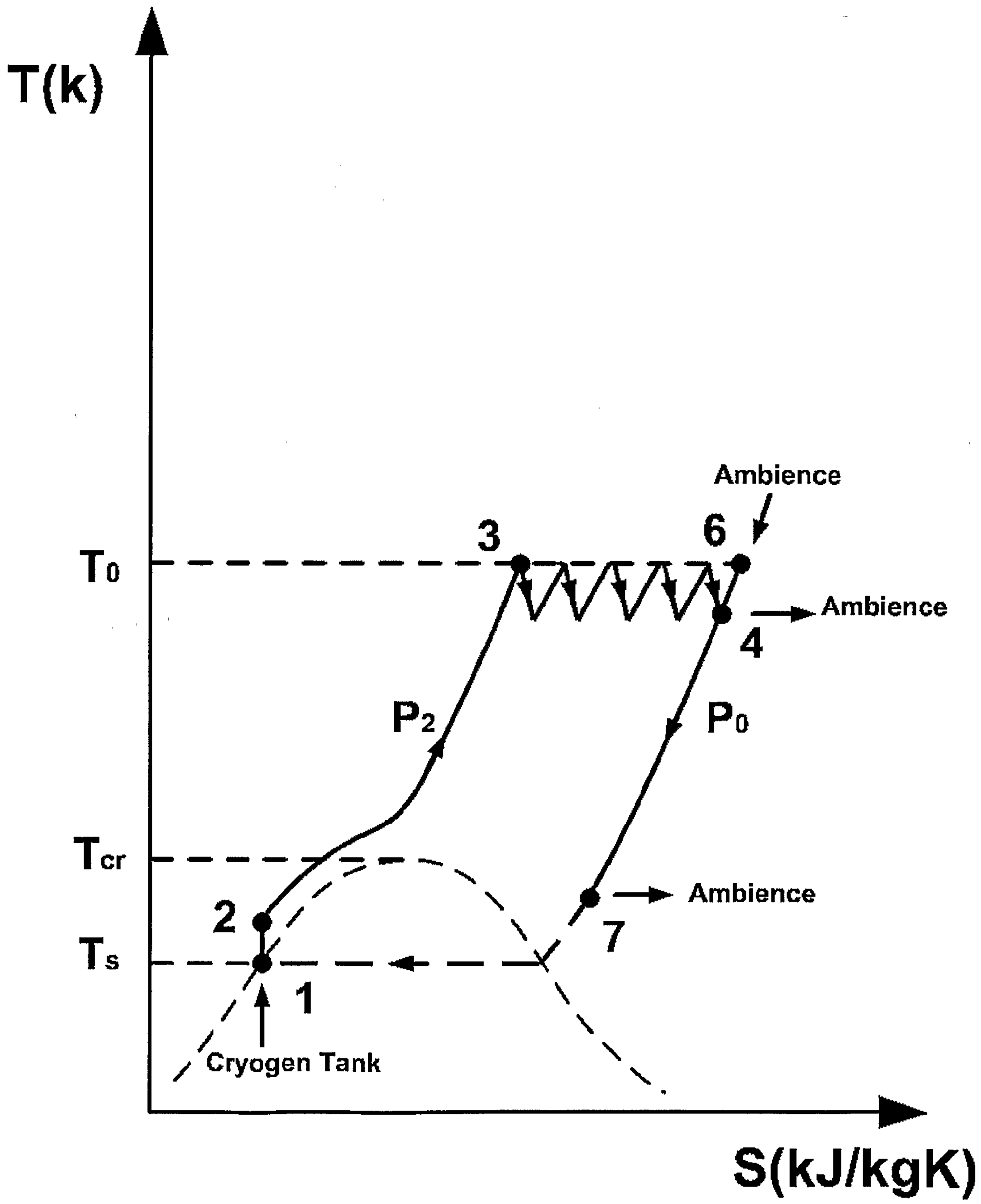
T(k)
T0
Tcr
Ts
S(kJ/kgK)
3
6
Ambience
Ambience
4
P2
P0
2
1
7
Ambience
Cryogen Tank

## FIG. 44

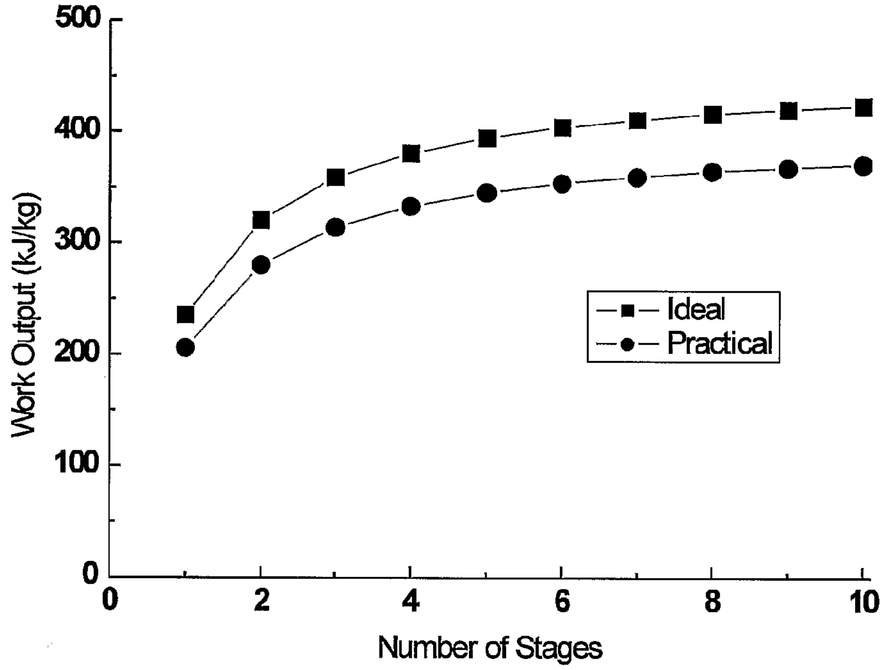
500
400
300
200
100
0
Work Output (kJ/kg)
0
2
4
6
8
10
Number of Stages
Ideal
Practical

## FIG. 45

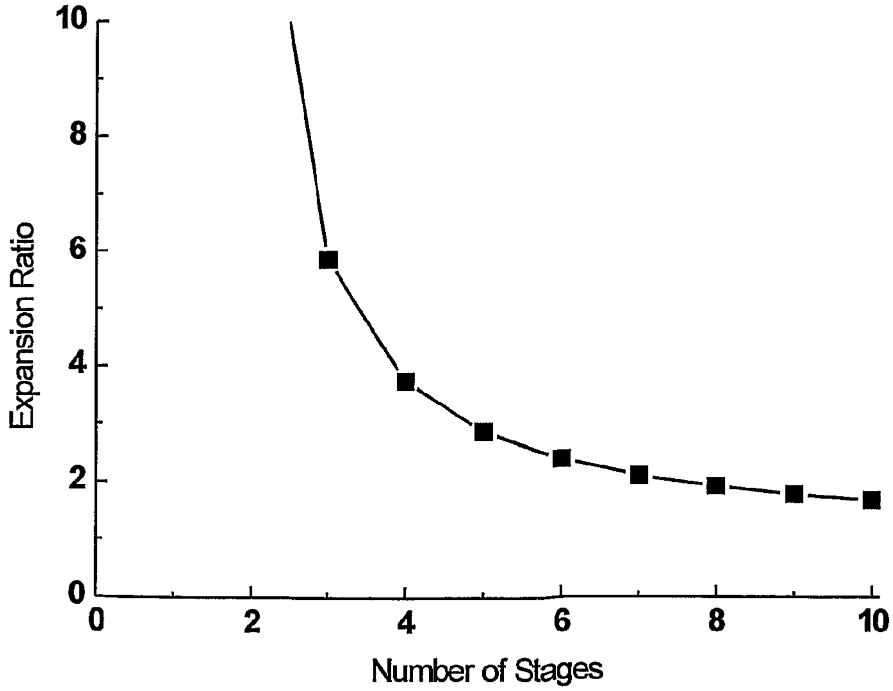
10
8
6
4
2
0
Expansion Ratio
0
2
4
6
8
10
Number of Stages

FIG. 46

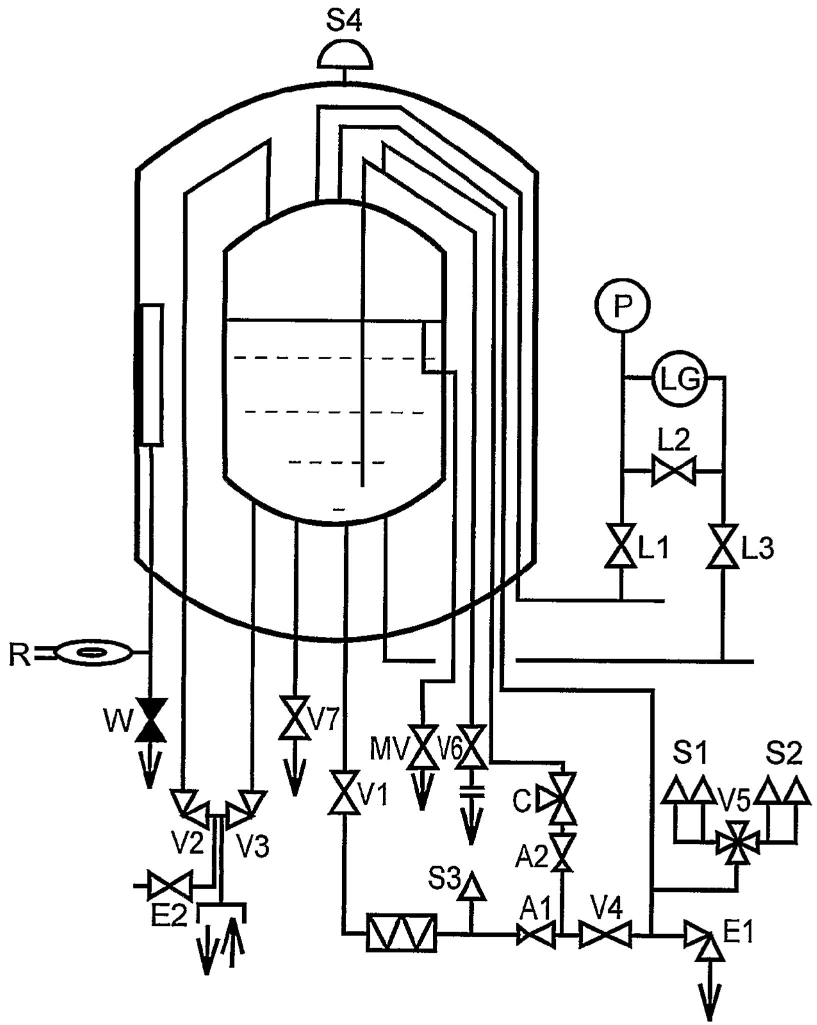


| | | | |
|---|---|---|---|
| A1 A2 | Adjusting Valve | S1 S2 | Inner Vessel Safety Device |
| E1 | Vent Valve | S3 | Piping Safety Valve |
| E2 | Residual Liquid Discharge Valve | S4 | Outer Vessel Safety Device |
| L1 | Upper Valve for Level Indicator | V1 | Pressure building -up Valve |
| L2 | Balance Valve | V2 | Outer Vessel Safety Device |
| L3 | Lower Valve for Level Indicator | V3 | Liquid Inlet/Outlet Valve |
| LG | Liquid Level Indicator | V4 | Gas Passing Valve |
| MV | Failing Indication Valve | V5 | Toe Valve |
| P | Pressure Gauge | V6 | Liquid Discharge Valve |
| R | Vacuum Tube | V7 | Liquid Discharge Valve |
| W | Vacuum Valve | C | Check Valve |

FIG. 47

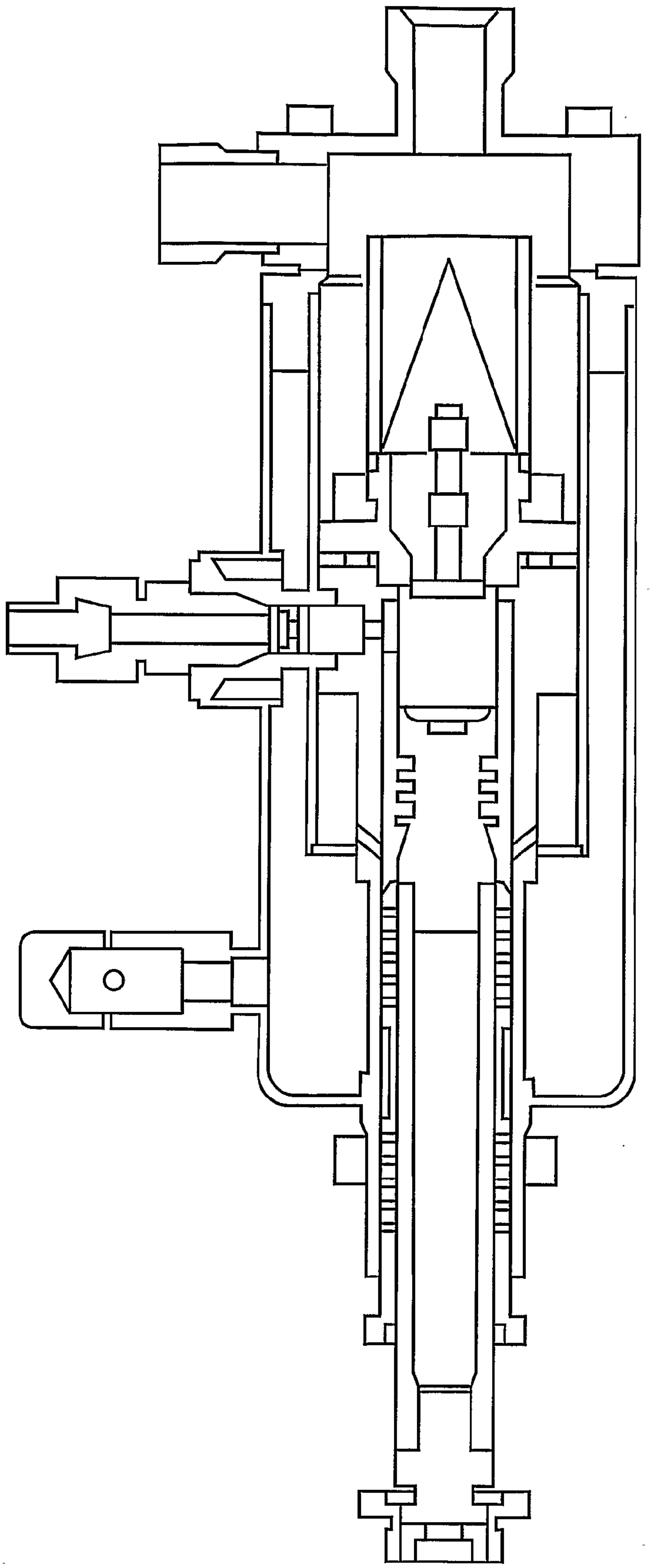

# FIG. 48

FLOW SCHEMATIC

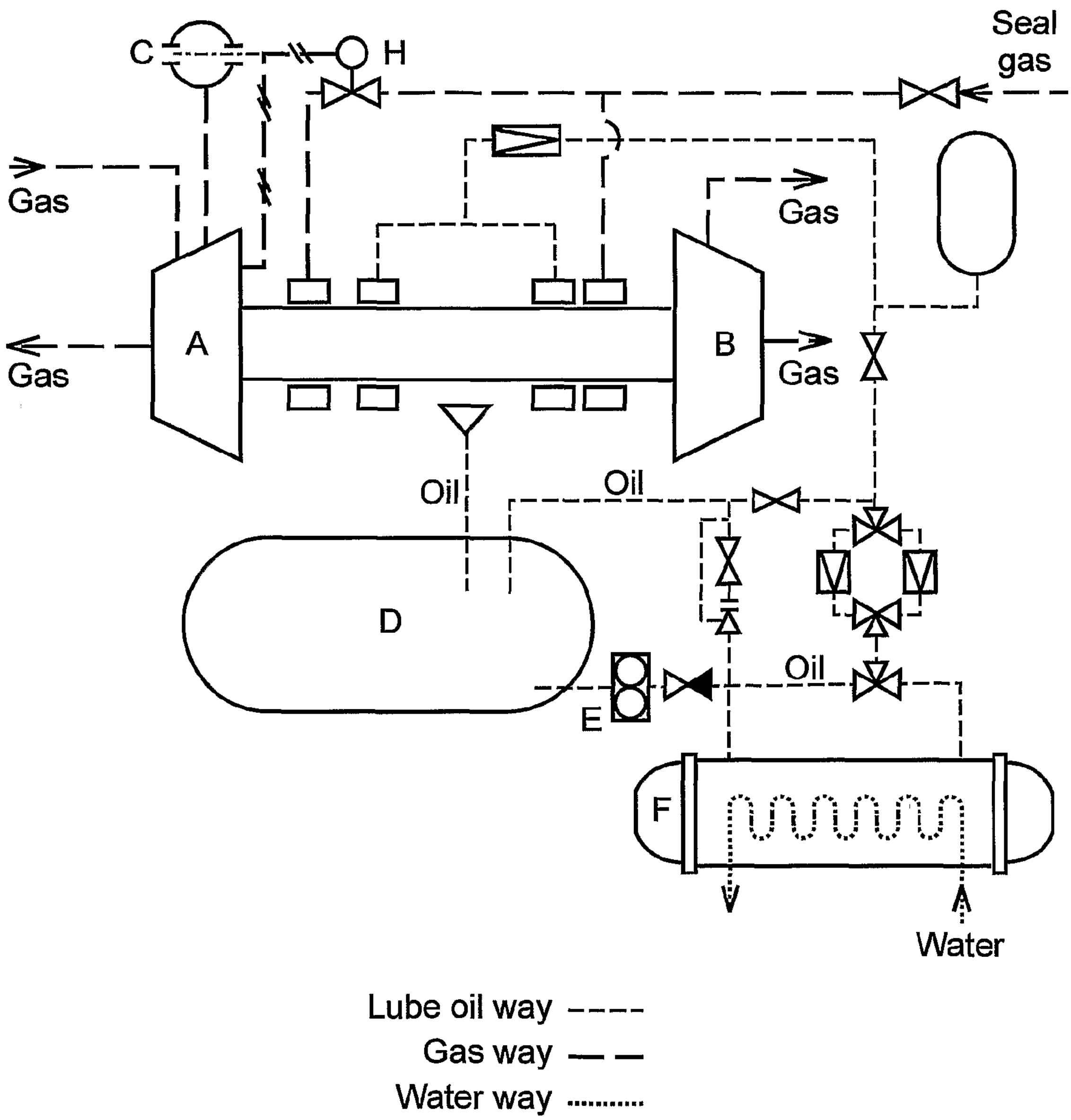


A: Expander B: Compressor C: Flow-adjusting valve & its actuator
D: Oil vessel E: Oil pump F: Oil cooler G: Pressurised oil reservoir
H: Presseure-difference adjusting valve

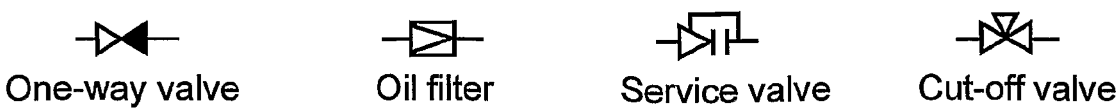

# FIG. 49

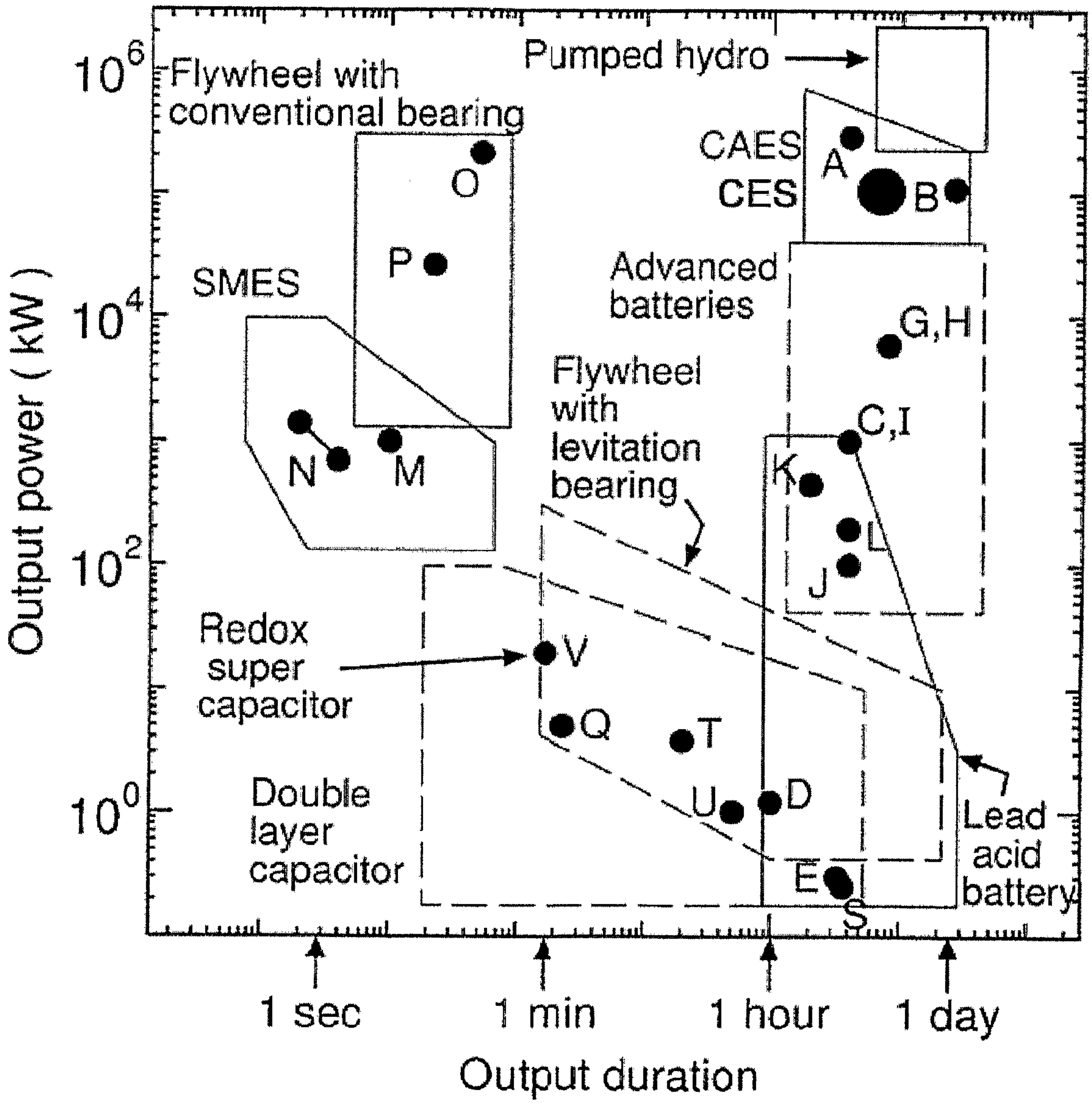
Output power ( kW )
$10^6$
$10^4$
$10^2$
$10^0$
Flywheel with conventional bearing
Pumped hydro
CAES
CES
A
B
O
P
SMES
Advanced batteries
G,H
C,I
Flywheel with levitation bearing
K
L
J
N
M
Redox super capacitor
V
Q
T
U
D
Double layer capacitor
E
S
Lead acid battery
1 sec
1 min
1 hour
1 day
Output duration

FIG. 50

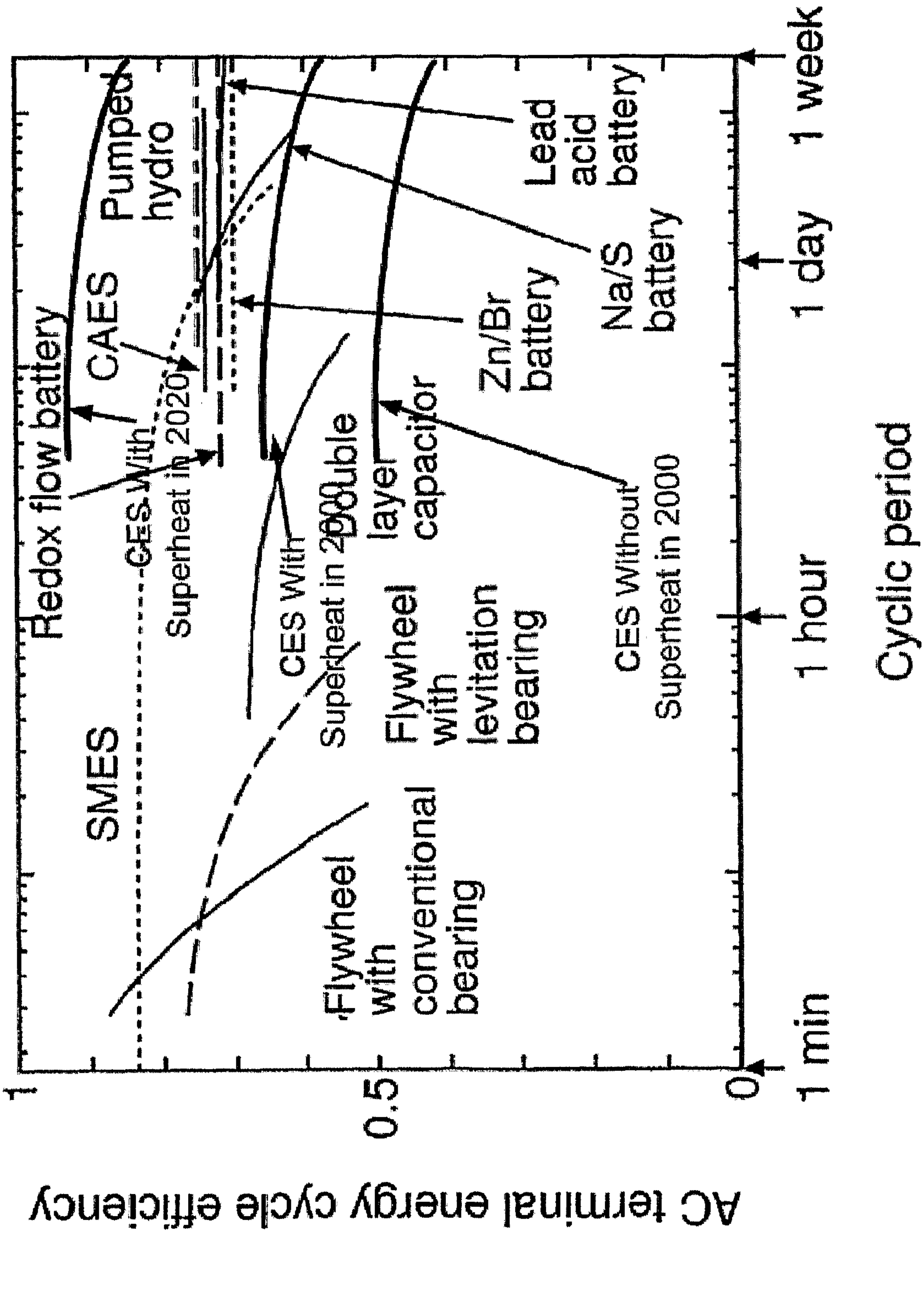
AC terminal energy cycle efficiency
1
0.5
0
1 min
1 hour
1 day
1 week
Cyclic period
SMES
Redox flow battery
CAES
Pumped hydro
CES With Superheat in 2020
CES With Superheat in 2000
CES Without Superheat in 2000
Double layer capacitor
Flywheel with conventional bearing
Flywheel with levitation bearing
Zn/Br battery
Na/S battery
Lead acid battery

FIG. 51

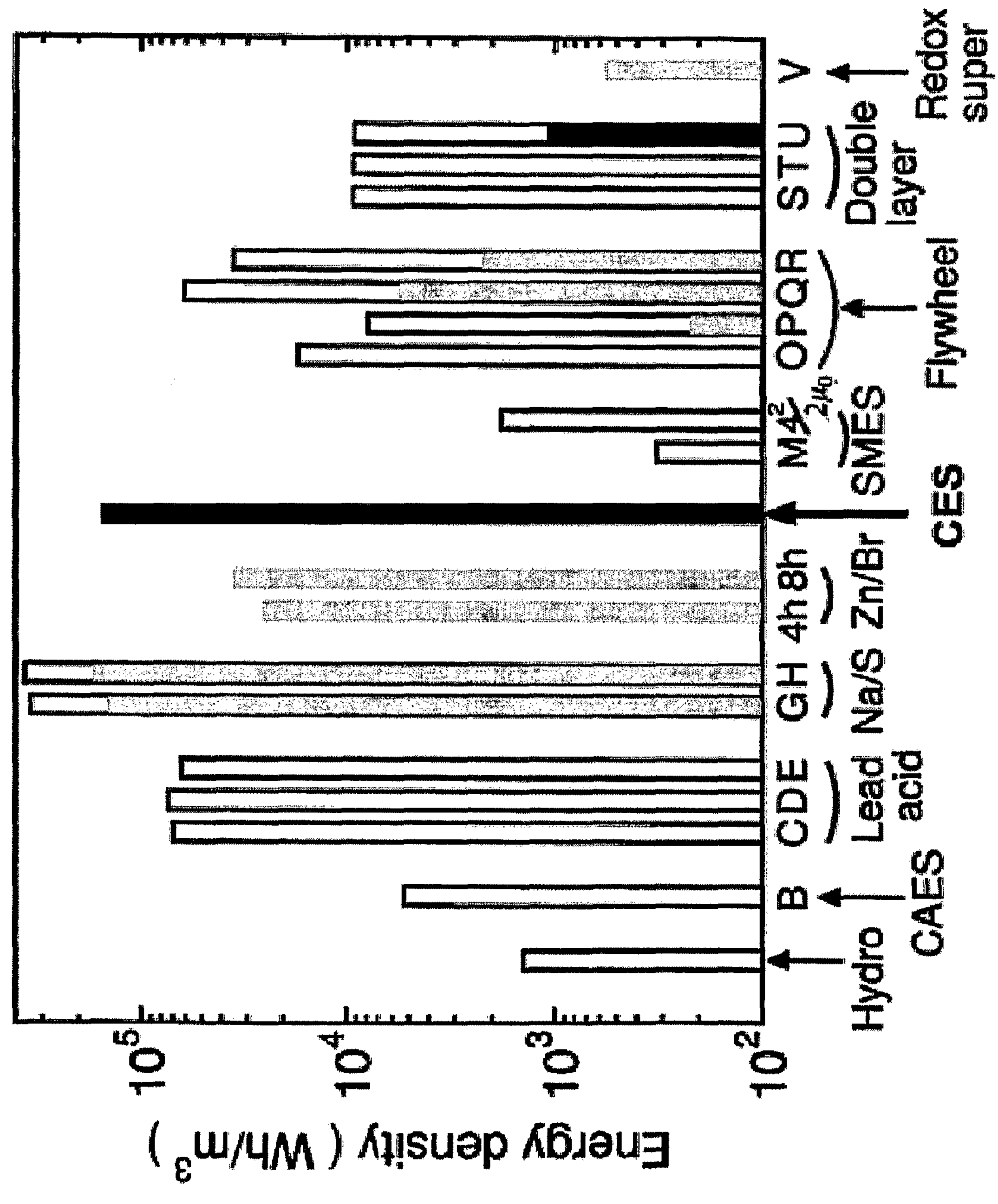
Energy density ( Wh/m^3 )
10^2
10^3
10^4
10^5
B
CDE
GH
4h 8h
OPQR
STU
V
Hydro
CAES
Lead acid
Na/S
Zn/Br
CES
SMES
Flywheel
Double layer
Redox super

*FIG. 52*

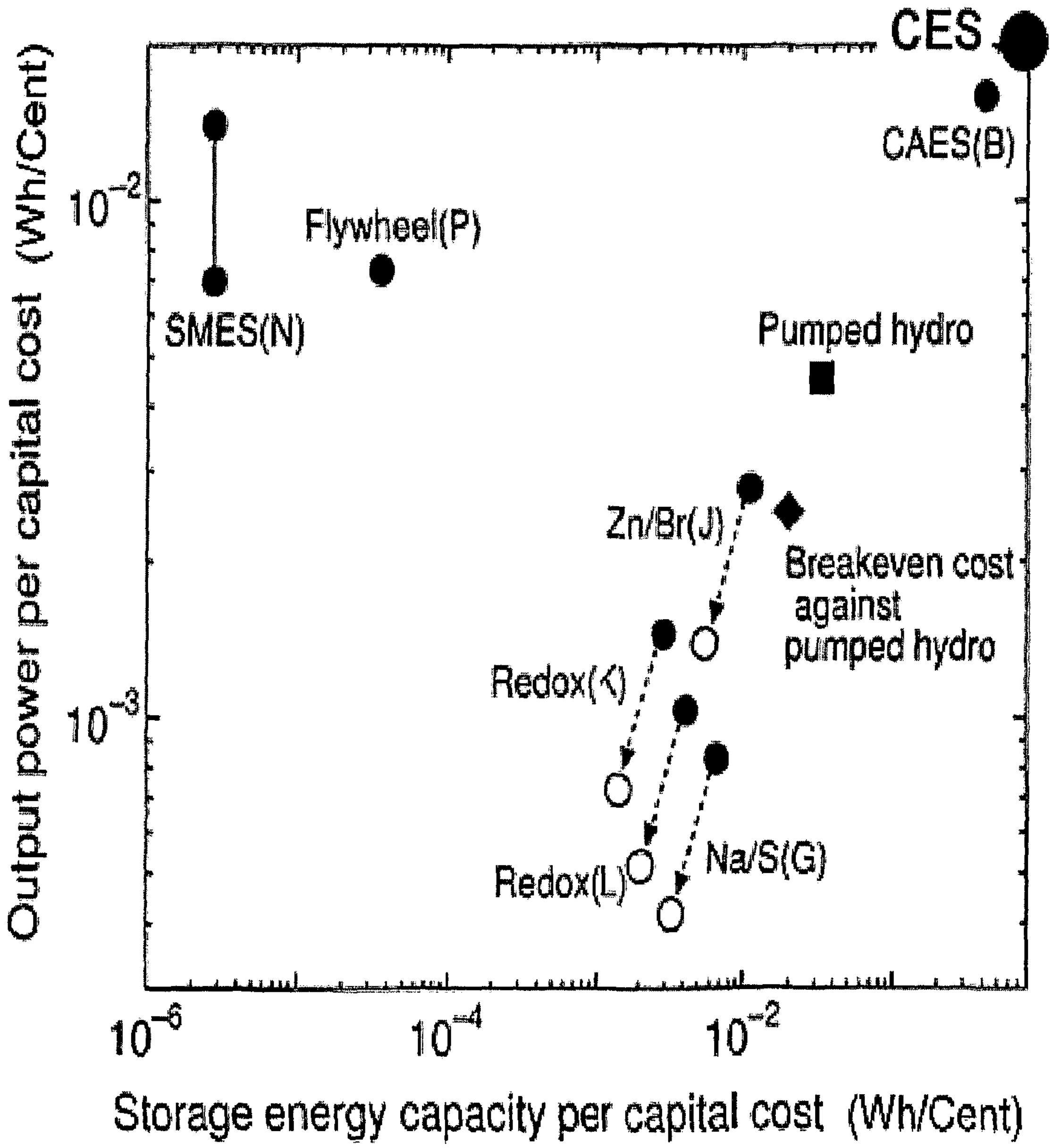
CES
CAES(B)
Flywheel(P)
SMES(N)
Pumped hydro
Zn/Br(J)
Breakeven cost against pumped hydro
Redox(K)
Redox(L)
Na/S(G)
$10^{-2}$
$10^{-3}$
$10^{-6}$
$10^{-4}$
$10^{-2}$
Output power per capital cost (Wh/Cent)
Storage energy capacity per capital cost (Wh/Cent)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4455834 A
- US 3830326 A
- FR 2489411


### Non-patent literature cited in the description


- **CASTLE W.F.** Air separation and liquefaction: recent developments and prospects for the beginning of the new millennium. *International Journal of Refrigeration,* 2002, vol. 25, 158-172
- **CORNELISSEN R.L. ; HIRS G.G.** Energy analysis of cryogenic air separation. *Energy Conservation and Management,* 1998, vol. 39, 1821-1826
- **J. KONDOH et al.** Electrical energy storage systems for energy networks. *Energy Conversion & Management,* 2000, vol. 41, 1863-1874
- **P. DENHOLM et al.** Life cycle energy requirements and greenhouse gas emissions from large scale energy storage systems. *Energy Conversion and Management,* 2004, vol. 45, 2153-2172
- **F.R. MCLARNON et al.** Energy storage. *Annual Review of Energy,* 1989, vol. 14, 241-271